(19) Europäisches Patentamt / European Patent Office / Office européen des brevets

(11) **EP 4 156 538 B1**

(12) **EUROPEAN PATENT SPECIFICATION**

(45) Date of publication and mention of the grant of the patent:
**21.01.2026 Bulletin 2026/04**

(21) Application number: **21822902.9**

(22) Date of filing: **10.06.2021**

(51) International Patent Classification (IPC):
*H04B 7/0456* (2017.01)    *H04L 1/00* (2006.01)
*G06N 3/045* (2023.01)    *H04B 17/309* (2015.01)
*G06N 3/092* (2023.01)    *G06N 3/084* (2023.01)

(52) Cooperative Patent Classification (CPC):
**H04L 1/0026; G06N 3/045; G06N 3/092;**
**H04B 17/309; H04L 1/0003; H04L 1/0009;**
G06N 3/0442; G06N 3/0464; G06N 3/084;
H04B 7/0456

(86) International application number:
**PCT/CN2021/099515**

(87) International publication number:
**WO 2021/249515 (16.12.2021 Gazette 2021/50)**

(54) **CHANNEL INFORMATION FEEDBACK METHOD, COMMUNICATION APPARATUS AND STORAGE MEDIUM**

KANALINFORMATIONSFEEDBACKVERFAHREN, KOMMUNIKATIONSVORRICHTUNG UND SPEICHERMEDIUM

PROCÉDÉ DE RÉTROACTION D'INFORMATIONS DE CANAL, APPAREIL DE COMMUNICATION ET SUPPORT DE STOCKAGE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **12.06.2020   CN 202010537810**
**10.02.2021   CN 202110181656**

(43) Date of publication of application:
**29.03.2023 Bulletin 2023/13**

(73) Proprietor: **Huawei Technologies Co., Ltd.**
**Longgang District,**
**Shenzhen,**
**Guangdong 518129 (CN)**

(72) Inventors:
• **HU, Bin**
  **Shenzhen, Guangdong 518129 (CN)**
• **ZHANG, Gongzheng**
  **Shenzhen, Guangdong 518129 (CN)**
• **XU, Chen**
  **Shenzhen, Guangdong 518129 (CN)**
• **WANG, Jian**
  **Shenzhen, Guangdong 518129 (CN)**
• **GUO, Kaiyang**
  **Shenzhen, Guangdong 518129 (CN)**
• **LI, Rong**
  **Shenzhen, Guangdong 518129 (CN)**

(74) Representative: **Maiwald GmbH**
**Engineering**
**Elisenhof**
**Elisenstrasse 3**
**80335 München (DE)**

(56) References cited:
WO-A1-2020/062022    CN-A- 108 462 517
US-A1- 2018 205 428    US-A1- 2018 367 192
US-A1- 2020 106 536

• WANG XINWEI ET AL: "Intelligent User-Centric Network Selection: A Model-Driven Reinforcement Learning Framework", IEEE ACCESS, vol. 7, 27 February 2019 (2019-02-27), pages 21645 - 21661, XP011712272, DOI: 10.1109/ ACCESS.2019.2898205

- **WANG YUE: "Research on Adaptive Modulation and Coding Based on 5G", CHINA MASTER'S THESES FULL-TEXT DATABASE, 22 June 2020 (2020-06-22), pages 1 - 84, XP055877745, DOI: 10.27675/d.cnki.gcydx.2020.000328**

## Description

### TECHNICAL FIELD

Embodiments of this application relate to the communications field, and in particular, to a channel information feedback method, a communications apparatus, and a storage medium.

### BACKGROUND

Massive multiple-input multiple-output (Massive Multiple-Input Multiple-Output, Massive MIMO) is a key technology to improve a system capacity and spectrum utilization in new radio (New Radio, NR) of the fifth-generation (fifth-generation, 5G) mobile communication technology. In a communications system based on massive MIMO, a base station may use a beamforming manner to enhance a signal that needs to be sent to user equipment (User Equipment, UE), to improve signal quality. For example, the base station may obtain channel information of a downlink channel, and determine an optimal beam and a corresponding modulation and coding scheme (Modulation and Coding Scheme, MCS) based on the channel information of the downlink channel.

However, in a frequency division duplex (Frequency-Division Duplex, FDD) communications system, an uplink channel and a downlink channel occupy different frequency bands, most uplink channels and downlink channels are almost independent, and channel reciprocity is not satisfied. Therefore, channel information of a downlink channel can only be fed back to a base station by using UE. For example, in the FDD communications system, the base station and the UE may separately store a same codebook. The UE may quantize a channel matrix of the downlink channel obtained through measurement estimation into a codeword in the codebook for representation, and feed back a codebook index corresponding to the codeword to the base station. The base station may determine the corresponding codeword from the stored codebook based on the received codebook index, thereby obtaining the channel information of the downlink channel.

However, in the foregoing channel information feedback manner based on the codebook, when the UE quantizes the channel matrix of the downlink channel obtained through measurement estimation into the codeword in the codebook for representation, there is inevitably a quantization error, and the determined codeword cannot exactly match the downlink channel.

US 2018/367192 A1 discloses methods, systems, and apparatus for training and deploying machine-learned communication over multi-input-multi-output (MIMO) channels.

### SUMMARY

The invention is defined by the appended independent claims and further details are provided by the appended dependent claims.

Embodiments of this application provide a channel information feedback method, a communications apparatus, and a storage medium, to reduce a quantization error when a terminal quantizes a channel matrix, and effectively improve accuracy of channel information feedback. According to a first aspect, an embodiment of this application provides a channel information feedback method. The method includes: A terminal receives, by using a downlink channel, a channel state information-reference signal sent by a network device. The terminal performs measurement estimation to obtain a channel matrix of the downlink channel based on the channel state information-reference signal. The terminal determines, by using a first neural network and based on the channel matrix of the downlink channel, channel negotiation information corresponding to the downlink channel. The terminal sends the channel negotiation information corresponding to the downlink channel to the network device, where the channel negotiation information corresponding to the downlink channel is used by the network device to determine a modulation and coding scheme corresponding to the downlink channel.

A parameter of the first neural network is related to a historical modulation and coding scheme.

In the channel information feedback method, the terminal determines, by using the first neural network, the channel negotiation information (Channel Negotiation Information, CNI) corresponding to the downlink channel, so that a quantization error when the terminal quantizes the channel matrix may be reduced, and accuracy of channel information feedback may be effectively improved. In addition, because the parameter of the first neural network is related to the historical MCS, information entropy of the CNI corresponding to the downlink channel determined by the terminal by using the first neural network is relatively small, so that a quantity of feedback bits may be reduced, thereby improving efficiency of channel information feedback.

In a possible design, that the parameter of the first neural network is related to the historical modulation and coding scheme may include: The parameter of the first neural network is a parameter updated by the terminal based on historical decision revenue, and the historical decision revenue is obtained by the network device based on the historical modulation and coding scheme.

In a claimed embodiment, the modulation and coding scheme corresponding to the downlink channel is determined by the network device by using a second neural network and based on the channel negotiation information corresponding to the downlink channel. A parameter of the second neural network is related to the historical modulation and coding scheme.

That the parameter of the second neural network is related to the historical modulation and coding scheme includes The parameter of the second neural network is a parameter updated by the network device based on historical decision revenue, and the historical decision revenue is obtained by the network device based on the historical modulation and coding scheme.

The network device determines, by using the second neural network and based on the CNI corresponding to the downlink channel, the MCS corresponding to the downlink channel, so that a possible deviation between the CNI and the MCS in probability distribution is smaller. In addition, the parameter of the second neural network is related to the historical MCS, so that the historical MCS can play a guiding role in determining the MCS of the downlink channel by using the second neural network and based on the CNI, thereby further reducing the possible deviation between the CNI and the MCS in probability distribution.

In a possible design, the method further includes: The terminal receives decision revenue sent by the network device, where the decision revenue is obtained by the network device based on the modulation and coding scheme corresponding to the downlink channel. The terminal updates the parameter of the first neural network based on the decision revenue.

For example, the terminal may update the parameter of the first neural network based on the decision revenue and a first objective function. The first objective function is related to the decision revenue.

The terminal updates the parameter of the first neural network based on the decision revenue, so that a mapping relationship between the channel matrix and the CNI may be dynamically updated, and information entropy of CNI corresponding to a downlink channel determined by the terminal by using the first neural network next time may be relatively small.

In another possible design, the method further includes: The terminal receives an error that is of a parameter of a first hidden layer of the second neural network and that is sent by the network device. The error of the parameter of the first hidden layer of the second neural network is an error before and after the network device updates the parameter of the second neural network based on the decision revenue, and the decision revenue is obtained by the network device based on the modulation and coding scheme corresponding to the downlink channel. The terminal updates the parameter of the first neural network based on the error of the parameter of the first hidden layer of the second neural network.

For example, the terminal may update the parameter of the first neural network based on a backpropagation algorithm and the error of the parameter of the first hidden layer of the second neural network. The error of the parameter of the first hidden layer of the second neural network may be an error before and after the network device updates the parameter of the second neural network based on the decision revenue and a second objective function, and the second objective function is related to the decision revenue.

Compared with a manner in which the terminal updates the parameter of the first neural network based on the decision revenue, a manner in which the terminal updates the parameter of the first neural network based on the error of the parameter of the first hidden layer of the second neural network is simpler.

Optionally, the decision revenue is any one of a decision bit rate or a throughput when the network device performs scheduling based on the modulation and coding scheme corresponding to the downlink channel, or a combination of any one of a decision bit rate or a throughput when the network device performs scheduling based on the modulation and coding scheme corresponding to the downlink channel and an evaluation value provided by the network device on the channel negotiation information corresponding to the downlink channel. The evaluation value provided by the network device on the channel negotiation information corresponding to the downlink channel is used to indicate a magnitude of a guiding role of the channel negotiation information corresponding to the downlink channel in determining the modulation and coding scheme corresponding to the downlink channel by the network device.

In a possible design, before the terminal updates the parameter of the first neural network, the method further includes: The terminal obtains a restored channel matrix based on the channel negotiation information corresponding to the downlink channel. The terminal updates the parameter of the first neural network based on the channel matrix of the downlink channel obtained through measurement estimation, the restored channel matrix, and a third objective function. The third objective function is used to indicate to minimize an error between the channel matrix of the downlink channel obtained through measurement estimation and the restored channel matrix.

For example, the error may be a minimum mean square error.

According to a second aspect, an embodiment of this application further provides a channel information feedback method. The method includes: A network device sends a channel state information-reference signal to a terminal by using a downlink channel. The network device receives channel negotiation information that corresponds to the downlink channel and that is sent by the terminal based on the channel state information-reference signal. The channel negotiation information corresponding to the downlink channel is determined by the terminal by using a first neural network and based on a channel matrix of the downlink channel after the terminal performs measurement estimation to obtain the channel matrix of the downlink channel based on the channel state information-reference signal. A parameter of the first neural network is related to a historical modulation and coding scheme. The network device determines, based on the channel negotiation information corresponding to the downlink channel, a modulation and coding scheme corresponding to the downlink channel.

In a possible design, that the parameter of the first neural network is related to the historical modulation and coding scheme may include: The parameter of the first neural network is a parameter updated by the terminal based on historical decision revenue, and the historical decision revenue is obtained by the network device based on the historical modulation and coding scheme.

In a possible design, that the network device determines, based on the channel negotiation information corresponding to the downlink channel, a modulation and coding scheme corresponding to the downlink channel includes: The network device determines, by using a second neural network and based on the channel negotiation information corresponding to the downlink channel, the modulation and coding scheme corresponding to the downlink channel. A parameter of the second neural network is related to the historical modulation and coding scheme.

Optionally, that the parameter of the second neural network is related to the historical modulation and coding scheme may include: The parameter of the second neural network is a parameter updated by the network device based on historical decision revenue, and the historical decision revenue is obtained by the network device based on the historical modulation and coding scheme.

The parameter of the second neural network is related to the historical MCS, so that the historical MCS determined by the network device can play a guiding role in determining the MCS of the downlink channel by using the second neural network and based on the CNI, thereby reducing a possible deviation between the CNI and the MCS in probability distribution.

In a possible design, the method further includes: The network device obtains, based on the modulation and coding scheme corresponding to the downlink channel, decision revenue corresponding to the modulation and coding scheme. The network device sends the decision revenue to the terminal, where the decision revenue is used by the terminal to update the parameter of the first neural network.

In a possible design, the method further includes: The network device obtains, based on the modulation and coding scheme corresponding to the downlink channel, decision revenue corresponding to the modulation and coding scheme. The network device updates the parameter of the second neural network based on the decision revenue.

For example, the network device may update the parameter of the second neural network based on the decision revenue and a second objective function. The second objective function is related to the decision revenue.

In another possible design, the method further includes: The network device obtains an error of a parameter of a first hidden layer of the second neural network before and after the parameter of the second neural network is updated. The network device sends the error of the parameter of the first hidden layer of the second neural network to the terminal. The error of the parameter of the first hidden layer of the second neural network is used by the terminal to update the parameter of the first neural network.

Optionally, the decision revenue is any one of a decision bit rate or a throughput when the network device performs scheduling based on the modulation and coding scheme corresponding to the downlink channel, or a combination of any one of a decision bit rate or a throughput when the network device performs scheduling based on the modulation and coding scheme corresponding to the downlink channel and an evaluation value provided by the network device on the channel negotiation information corresponding to the downlink channel. The evaluation value provided by the network device on the channel negotiation information corresponding to the downlink channel is used to indicate a magnitude of a guiding role of the channel negotiation information corresponding to the downlink channel in determining the modulation and coding scheme corresponding to the downlink channel by the network device.

According to a third non-claimed aspect, an embodiment of this application provides a path information feedback method, including: A first communications apparatus obtains a path parameter of a first path, where the first path is a path used by a second communications apparatus to transmit data to the first communications apparatus. The first communications apparatus uses the path parameter as an input parameter to determine first negotiation information of the first path by using a first network, where the first network is a neural network updated based on a task requirement. The first communications apparatus sends the first negotiation information to the second communications apparatus, where the first negotiation information is used by the second communications apparatus to obtain a transmission decision.

In the method provided in the third aspect, the first communications apparatus inputs the path parameter of the first path into the neural network updated based on a task requirement, to obtain the first negotiation information of the first path, and feeds back the first negotiation information to the second communications apparatus. The first negotiation information is obtained by effectively compressing the path parameter by using the neural network, thereby reducing feedback overheads compared with direct feedback of the complete path parameter. Further, the neural network is updated based on a task requirement, and the first negotiation information matching a task may be obtained based on an actual task requirement, thereby ensuring efficiency of the path parameter fed back to the second communications apparatus, and improving accuracy of the transmission decision.

In a possible implementation, the first communications apparatus receives, by using the first path, a reference signal sent by the second communications apparatus, and obtains the path parameter of the first path through measurement estimation based on the reference signal.

In a possible implementation, the first negotiation information is used by the second communications apparatus to obtain the transmission decision, and the transmission decision includes one or more of the following: a modulation and coding scheme MCS, a path selection, a path weight combination, uplink scheduling, and a grant free parameter set.

In a possible implementation, the input parameter of the first network further includes a transmission decision of a previous round. For a cooperative task of one or more entities, interaction of transmission decision information of the previous round may accelerate decision convergence.

In a possible implementation, that the first network is a neural network updated based on a task requirement specifically includes: The first network is updated based on decision revenue of the transmission decision, where the decision revenue is related to the task requirement.

In a possible implementation, the first communications apparatus obtains decision revenue indicated by the second communications apparatus, and updates the first network based on the decision revenue.

The first network is updated based on the decision revenue. When the decision revenue is determined based on a task requirement, compression of the path parameter of the first path by the first network may more efficiently match the actual task requirement, and signaling overheads of path information feedback may be further reduced.

In a possible implementation, the first path is a downlink channel between a network device and a terminal, and the path parameter of the first path is a channel matrix of the downlink channel.

It should be noted that the first communications apparatus mentioned in the third aspect and the various possible implementations of the third aspect may be a terminal, an entity A, an entity C, an entity D, an entity E, an entity F, or an entity H. The second communications apparatus may be a network device, an entity B, an entity D, an entity E, an entity F, or an entity G. The first network may be a first neural network, a third neural network, a fourth neural network, a fifth neural network, a seventh neural network, an eighth neural network, a thirteenth neural network, a fourteenth neural network, or a seventeenth neural network.

According to a fourth non-claimed aspect, an embodiment of this application provides a path information feedback method, including:

A second communications apparatus receives first negotiation information sent by a first communications apparatus, where the first negotiation information is obtained by the first communications apparatus by inputting a path parameter of a first path into a first network, and the first network is a neural network updated based on a task requirement. The second communications apparatus obtains a transmission decision based on the first negotiation information.

In the method provided in the fourth aspect, the first negotiation information used by the second communications apparatus to obtain the transmission decision is obtained through effective compression by using the first network, thereby reducing signaling overheads compared with direct interaction of the path parameter. Further, the first network used to obtain the first negotiation information is updated based on a task requirement, and the first negotiation information matching a task may be obtained based on an actual task, thereby improving accuracy of the transmission decision.

In a possible implementation, the second communications apparatus sends reference information to the first communications apparatus by using the first path, where the reference signal is used by the first communications apparatus to perform measurement estimation to obtain the path parameter of the first path.

In a possible implementation, that the second communications apparatus obtains a transmission decision based on the first negotiation information includes: The second communications apparatus obtains the transmission decision by using a second network and based on the first negotiation information. The second network is a neural network updated based on a task requirement. The transmission decision includes one or more of the following: a modulation and coding scheme MCS, a path selection, a path weight combination, uplink scheduling, and a grant free parameter set.

In a possible implementation, an input parameter of the second network includes the first negotiation information and a transmission decision of a previous round.

In a possible implementation, that the second network is a neural network updated based on a task requirement specifically includes: The second network is updated based on decision revenue of the transmission decision, where the decision revenue is related to the task requirement.

In a possible implementation, the decision revenue is obtained based on one or more of a bit rate, an evaluation value of the first negotiation information, a throughput, a delay, power consumption, a routing hop count, or a channel capacity.

In a possible implementation, the first path is a downlink channel between a network device and a terminal, the first negotiation information is negotiation information obtained by using the first network and based on a channel matrix of the downlink channel, and the transmission decision is a modulation and coding scheme MCS.

It should be noted that the first communications apparatus mentioned in the fourth aspect and the various possible implementations of the fourth aspect may be a terminal, an entity A, an entity C, an entity D, an entity E, an entity F, or an entity H. The second communications apparatus may be a network device, an entity B, an entity D, an entity E, an entity F, or an entity G. The first network may be a first neural network, a third neural network, a fourth neural network, a fifth neural network, a seventh neural network, an eighth neural network, a thirteenth neural network, a fourteenth neural network, or a seventeenth neural network. The second network may be a second neural network, a sixth neural network, an eleventh neural network, a twelfth neural network, a fifteenth neural network, a sixteenth neural network, or an eighteenth neural network.

According to a fifth aspect, an embodiment of this application provides a communications apparatus, including: a receiving unit, configured to receive, by using a downlink channel, a channel state information-reference signal sent by a network device; a measurement unit, configured to perform measurement estimation to obtain a channel matrix of the downlink channel based on the channel state information-reference signal; a determining unit, configured to determine, by using a first neural network and based on the channel matrix of the downlink channel, channel negotiation information corresponding to the downlink channel, where a parameter of the first neural network is related to a historical modulation and coding scheme; and a sending unit, configured to send the channel negotiation information corresponding to the downlink channel to the network device, where the channel negotiation information corresponding to the downlink channel is used by the network device to determine a modulation and coding scheme corresponding to the downlink channel.

That the parameter of the first neural network is related to the historical modulation and coding scheme includes: The parameter of the first neural network is a parameter updated by the determining unit based on historical decision revenue, and the historical decision revenue is obtained by the network device based on the historical modulation and coding scheme.

The modulation and coding scheme corresponding to the downlink channel is determined by the network device by using a second neural network and based on the channel negotiation information corresponding to the downlink channel. A parameter of the second neural network is related to the historical modulation and coding scheme.

That the parameter of the second neural network is related to the historical modulation and coding scheme includes: The parameter of the second neural network is a parameter updated by the network device based on historical decision revenue, and the historical decision revenue is obtained by the network device based on the historical modulation and coding scheme.

In a possible design, the receiving unit is further configured to receive decision revenue sent by the network device, where the decision revenue is obtained by the network device based on the modulation and coding scheme corresponding to the downlink channel. The determining unit is further configured to update the parameter of the first neural network based on the decision revenue.

Optionally, the determining unit is specifically configured to update the parameter of the first neural network based on the decision revenue and a first objective function. The first objective function is related to the decision revenue.

In another possible design, the receiving unit is further configured to receive an error that is of a parameter of a first hidden layer of the second neural network and that is sent by the network device. The error of the parameter of the first hidden layer of the second neural network is an error before and after the network device updates the parameter of the second neural network based on the decision revenue, and the decision revenue is obtained by the network device based on the modulation and coding scheme corresponding to the downlink channel. The determining unit is further configured to update the parameter of the first neural network based on the error of the parameter of the first hidden layer of the second neural network.

Optionally, the determining unit is specifically configured to update the parameter of the first neural network based on a backpropagation algorithm and the error of the parameter of the first hidden layer of the second neural network. The error of the parameter of the first hidden layer of the second neural network is an error before and after the network device updates the parameter of the second neural network based on the decision revenue and a second objective function, and the second objective function is related to the decision revenue.

Optionally, the decision revenue is any one of a decision bit rate or a throughput when the network device performs scheduling based on the modulation and coding scheme corresponding to the downlink channel, or a combination of any one of a decision bit rate or a throughput when the network device performs scheduling based on the modulation and coding scheme corresponding to the downlink channel and an evaluation value provided by the network device on the channel negotiation information corresponding to the downlink channel. The evaluation value provided by the network device on the channel negotiation information corresponding to the downlink channel is used to indicate a magnitude of a guiding role of the channel negotiation information corresponding to the downlink channel in determining the modulation and coding scheme corresponding to the downlink channel by the network device.

In a possible design, the determining unit is further configured to obtain a restored channel matrix based on the channel negotiation information corresponding to the downlink channel; and update the parameter of the first neural network based on the channel matrix of the downlink channel obtained through measurement estimation, the restored channel matrix, and a third objective function. The third objective function is used to indicate to minimize an error between the channel matrix of the downlink channel obtained through measurement estimation and the restored channel matrix.

The communications apparatus according to the fifth aspect may be applied to a terminal. According to a sixth aspect, an embodiment of this application further provides a communications apparatus, including a processor, configured to execute computer instructions stored in a memory. When the computer instructions are executed, the apparatus is enabled to perform the method according to any one of the first aspect, the possible designs of the first aspect, the third aspect, or the various possible implementations of the third aspect.

According to a seventh aspect, an embodiment of this application further provides a communications apparatus, including a processor and an interface circuit. The processor is configured to communicate with another apparatus by using the interface circuit, and perform the method according to any one of the first aspect, the possible designs of the first aspect, the third aspect, or the various possible implementations of the third aspect.

According to an eighth aspect, an embodiment of this application provides a communications apparatus, including a sending unit, configured to send a channel state information-reference signal to a terminal by using a downlink channel; a receiving unit, configured to receive channel negotiation information that corresponds to the downlink channel and that is sent by the terminal based on the channel state information-reference signal, where the channel negotiation information corresponding to the downlink channel is determined by the terminal by using a first neural network and based on a channel matrix of the downlink channel after the terminal performs measurement estimation to obtain the channel matrix of the downlink channel based on the channel state information-reference signal, and a parameter of the first neural network is related to a historical modulation and coding scheme; and a determining unit, configured to determine, based on the channel negotiation information corresponding to the downlink channel, a modulation and coding scheme corresponding to the downlink channel.

Optionally, that the parameter of the first neural network is related to the historical modulation and coding scheme includes: The parameter of the first neural network is a parameter updated by the terminal based on historical decision revenue, and the historical decision revenue is obtained by the determining unit based on the historical modulation and coding scheme.

In a possible design, the determining unit is specifically configured to determine, by using a second neural network and based on the channel negotiation information corresponding to the downlink channel, the modulation and coding scheme corresponding to the downlink channel. A parameter of the second neural network is related to the historical modulation and coding scheme.

Optionally, that the parameter of the second neural network is related to the historical modulation and coding scheme includes: The parameter of the second neural network is a parameter updated by the determining unit based on historical decision revenue, and the historical decision revenue is obtained by the determining unit based on the historical modulation and coding scheme.

In a possible design, the determining unit is further configured to obtain, based on the modulation and coding scheme corresponding to the downlink channel, decision revenue corresponding to the modulation and coding scheme. The sending unit is further configured to send the decision revenue to the terminal, where the decision revenue is used by the terminal to update the parameter of the first neural network.

In a possible design, the determining unit is further configured to obtain, based on the modulation and coding scheme corresponding to the downlink channel, decision revenue corresponding to the modulation and coding scheme; and update the parameter of the second neural network based on the decision revenue.

Optionally, the determining unit is specifically configured to update the parameter of the second neural network based on the decision revenue and a second objective function. The second objective function is related to the decision revenue.

In another possible design, the determining unit is further configured to obtain an error of a parameter of a first hidden layer of the second neural network before and after the parameter of the second neural network is updated. The sending unit is further configured to send the error of the parameter of the first hidden layer of the second neural network to the terminal. The error of the parameter of the first hidden layer of the second neural network is used by the terminal to update the parameter of the first neural network.

Optionally, the decision revenue is any one of a decision bit rate or a throughput when the communications apparatus performs scheduling based on the modulation and coding scheme corresponding to the downlink channel, or a combination of any one of a decision bit rate or a throughput when the communications apparatus performs scheduling based on the modulation and coding scheme corresponding to the downlink channel and an evaluation value provided by the communications apparatus on the channel negotiation information corresponding to the downlink channel. The evaluation value provided by the communications apparatus on the channel negotiation information corresponding to the downlink channel is used to indicate a magnitude of a guiding role of the channel negotiation information corresponding to the downlink channel in determining the modulation and coding scheme corresponding to the downlink channel by the communications apparatus.

The communications apparatus according to the eighth aspect may be applied to a network device.

According to a ninth aspect, an embodiment of this application further provides a communications apparatus, including a processor, configured to execute computer instructions stored in a memory. When the computer instructions are executed, the apparatus is enabled to perform the method according to any one of the second aspect, the possible designs of the second aspect, the fourth aspect, or the various possible implementations of the fourth aspect.

According to a tenth aspect, an embodiment of this application further provides a communications apparatus, including a processor and an interface circuit. The processor is configured to communicate with another apparatus by using the interface circuit, and perform the method according to any one of the second aspect, the possible designs of the second aspect, the fourth aspect, or the various possible implementations of the fourth aspect.

According to an eleventh aspect, an embodiment of this application further provides a communications apparatus, including a transceiver unit and a processing unit. The transceiver unit may be configured to send and receive information, or configured to communicate with another network element. The processing unit may be configured to process data. For example, the apparatus may implement the method according to the first aspect, the second aspect, the third aspect, or the fourth aspect by using the transceiver unit and the processing unit.

According to a twelfth aspect, an embodiment of this application further provides a computer-readable storage medium, including computer software instructions. When the computer software instructions are run on a processor, the method according to the first aspect is performed; or the method according to the second aspect is performed; or the method according to the third aspect is performed; or the method according to the fourth aspect is performed.

For example, when the computer software instructions are run on a terminal or a chip built in the terminal, the terminal may be enabled to perform the method according to the first aspect. Alternatively, when the computer software instructions are run on a network device or a chip built in the network device, the network device is enabled to perform the method according to the second aspect. Alternatively, when the computer software instructions are run on a network device or a chip built in the network device, the network device is enabled to perform the method according to the third aspect. Alternatively, when the computer software instructions are run on a network device or a chip built in the network device, the network device is enabled to perform the method according to the fourth aspect.

According to a thirteenth aspect, an embodiment of this application further provides a computer program product. When the computer program product is executed, the method according to any one of the first aspect or the possible designs of the first aspect may be implemented.

According to a fourteenth aspect, an embodiment of this application further provides a computer program product. When the computer program product is executed, the method according to any one of the second aspect or the possible designs of the second aspect may be implemented.

According to a fourteenth aspect, an embodiment of this application further provides a computer program product. When the computer program product is executed, the method according to any one of the third aspect or the possible designs of the third aspect may be implemented.

According to a fifteenth aspect, an embodiment of this application further provides a computer program product. When the computer program product is executed, the method according to any one of the fourth aspect or the possible designs of the fourth aspect may be implemented.

According to a sixteenth aspect, an embodiment of this application further provides a chip system. The chip system is applied to a terminal, and the chip system includes one or more interface circuits and one or more processors. The interface circuit and the processor are interconnected by using a line. The processor receives, by using the interface circuit, computer instructions from a memory of an electronic device and executes the computer instructions, to implement the method according to any one of the first aspect or the possible designs of the first aspect, or implement the method according to any one of the third aspect or the possible implementations of the third aspect.

According to a seventeenth aspect, an embodiment of this application further provides a chip system. The chip system is applied to a network device, and the chip system includes one or more interface circuits and one or more processors. The interface circuit and the processor are interconnected by using a line. The processor receives, by using the interface circuit, computer instructions from a memory of an electronic device and executes the computer instructions, to implement the method according to any one of the second aspect or the possible designs of the second aspect, or implement the method according to any one of the fourth aspect or the possible implementations of the fourth aspect.

It may be understood that, for beneficial effects that can be achieved in the fifth aspect to the seventeenth aspect, refer to the beneficial effects in any one of the first aspect or the possible design manners of the first aspect, the beneficial effects in any one of the second aspect or the possible design manners of the second aspect, the beneficial effects in any one of the third aspect or the possible design manners of the third aspect, or the beneficial effects in any one of the fourth aspect or the possible design manners of the fourth aspect. Details are not described herein.

## BRIEF DESCRIPTION OF DRAWINGS

FIG. 1 shows a schematic diagram of a composition of a communications system based on a massive multiple-input multiple-output technology;
FIG. 2 shows a schematic diagram of channel information quantization;

FIG. 3 shows a schematic diagram of a composition of a communications system according to an embodiment of this application;

FIG. 4 shows a schematic diagram of a composition of a terminal according to an embodiment of this application;

FIG. 5 shows a schematic interaction diagram of a channel information feedback method according to an embodiment of this application;

FIG. 6 shows another schematic interaction diagram of a channel information feedback method according to an embodiment of this application;

FIG. 7 shows still another schematic interaction diagram of a channel information feedback method according to an embodiment of this application;

FIG. 8 shows still another schematic interaction diagram of a channel information feedback method according to an embodiment of this application;

FIG. 9a shows a schematic diagram of an application scenario of a path information feedback method according to a non-claimed embodiment of this application;

FIG. 9b-1 and FIG. 9b-2 show still another schematic interaction diagram of a path information feedback method according to a non-claimed embodiment of this application;

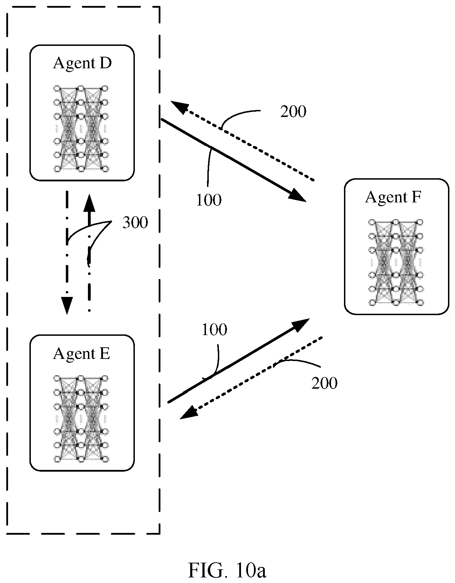

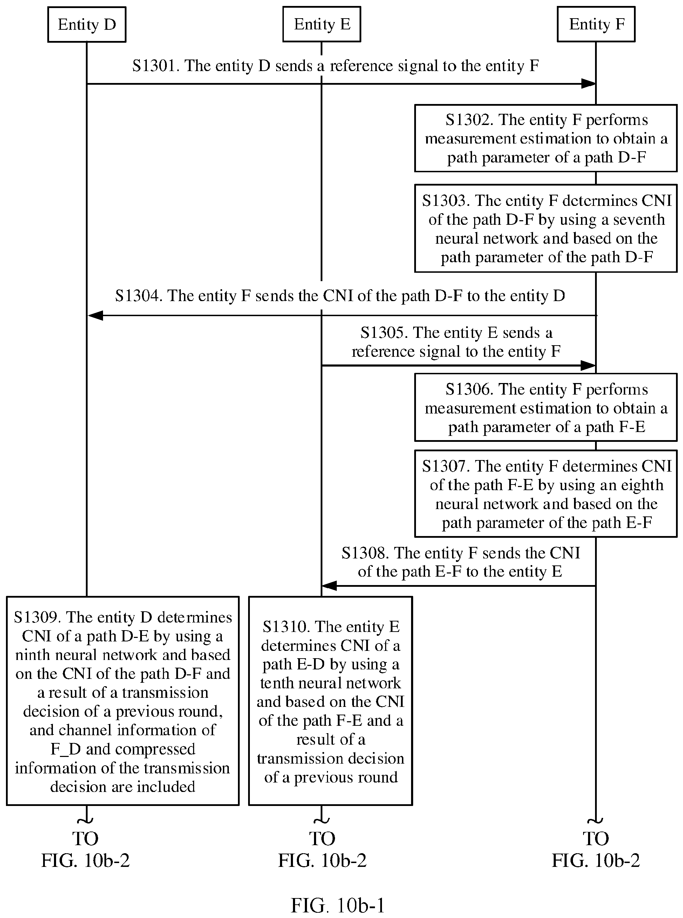

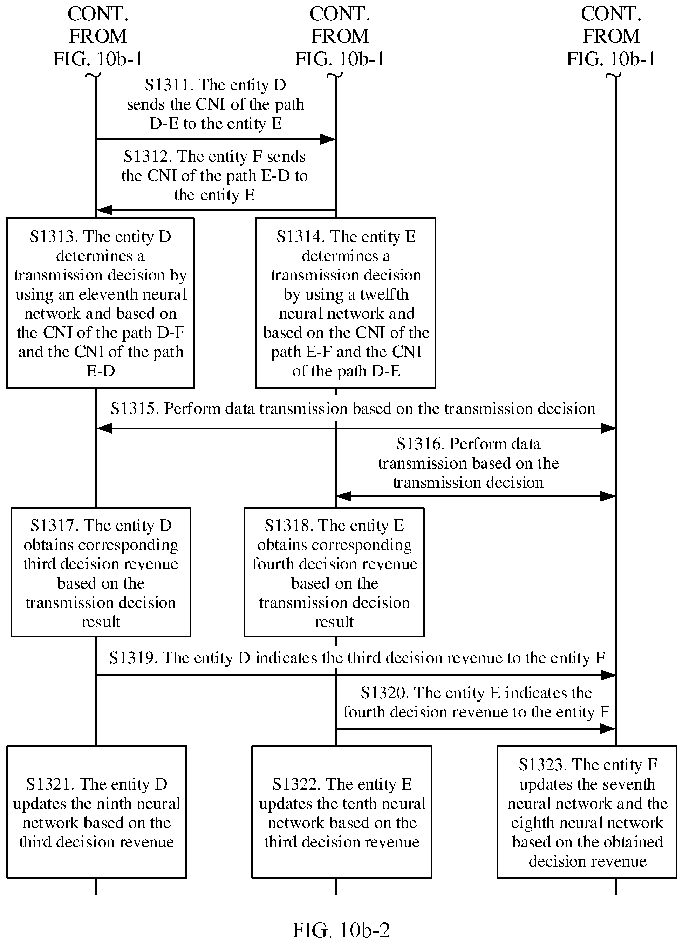

FIG. 10a shows a schematic diagram of another application scenario of a path information feedback method according to a non-claimed embodiment of this application;

FIG. 10b-1 and FIG. 10b-2 show still another schematic interaction diagram of a path information feedback method according to a non-claimed embodiment of this application;

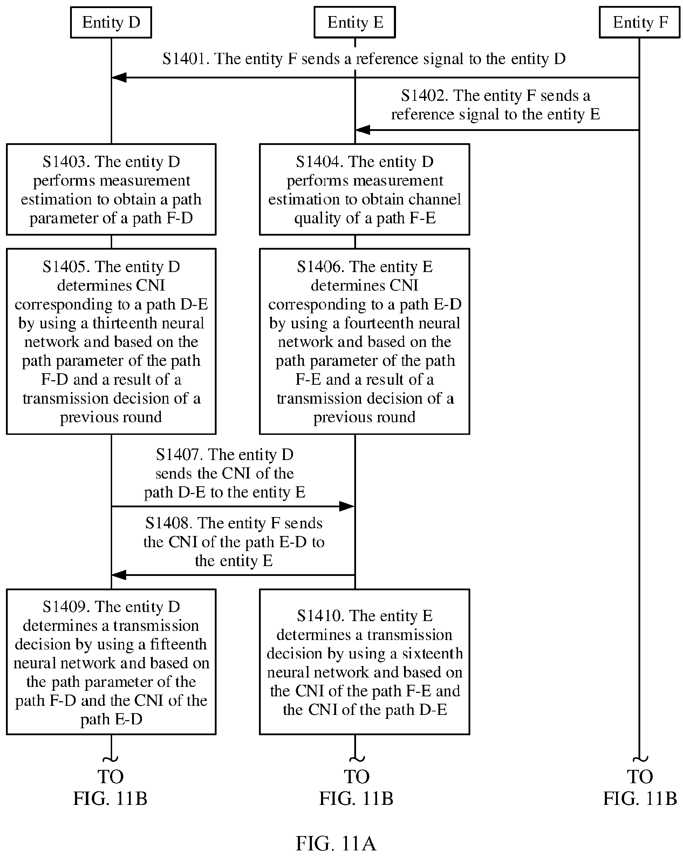

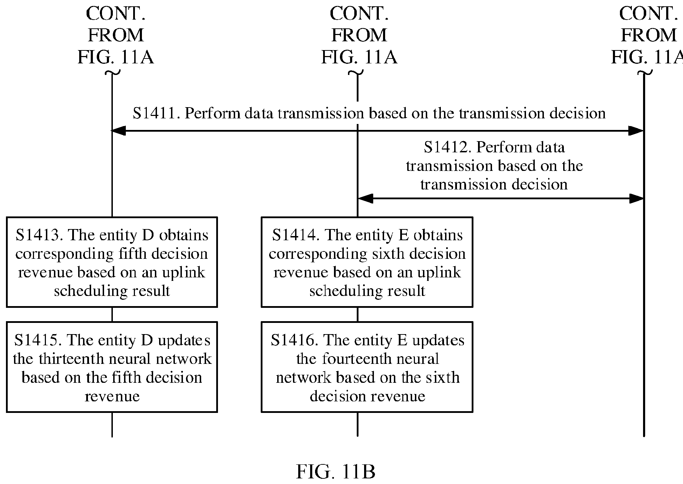

FIG. 11A and FIG. 11B show still another schematic interaction diagram of a path information feedback method according to a non-claimed embodiment of this application;

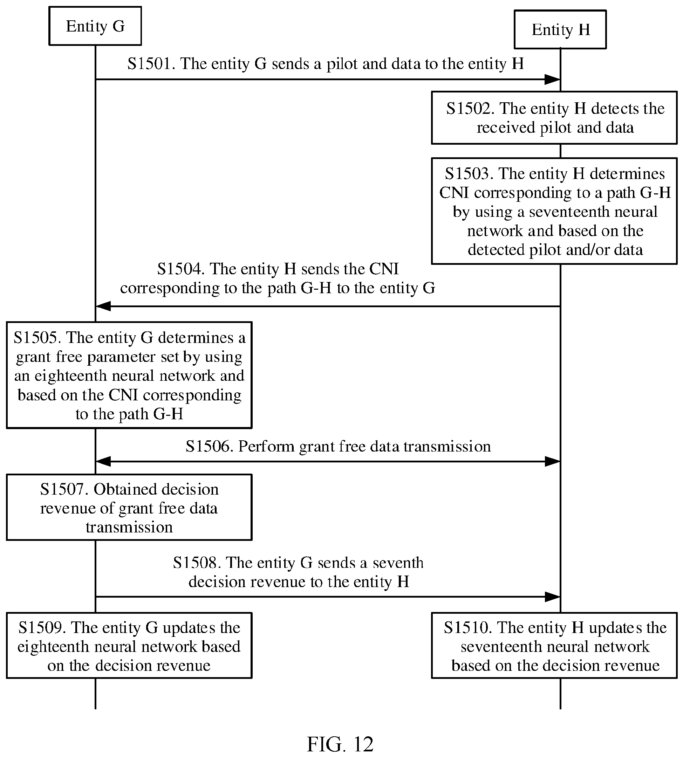

FIG. 12 shows still another schematic interaction diagram of a path information feedback method according to a non-claimed embodiment of this application;

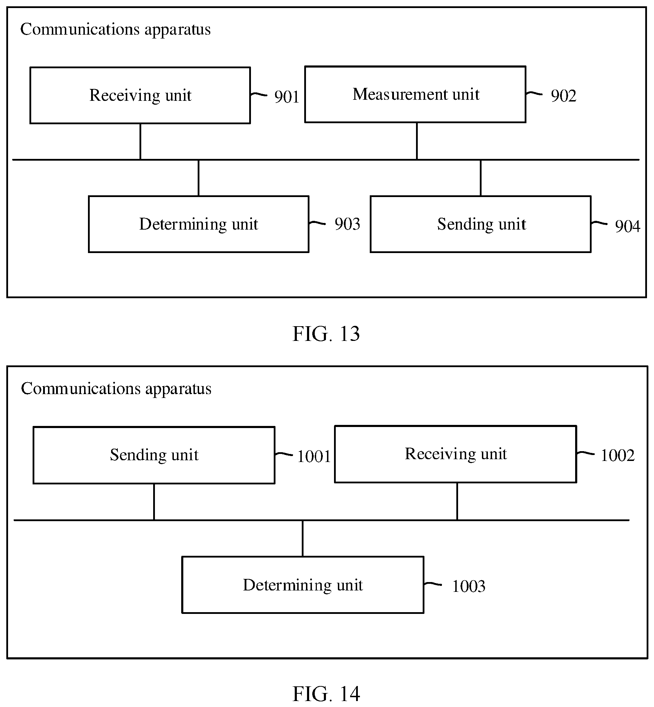

FIG. 13 shows a schematic diagram of a structure of a communications apparatus according to an embodiment of this application;

FIG. 14 shows another schematic diagram of a structure of a communications apparatus according to an embodiment of this application; and

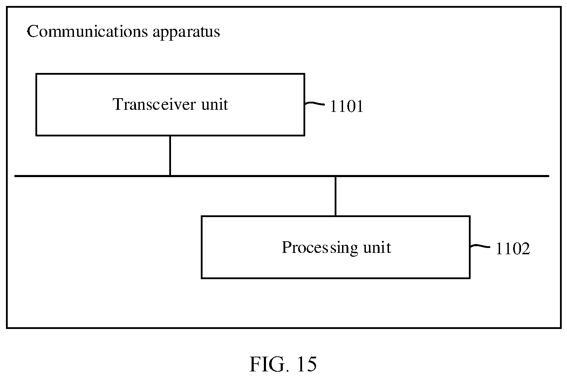

FIG. 15 shows still another schematic diagram of a structure of a communications apparatus according to an embodiment of this application.

## DESCRIPTION OF EMBODIMENTS

Massive MIMO is a key technology to improve a system capacity and spectrum utilization in 5G NR. According to massive MIMO, spectral efficiency may be greatly improved by configuring a large quantity of antennas on a base station. For example, as a quantity of antennas increases, channels between a plurality of users tend to be orthogonal, so that a plurality of users within a coverage area of the base station may simultaneously communicate with the base station on a same time-frequency resource by using a spatial degree of freedom provided by massive MIMO, thereby improving a reuse capability of a spectrum resource among the plurality of users. Therefore, the spectral efficiency is greatly improved without increasing a density and bandwidth of the base station.

In a communications system based on massive MIMO, the base station may use a beamforming manner to enhance a signal that needs to be sent to a terminal (for example, user equipment (user equipment, UE)), to improve signal quality. For example, the base station may modulate the signal into a narrower beam, and concentrate radiation in a smaller spatial area, so that energy efficiency on a radio frequency transmission link between the base station and the terminal is higher.

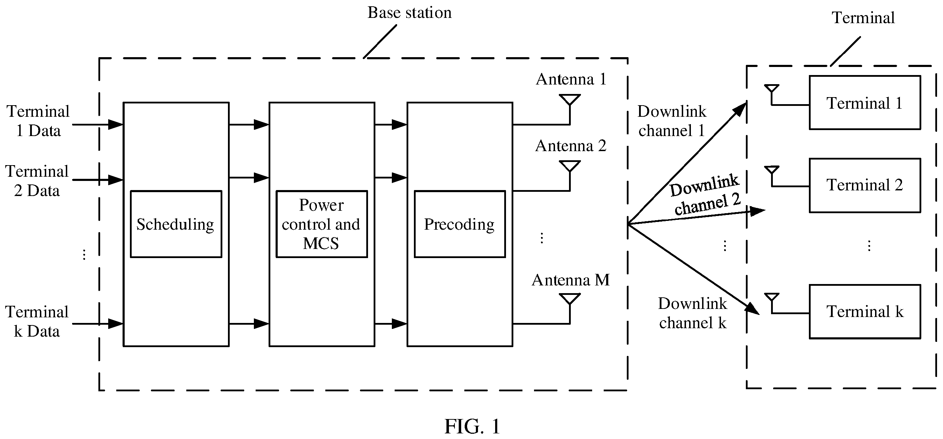

To perform optimal beamforming, the base station needs to obtain accurate channel information of a constantly changing downlink channel. Then, the base station may determine an optimal beam and a corresponding MCS based on the obtained channel information of the downlink channel. The following describes the process with reference to FIG. 1.

FIG. 1 shows a schematic diagram of a composition of a communications system based on a massive multiple-input multiple-output massive MIMO technology.

As shown in FIG. 1, in the communications system based on the massive MIMO technology, a large quantity of antennas (for example, an antenna 1 to an antenna M shown in FIG. 1, where M may be 100 or a number greater than 100) are configured on a base station. One or more antennas (one antenna is shown as an example in the figure) may be configured on a terminal. The base station may communicate with a plurality of terminals (for example, a terminal 1 to a terminal K shown in FIG. 1). The terminal 1 is used as an example. A downlink channel between the base station and the terminal 1 is a downlink channel 1. The base station may schedule data that needs to be sent to the terminal 1, and send the data to the terminal 1 in a signal beam manner by using the downlink channel 1. During forming of a signal beam, to perform optimal beamforming, the base station may obtain channel information 1 of the downlink channel 1, and determine an optimal beam and a corresponding MCS based on the channel information 1. Then, the base station may modulate and code, based on the determined MCS, the data that needs to be sent to the terminal. Communication between the base station and each of a terminal 2 to the terminal K is the same as communication between the base station and the terminal 1. Details are not described herein.

However, for an FDD communications system based on the massive MIMO technology, an uplink channel and a downlink channel occupy different frequency bands, most uplink channels and downlink channels are almost independent, and channel reciprocity is not satisfied. Therefore, channel information of a downlink channel can only be fed back to a base station by using a terminal. For example, in the FDD communications system, a specific implementation in which the terminal feeds back the channel information of the downlink channel to the base station may be as follows:

(1) The base station sends a pilot signal to the terminal by using the downlink channel.
(2) The terminal performs measurement estimation to obtain a channel matrix of the downlink channel based on the received pilot signal.
(3) The terminal feeds back the channel matrix of the downlink channel obtained through measurement estimation to the base station as the channel information of the downlink channel.

In the foregoing channel information feedback process, a parameter of the channel matrix of the downlink channel fed back by the terminal to the base station is directly proportional to a quantity of transmit antennas in the base station. In the FDD communications system based on the massive MIMO technology, a large quantity of antennas are configured on the base station. Therefore, when the terminal feeds back the channel matrix to the base station, a large quantity of channel matrix parameters are included, thereby increasing feedback overheads of the FDD communications system, and reducing accuracy and timeliness of the fed back channel information.

To resolve the problem of increasing feedback overheads of the FDD communications system and reducing accuracy and timeliness of the fed back channel information, limited channel information feedback based on a codebook is used in a current 5G NR standard. A basic principle is as follows: The channel matrix is precoded, a corresponding precoding variable (for example, a beamforming vector or matrix) is put into a codebook as a codeword, and the codebook may be separately stored in the terminal and the base station. During actual application, the terminal may perform measurement estimation on the downlink channel, to obtain the channel matrix of the downlink channel. Then, the terminal may determine, based on the channel matrix obtained through measurement estimation and the stored codebook, a codebook index of a precoding variable that best matches the channel matrix. For example, the codebook index may be referred to as a precoding matrix indicator (Precoding Matrix Indicator, PMI). In addition, the terminal may further calculate channel quality of the downlink channel based on the PMI, to obtain a channel quality indicator (Channel Quality Indicator, CQI). The CQI may be used to indicate the channel quality of the downlink channel. After obtaining the PMI and the CQI, the terminal may send channel state information (Channel State Information, CSI) including the PMI and the CQI to the base station. The base station may obtain the channel information of the downlink channel based on the received CSI. For example, the base station may find the corresponding precoding vector (codeword) from the stored codebook based on the PMI (that is, the foregoing codebook index) in the received CSI, to obtain the channel matrix of the downlink channel. Further, the base station may determine a corresponding MCS based on the channel matrix of the downlink channel and the CQI.

In the foregoing limited channel information feedback manner based on a codebook, the codebook is given in advance, and the codeword in the codebook can only represent a precoding variable corresponding to a limited channel matrix. However, in the FDD communications system based on the massive MIMO technology, because the base station has a large quantity of antennas, there are many possible states of the channel matrix of the downlink channel obtained through measurement estimation. Therefore, when determining, based on the channel matrix obtained through measurement estimation and the stored codebook, the codebook index of the precoding variable that best matches the channel matrix, the terminal first needs to quantize (for example, perform scalar quantization on) the channel matrix obtained through measurement estimation, so that the codeword in the codebook can represent the precoding variable that best matches the channel matrix.

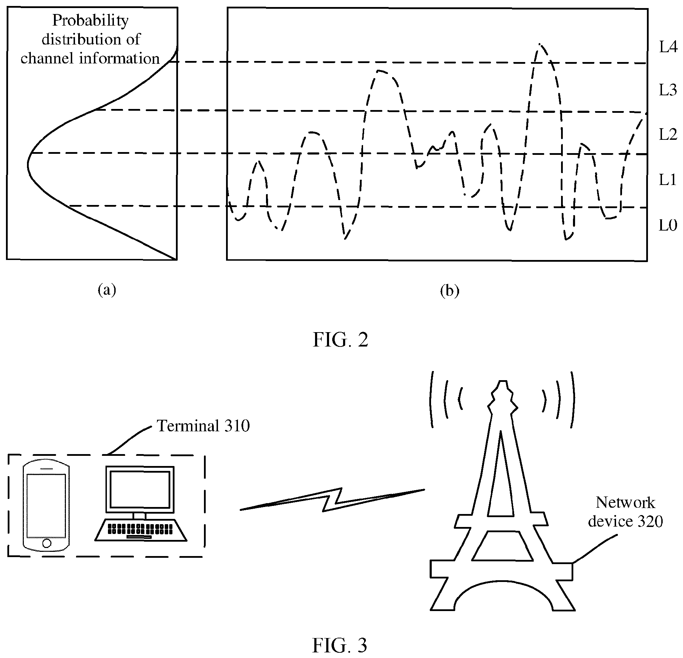

The CQI is used as an example. As described above, the CQI is obtained through calculation based on the PMI of the precoding variable corresponding to the quantized channel matrix, and is related to the quantized channel matrix. It is assumed that a maximum quantity of bits of the CQI allowed for feedback is B. In this case, the terminal can only feed back $L=2B$ different precoding variables (codewords) to the base station at most. That is, the codebook can only include $L=2B$ different codewords, and the terminal can only feed back channel information that is of the downlink channel and that is in $L=2B$ states at most to the base station by using the $L=2B$ different codewords. This means that channel space of the downlink channel needs to be quantized into L non-overlapping areas at the terminal, and channel information of a corresponding area is represented by one codeword based on the foregoing rule. FIG. 2 shows a schematic diagram of channel information quantization.

As shown in (a) in FIG. 2, probability distribution of the channel information is a continuous state that dynamically changes, and the probability distribution is quantized into five non-overlapping areas L0, L1, L2, L3, and L4 shown in (b) in FIG. 2. When channel information of each area is represented by one codeword, the codeword corresponding to each area cannot accurately reflect channel information distribution that dynamically changes.

It may be learned from this that, in the foregoing limited channel information feedback manner based on a codebook, when the terminal quantizes the channel matrix (that is, quantizes the channel information), there is a problem of a quantization precision loss, and there is inevitably a quantization error. The determined precoding variable (the codeword in the codebook) cannot exactly match the downlink channel. As a result, the CSI fed back by the terminal to the base station cannot accurately reflect the channel information of the downlink channel that dynamically changes.

However, in embodiments of this application, based on a reinforcement learning (Reinforcement Learning) idea, a relationship between a channel matrix and CSI may be learned by using a neural network, to implement feedback of channel information by using the neural network. Reinforcement learning is a field in machine learning, and emphasizes that an agent (Agent) performs an action (Action) on an environment based on a state (State) of the environment to maximize an expected reward (Reward). When an initial environment is unknown, the agent needs to constantly interact with the environment to gradually improve a policy of the agent. When the environment is known or approximately known, calculation only needs to be performed based on a model (for example, a neural network). In the embodiments of this application, a first neural network may be used as an agent, a channel matrix may be used as a state, and CSI may be used as an action, so that the first neural network may learn a relationship between the channel matrix and the CSI. When the first neural network is trained, a reward may be determined based on an MCS that is obtained by a network device (for example, a base station) based on the CSI. To be distinguished from CSI obtained by using a codebook in a conventional technology, in the embodiments of this application, the CSI determined based on the first neural network may be defined as channel negotiation information (Channel Negotiation Information, CNI).

For example, the embodiments of this application may provide a channel information feedback method. In the channel information feedback method, a network device (for example, a base station) may send a channel state information-reference signal (Channel State Information-Reference Signal, CSI-RS) to a terminal by using a downlink channel. The terminal may perform measurement estimation to obtain a channel matrix of the downlink channel based on the received CSI-RS. Then, the terminal may determine, by using a first neural network and based on the channel matrix of the downlink channel, channel negotiation information (Channel Negotiation Information, CNI) corresponding to the downlink channel, and send the CNI corresponding to the downlink channel to the network device. The network device may determine, based on the received CNI corresponding to the downlink channel, a modulation and coding scheme (Modulation and Coding Scheme, MCS) corresponding to the downlink channel. A parameter of the first neural network is related to a historical MCS. Similar to the foregoing CSI, the CNI may be used to indicate channel information of the downlink channel. For example, the CNI may include a CQI.

For example, the first neural network may be obtained by performing reinforcement learning training by using a sample channel matrix as input and sample CNI as output. In addition, the parameter of the first neural network may be updated based on the historical MCS, so that the parameter of the first neural network is related to the historical MCS.

In the channel information feedback method, compared with a manner in which CSI is determined based on a codebook, in a manner in which the terminal determines, by using the first neural network, the CNI corresponding to the downlink channel, a quantization error when the terminal quantizes the channel matrix may be reduced, and accuracy of channel information feedback may be effectively improved. In addition, because the parameter of the first neural network is related to the historical MCS, information entropy of the CNI corresponding to the downlink channel determined by the terminal by using the first neural network is less than information entropy of conventional CSI, so that a quantity of feedback bits may be reduced, thereby improving efficiency of channel information feedback.

With reference to the accompanying drawings, the following describes an example of the channel information feedback method provided in the embodiments of this application.

It should be noted that, in descriptions of this application, words such as "first" and "second" are merely used to distinguish descriptions, and are not used to specifically limit a feature. In descriptions of embodiments of this application, the term "and/or" describes an association relationship between associated objects and indicates that three relationships may exist. For example, A and/or B may indicate the following three cases: Only A exists, both A and B exist, and only B exists. The character "/" usually indicates an "or" relationship between associated objects. In this application, "at least one" means one or more, and "a plurality of" means two or more.

FIG. 3 shows a schematic diagram of a composition of a communications system according to an embodiment of this application.

As shown in FIG. 3, the communications system in this embodiment of this application may include at least one terminal 310 and at least one network device 320 (FIG. 3 shows one network device 320 as an example). The terminal 310 and the network device 320 may be communicatively connected, for example, may be connected by using a wired network or a wireless network.

Optionally, the communications system may be an FDD communications system based on a massive MIMO technology, for example, a wideband code division multiple access (Wideband Code Division Multiple Access, WCDMA) system, a long term evolution (Long Term Evolution, LTE) system, an LTE frequency division duplex (Frequency Division Duplex, FDD) system, a universal mobile telecommunication system (Universal Mobile Telecommunication System, UMTS), a 5G communications system, or another wireless communications system using an orthogonal frequency division multiplexing (Orthogonal Frequency Division Multiplexing, OFDM) technology. A specific type of the communications system is not limited in this application.

Optionally, the terminal 310 in the communications system, or referred to as user equipment (User Equipment, UE), may be a cellular phone ("cellular" phone), a mobile phone, a computer, a cordless phone, a Session Initiation Protocol (Session Initiation Protocol, SIP) phone, a wireless local loop (Wireless Local Loop, WLL) station, a personal digital assistant (Personal Digital Assistant, PDA), a laptop computer, a handheld communications device, a handheld computing device, a satellite wireless device, a wireless modem card, a TV set top box (Set Top Box, STB), customer premise equipment (Customer Premise Equipment, CPE), a wearable device (for example, a smartwatch, a smart band, or a pedometer), a vehicle-mounted device (for example, in a car, a bicycle, an electric vehicle, an airplane, a ship, a train, or a high-speed train), a virtual reality (virtual reality, VR) device, an augmented reality (augmented reality, AR) device, a wireless terminal in industrial control (industrial control), a smart home device (for example, a refrigerator, a TV, an air conditioner, or an electricity meter), a smart robot, a workshop device, a wireless terminal in self driving (self driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a flight device (for example, a smart robot, a hot air balloon, a drone, or an airplane), another device configured to perform communication in a wireless system, or the like. A specific representation form of the terminal 310 is not limited either in this application.

The network device 120 may be an access network device of the communications system, for example, a base station. Optionally, in this embodiment of this application, the network device 120 may include a macro base station, a micro base station (also referred to as a small cell), or the like in various forms. For example, the network device 120 may include a base station in WCDMA or LTE, a next generation NodeB (next generation NodeB, gNB), a next generation evolved NodeB (next generation evolved NodeB, Ng-eNB), a transmission reception point (transmission reception point, TRP), an evolved NodeB (evolved NodeB, eNB), a radio network controller (radio network controller, RNC), a NodeB (NodeB, NB), a base station controller (base station controller, BSC), a base transceiver station (base transceiver station, BTS), a home NodeB (for example, a home evolved NodeB, or a home NodeB, HNB), a baseband unit (baseband unit, BBU), a Wireless Fidelity (Wireless Fidelity, Wi-Fi) access point (access point, AP), or the like.

It may be understood that application scenarios (for example, the communications system shown in FIG. 3) described in the embodiments of this application are merely intended to describe technical solutions in the embodiments of this application more clearly, but do not constitute a limitation on the technical solutions provided in the embodiments of this application. For example, the communications system may further include another device, for example, another network entity such as a network controller or a mobility management entity. In addition, a person of ordinary skill in the art may know that, as a network architecture evolves and a new service scenario emerges, the technical solutions provided in the embodiments of this application are also applicable to a similar technical problem.

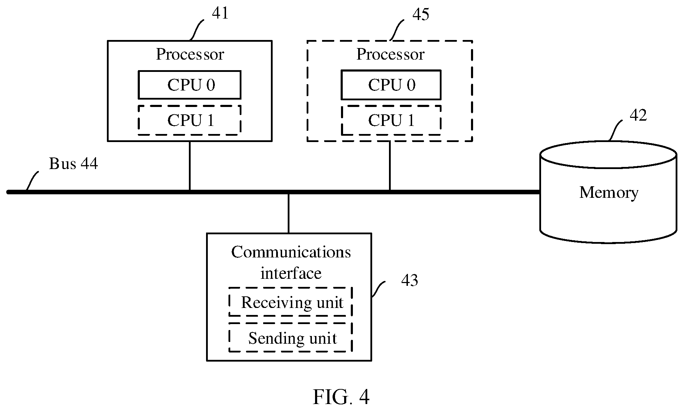

FIG. 4 shows a schematic diagram of a composition of a terminal according to an embodiment of this application. As shown in FIG. 4, the terminal may include at least one processor 41, a memory 42, a communications interface 43, and a bus 44.

The following specifically describes each component of the terminal with reference to FIG. 4.

The processor 41 is a control center of the terminal, and may be one processor, or may be a general term of a plurality of processing elements. For example, the processor 41 may be a central processing unit (Central Processing Unit, CPU), or an application specific integrated circuit (Application Specific Integrated Circuit, ASIC), or may be configured as one or more integrated circuits implementing this embodiment of this application, for example, one or more microprocessors (Digital Signal Processor, DSP) or one or more field programmable gate arrays (Field Programmable Gate Array, FPGA).

The processor 41 may execute various functions of the terminal by running or executing a software program stored in the memory 42 and invoking data stored in the memory 42. For example, the processor 41 may perform the channel information feedback method provided in the embodiments of this application.

During specific implementation, in an embodiment, the processor 41 may include one or more CPUs such as a CPU 0 and a CPU 1 in FIG. 4.

During specific implementation, in an embodiment, the terminal may include a plurality of processors, such as the processor 41 and a processor 45 shown in FIG. 4. Each of the processors may be a single-CPU (single-CPU) processor, or may be a multi-CPU (multi-CPU) processor. Herein, the processor may be one or more devices, circuits, and/or processing cores configured to process data (for example, computer program instructions).

The memory 42 is configured to store a software program for performing method steps performed by the terminal in the solutions of this application, and the processor 41 controls execution of the software program. The memory 42 may be a read-only memory (Read-Only Memory, ROM) or another type of static storage device that can store static information and instructions, or a random access memory (Random Access Memory, RAM) or another type of dynamic storage device that can store information and instructions, or may be an electrically erasable programmable read-only memory (Electrically Erasable Programmable Read-Only Memory, EEPROM), a compact disc read-only memory (Compact Disc Read-Only Memory, CD-ROM) or another optical disk storage, an optical disc storage (including a compact disc, a laser disc, an optical disc, a digital versatile disc, a Blu-ray disc, or the like), a disk storage medium or another magnetic storage device, or any other medium that can be used to carry or store expected program code in a form of instructions or a data structure and that can be accessed by a computer, but is not limited thereto. The memory 42 may exist independently, and is connected to the processor 41 through the bus 44. Alternatively, the memory 42 may be integrated with the processor 41.

The communications interface 43 is configured to communicate with another device or a communications network by using any apparatus such as a transceiver, for example, may communicate with a network device of a core network. The communications interface 43 may be an Ethernet interface, a radio access network (Radio Access Network, RAN) interface, a wireless local area network (Wireless Local Area Networks, WLAN) interface, or the like. The communications interface 43 may include a receiving unit to implement a receiving function, and a sending unit to implement a sending function.

The bus 44 may be an industry standard architecture (Industry Standard Architecture, ISA) bus, a peripheral component interconnect (Peripheral Component, PCI) bus, an extended industry standard architecture (Extended Industry Standard Architecture, EISA) bus, or the like. The bus may be classified into an address bus, a data bus, a control bus, and the like. For ease of representation, only one bold line is used for representation in FIG. 4, but this does not mean that there is only one bus or only one type of bus.

Certainly, during actual application, the processor 41, the memory 42, and the communications interface 43 in the terminal may alternatively not be connected by using a bus structure, but may be connected by using another structure, for example, a star structure. This is not specifically limited in this application.

Similar to the structure of the terminal shown in FIG. 4, in the embodiments of this application, a network device may also include at least one processor, a memory, a communications interface, a bus, and the like. A difference from the terminal lies in that the memory in the network device is configured to store a software program for performing method steps performed by the network device in the solutions of this application, and the processor controls execution of the software program. Other similarities or commonalities are not described herein.

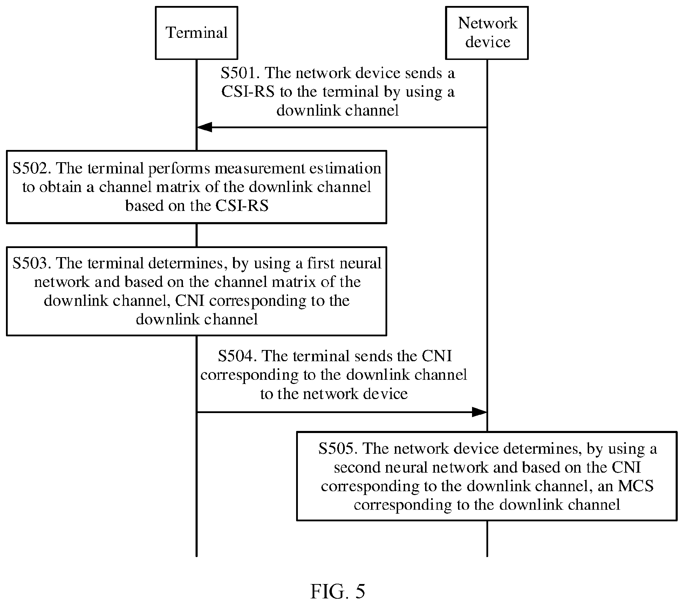

FIG. 5 shows a schematic flowchart of a channel information feedback method according to an embodiment of this application. As shown in FIG. 5, the channel information feedback method may include the following steps:

S501. A network device sends a channel state information-reference signal CSI-RS to a terminal by using a downlink channel.

Correspondingly, the terminal may receive the CSI-RS sent by the network device.

S502. The terminal performs measurement estimation to obtain a channel matrix of the downlink channel based on the CSI-RS.

For example, the CSI-RS may be a pilot sequence. After receiving the CSI-RS sent by the network device, the terminal may perform measurement estimation on a channel parameter of the downlink channel based on the CSI-RS, to obtain the channel matrix of the downlink channel.

S503. The terminal determines, by using a first neural network and based on the channel matrix of the downlink channel, channel negotiation information CNI corresponding to the downlink channel.

The first neural network may be obtained by performing reinforcement learning training by using a sample channel matrix as input and sample CNI as output. The terminal may input the channel matrix of the downlink channel obtained through measurement estimation into the first neural network, and the first neural network may output the CNI corresponding to the downlink channel. The CNI may be used to indicate channel information of the downlink channel.

S504. The terminal sends the CNI corresponding to the downlink channel to the network device.

Correspondingly, the network device may receive the CNI corresponding to the downlink channel from the terminal. After receiving the CNI corresponding to the downlink channel, the network device may determine, based on the received CNI corresponding to the downlink channel, an MCS corresponding to the downlink channel. The MCS may be used by a base station to process data that needs to be sent to the terminal by using the downlink channel. For example, the network device may modulate and code, based on the MCS, the data that needs to be sent to the terminal by using the downlink channel.

Compared with a manner in which CSI is determined based on a codebook and fed back to the network device, in this embodiment of this application, in a manner in which the terminal determines, by using the first neural network, the CNI corresponding to the downlink channel and feeds back the CNI to the network device, there is no need to quantize the channel matrix into a limited codebook for representation, so that a quantization error when the terminal quantizes the channel matrix in a channel information feedback process may be effectively reduced, thereby improving accuracy of channel information feedback. The CNI fed back to the base station can more accurately reflect the channel information of the downlink channel that dynamically changes.

In some embodiments, a second neural network may be used as an agent on a network device side, the CNI may be used as a state, and the MCS may be used as an action, so that the second neural network may learn a relationship between the CNI and the MCS. When the second neural network is trained, a reward may also be determined based on an MCS that is obtained by the network device (for example, the base station) based on the CSI.

Further referring to FIG. 5, a step in which the network device determines, based on the received CNI corresponding to the downlink channel, the MCS corresponding to the downlink channel may include S505.

S505. The network device determines, by using the second neural network and based on the CNI corresponding to the downlink channel, the modulation and coding scheme MCS corresponding to the downlink channel.

For example, the second neural network may be obtained by training a neural network by using sample CNI as input and a sample MCS as output. The network device may input the CNI corresponding to the downlink channel into the second neural network, and the second neural network may output the MCS corresponding to the downlink channel.

In a conventional technology, after receiving CSI fed back by the terminal, when determining an MCS based on a channel quality indicator CQI in the CSI, the network device generally queries a mapping relationship table between a CQI and an MCS, to determine an MCS corresponding to the CQI. However, due to a limitation of spectral efficiency, in the mapping relationship table between a CQI and an MCS, the CQI and the MCS are not in a one-to-one correspondence. Therefore, there may be a deviation between the CQI and the MCS in probability distribution.

However, in this embodiment of this application, a mapping relationship between the CNI and the MCS may be implemented by using the second neural network. Compared with a manner in which the MCS is determined based on a fixed mapping relationship table between a CQI and an MCS, in a manner in which the network device determines, by using the second neural network and based on the CNI corresponding to the downlink channel, the MCS corresponding to the downlink channel, a possible deviation between the CNI and the MCS in probability distribution is smaller, and the determined MCS can better match the channel information of the downlink channel indicated by the CNI.

In a possible design, a parameter of the first neural network may be related to a historical MCS. The historical MCS is an MCS determined by the network device based on CNI (which may be referred to as historical CNI) sent last time by the terminal.

For example, the network device may obtain, based on the historical MCS, historical decision revenue corresponding to the historical MCS, and send the historical decision revenue to the terminal. The terminal may update the parameter of the first neural network based on the historical decision revenue, so that the parameter of the first neural network is related to the historical MCS.

That is, in the design, that the parameter of the first neural network is related to the historical MCS may mean that the parameter of the first neural network is a parameter updated by the terminal based on the historical decision revenue, and the historical decision revenue is obtained by the network device based on the historical MCS.

In the design, the parameter of the first neural network may be related to the historical MCS. Therefore, the historical MCS determined by the network device can play a guiding role in determining, by using the first neural network, the CNI corresponding to the downlink channel by the terminal, and information entropy of the CNI corresponding to the downlink channel determined by the terminal by using the first neural network can be less than information entropy of conventional CSI, so that a quantity of feedback bits may be reduced, thereby improving efficiency of channel information feedback.

Optionally, in the channel information feedback method shown in FIG. 5, after determining, based on the received CNI corresponding to the downlink channel, the MCS corresponding to the downlink channel, the network device may also obtain, based on the determined MCS corresponding to the downlink channel, decision revenue corresponding to the MCS, and send the decision revenue corresponding to the MCS to the terminal. The terminal may update the parameter of the first neural network based on the decision revenue corresponding to the MCS, so that the parameter of the first neural network can be dynamically updated based on an MCS determined each time by the network device, to dynamically update a mapping relationship between the channel matrix and the CNI.

In this embodiment of this application, the historical decision revenue and the decision revenue are data of a same type. A difference only lies in that the historical decision revenue is obtained by the network device based on the historical MCS, and the decision revenue is obtained by the network device based on the currently determined MCS corresponding to the downlink channel.

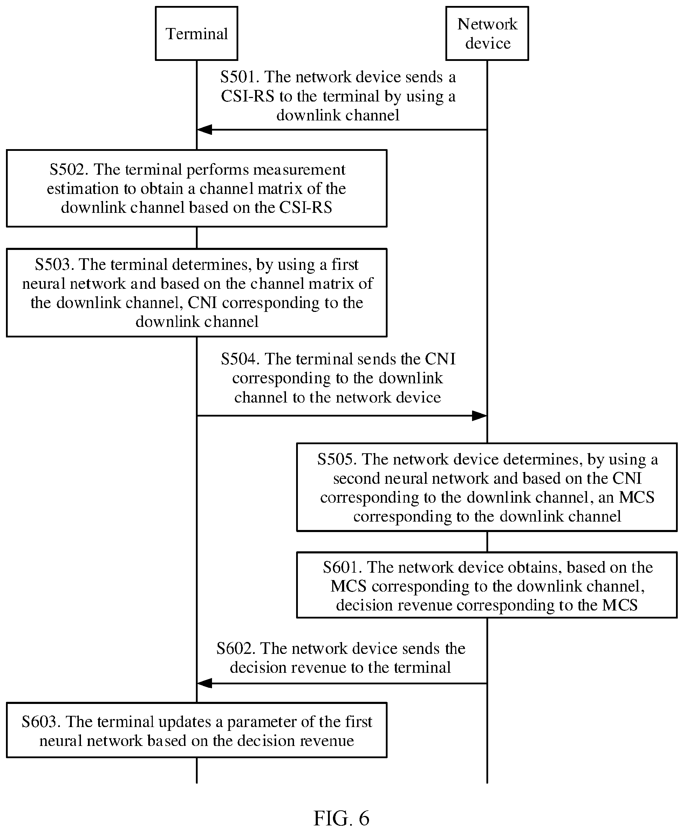

With reference to FIG. 6, the following describes a process in which the network device obtains, based on the MCS corresponding to the downlink channel, the decision revenue corresponding to the MCS, and a process in which the terminal updates the parameter of the first neural network based on the decision revenue corresponding to the MCS. A process in which the network device obtains, based on the historical MCS, the historical decision revenue corresponding to the historical MCS, and a process in which the terminal updates the parameter of the first neural network based on the historical decision revenue are similar, and are not described herein.

FIG. 6 shows another schematic flowchart of a channel information feedback method according to an embodiment of this application. As shown in FIG. 6, based on the channel information feedback method shown in FIG. 5, after S505, the channel information feedback method may further include S601 to S603, and S601 to S603 are a process of updating the parameter of the first neural network in the channel information feedback method.

S601. The network device obtains, based on the MCS corresponding to the downlink channel, the decision revenue corresponding to the MCS.

Optionally, the network device may send a data packet to the terminal based on the MCS corresponding to the downlink channel. The terminal may reply to the network device with an acknowledgment (Acknowledge, ACK) message or a negative acknowledgment (Negative Acknowledgment, NACK) based on the received data packet. The network device may obtain, based on the ACK or the NACK with which the terminal replies, the decision revenue corresponding to the MCS.

It should be noted that, if there is no uplink scheduling, the terminal may reply with the ACK or the NACK by using a physical uplink control channel (Physical Uplink Control Channel, PUCCH); and if there is uplink scheduling, the terminal may reply with the ACK or the NACK by using a physical uplink shared channel (Physical Uplink Shared Channel, PUSCH) or the PUCCH.

In an implementation, the decision revenue may be a decision bit rate when the network device performs scheduling based on the MCS corresponding to the downlink channel. The decision bit rate is a bit rate at which the terminal can successfully receive a data packet when the network device sends the data packet to the terminal based on the MCS corresponding to the downlink channel.

In another implementation, the decision revenue may be a bit rate difference between a reference bit rate and a decision bit rate when the network device performs scheduling based on the MCS corresponding to the downlink channel.

In still another implementation, the decision revenue may alternatively be a throughput when the network device performs scheduling based on the MCS corresponding to the downlink channel. For example, the throughput may be a volume of data successfully transmitted in a unit time when the network device performs scheduling based on the MCS corresponding to the downlink channel.

In still another implementation, the decision revenue may alternatively be a combination of any one of a decision bit rate or a throughput when the network device performs scheduling based on the MCS corresponding to the downlink channel and an evaluation value provided by the network device on the CNI corresponding to the downlink channel. The evaluation value provided by the network device on the CNI corresponding to the downlink channel may be used to indicate a magnitude of a guiding role of the CNI corresponding to the downlink channel in determining the MCS corresponding to the downlink channel by the network device, and may be used to measure whether the CNI can effectively cooperate with the network device to resolve a scheduling task. A greater evaluation value provided by the network device on the CNI corresponding to the downlink channel indicates a greater guiding role. A smaller evaluation value provided by the network device on the CNI corresponding to the downlink channel indicates a smaller guiding role. When determining, based on the CNI corresponding to the downlink channel, the MCS corresponding to the downlink channel, the network device may evaluate the guiding role of the CNI and provide an evaluation value. For example, the evaluation value may be a value ranging from 0 to 10. When the MCS can be determined based on the CNI, the evaluation value may be a value such as 1, 3.5, 6, or 10. When the MCS cannot be determined based on the CNI, the evaluation value may be 0 or the like.

However, it should be noted that the range of the evaluation value is merely an example for description. In another implementation, the evaluation value may alternatively be another larger or smaller value range. On the premise that the evaluation value may be used to indicate the magnitude of the guiding role of the CNI on the MCS, the range or a specific implementation of the evaluation value is not limited in this application. For example, in some other implementations, the range of the evaluation value may alternatively be a percentage interval or the like divided based on mutual information between the CNI and the MCS.

According to any one of the foregoing implementations, the network device may obtain, based on the MCS corresponding to the downlink channel, the decision revenue corresponding to the MCS, and send the decision revenue to the terminal. The terminal may update the parameter of the first neural network based on the received decision revenue. For example, refer to S602 and S603.

S602. The network device sends the decision revenue to the terminal.

Correspondingly, the terminal may receive the decision revenue from the network device.

S603. The terminal updates the parameter of the first neural network based on the decision revenue.

Optionally, the terminal may update the parameter of the first neural network based on the decision revenue and a first objective function. The parameter of the first neural network may refer to a connection weight and an offset value of each neuron in the first neural network. That the terminal updates the parameter of the first neural network based on the decision revenue and the first objective function means that the terminal adjusts the connection weight and the offset value of each neuron in the first neural network based on the decision revenue and the first objective function, so that an error of the first neural network becomes increasingly smaller.

In some embodiments, the first objective function may be a policy-based objective function. For example, it is assumed that the parameter of the first neural network is θ. In this case, the first objective function may be as follows:

$$\nabla J(\theta) = \mathbb{E}_{\pi_{\theta}(s,a)}[\nabla_{\theta}\log\pi_{\theta}(s,a)\,R(s,a) + \beta\mathcal{H}(a)].$$

Herein, J(θ) represents the first objective function; s represents the channel matrix of the downlink channel obtained through measurement estimation by the terminal; a represents the CNI determined by the terminal by using the first neural network and based on the channel matrix of the downlink channel obtained through measurement estimation; $\pi_\theta$(s, a) represents a policy function including the parameter θ of the first neural network; $\mathbb{E}_{\pi_\theta(s,a)}$ represents an expectation of all policies; R(s, a) represents the decision revenue; $\mathcal{H}$(a) represents entropy of the CNI determined by the terminal by using the first neural network, where the entropy is used as a regularization term to increase an exploration capability of the first objective function and improve robustness of the first neural network; and $\mathcal{H}$(a) can control an exploration weight by using a coefficient β, where β is greater than or equal to 0 and less than or equal to 1. When the parameter of the first neural network is updated based on the first objective function, an optimization objective (or may be referred to as an update policy) may be maximization of the first objective function.

The first objective function may be used to increase a selection probability of CNI whose decision revenue is greater than 0, and decrease a selection probability of CNI whose decision revenue is less than 0.

Based on the first objective function, the terminal may update a parameter θ of the first objective function, to update the parameter of the first neural network.

For example, the parameter θ and a step α may be first initialized (for example, initial values of θ and α may be randomly generated). Then, based on the channel matrix (s in the first objective function) of the downlink channel obtained through measurement estimation, the CNI (a in the first objective function) determined by using the first neural network, and the decision revenue (R(s, a) in the first objective function) sent by the network device, the terminal may use a gradient ascent method to update the parameter θ by using the following policy update function:

$$\theta = \theta + \alpha\left[\nabla_\theta \log\pi_\theta(s, a)\,R(s, a) + \beta\mathcal{H}(a)\right].$$

As described in the related explanation of S601 above, in different implementations, the decision revenue may be different types of data. For different types of decision revenue, different first objective functions may be used in this embodiment of this application. That is, the first objective function is related to the decision revenue.

Examples are provided for description:

(1) If the decision revenue (R(s, a)) is the decision bit rate when the network device performs scheduling based on the MCS corresponding to the downlink channel, the first objective function may be represented as:

$$\nabla J(\theta) = \mathbb{E}_{\pi_\theta(s,a)}\left[\nabla_\theta \log\pi_\theta(s, a)\,Rate(a) \cdot ACK + \beta\mathcal{H}(a)\right].$$

Herein, Rate(a) ·ACK represents the decision bit rate.

In this case, a task requirement of the network device may be to increase the decision bit rate.

(2) If the decision revenue (R(s, a)) is the bit rate difference between the reference bit rate and the decision bit rate when the network device performs scheduling based on the MCS corresponding to the downlink channel, the first objective function may be represented as:

$$\nabla J(\theta) = \mathbb{E}_{\pi_\theta(s,a)}\{\nabla_\theta \log\pi_\theta(s, a)[Rate(a) \cdot ACK - Rate(baseline)] + \beta\mathcal{H}(a)\}.$$

Herein, Rate(a) ·ACK - Rate(baseline) represents the bit rate difference between the decision bit rate and the reference bit rate; Rate(a) ·ACK represents the decision bit rate; and Rate(baseline) represents the reference bit rate. For example, the reference bit rate may be a block error rate of 10%.

In this case, a task requirement of the network device may be to obtain a decision bit rate that is better than the reference bit rate.

(3) If the decision revenue (R(s, a)) is a combination of the decision bit rate when the network device performs scheduling based on the MCS corresponding to the downlink channel and the evaluation value provided by the network device on the CNI corresponding to the downlink channel, the first objective function may be represented as:

$$\nabla J(\theta) = \mathbb{E}_{\pi_\theta(s,a)}\{\nabla_\theta \log\pi_\theta(s, a)[pRate(a) \cdot ACK + qI(a_{BS}; a_{UE})] + \beta\mathcal{H}(a)\}.$$

Herein, Rate(a) ·ACK represents the decision bit rate; I($a_{BS}$; $a_{UE}$) represents the evaluation value provided by the network device on the CNI corresponding to the downlink channel, where the evaluation value may refer to mutual information between the CNI and the MCS that are corresponding to the downlink channel; and p and q are both constants.

In this case, a task requirement of the network device may be to increase the bit rate as well as the evaluation value of the CNI.

Similarly, if the decision revenue is the throughput when the network device performs scheduling based on the MCS corresponding to the downlink channel, or a combination of the throughput when the network device performs scheduling based on the MCS corresponding to the downlink channel and the evaluation value provided by the network device on the CNI corresponding to the downlink channel, for the first objective function, refer to the foregoing example description, and details are not described herein.

Optionally, the first neural network may be a convolutional neural network, a recurrent neural network of long short-term memory, or the like. A specific structure and dimensions of the first neural network may be determined based on a type of input data. For example, for the channel matrix with a large quantity of parameters in the massive MIMO communications system described in the foregoing embodiment, the convolutional neural network may be used. For some scenarios in which a channel matrix is predicted, the recurrent neural network of long short-term memory may be used by inputting channel information of a previous period of time. A specific type of the first neural network is not limited in this embodiment of this application.

As described above, in this embodiment of this application, the terminal may update the parameter of the first neural network based on the decision revenue sent by the network device, so that a mapping relationship between the channel matrix and the CNI may be dynamically updated, and information entropy of CNI corresponding to a downlink channel determined by the terminal by using the first neural network next time may be relatively small.

Similarly, in a possible design, a parameter of the second neural network may also be related to the historical MCS.

For example, after obtaining, based on the historical MCS, the historical decision revenue corresponding to the historical MCS, the network device may also update the parameter of the second neural network based on the historical decision revenue, so that the parameter of the second neural network is related to the historical MCS. For a manner of obtaining the historical decision revenue, refer to the description in the foregoing embodiment. Details are not described herein.

That is, in the design, that the parameter of the second neural network is related to the historical MCS may mean that the parameter of the second neural network is a parameter updated by the network device based on the historical decision revenue, and the historical decision revenue is obtained by the network device based on the historical MCS.

In the design, the parameter of the second neural network may be related to the historical MCS, so that the historical MCS determined by the network device can play a guiding role in determining the MCS of the downlink channel by using the second neural network and based on the CNI, thereby further reducing the possible deviation between the CNI and the MCS in probability distribution.

Optionally, in the channel information feedback method, after obtaining, based on the determined MCS corresponding to the downlink channel, the decision revenue corresponding to the MCS, the network device may also update the parameter of the second neural network based on the decision revenue corresponding to the MCS, so that the parameter of the second neural network can be dynamically updated based on an MCS determined each time by the network device, to dynamically update the mapping relationship between the CNI and the MCS.

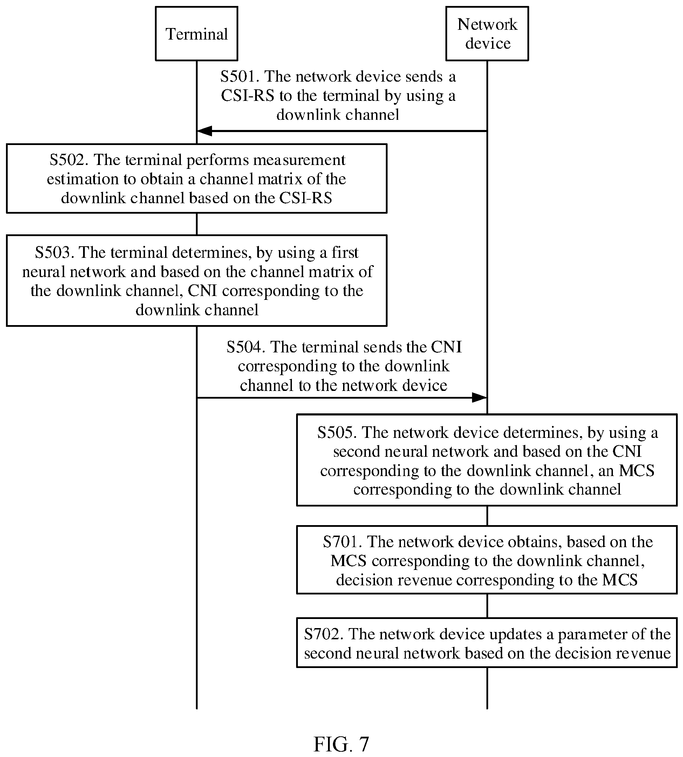

For example, FIG. 7 shows still another schematic flowchart of a channel information feedback method according to an embodiment of this application. As shown in FIG. 7, based on the channel information feedback method shown in FIG. 5, after S505, the channel information feedback method may further include S701 and S702, and S701 and S702 are a process of updating the parameter of the second neural network in the channel information feedback method.

S701. The network device obtains, based on the MCS corresponding to the downlink channel, the decision revenue corresponding to the MCS.

The step in which the network device obtains, based on the MCS corresponding to the downlink channel, the decision revenue corresponding to the MCS is the same as S601 in the foregoing embodiment. Details are not described herein.

S702. The network device updates the parameter of the second neural network based on the decision revenue.

Optionally, the network device may update the parameter of the second neural network based on the decision revenue and a second objective function. The parameter of the second neural network may refer to a connection weight and an offset value of each neuron in the second neural network. That the network device updates the parameter of the second neural network based on the decision revenue and the second objective function means that the network device adjusts the connection weight and the offset value of each neuron in the second neural network based on the decision revenue and the second objective function, so that an error of the second neural network becomes increasingly smaller.

A form of the second objective function is similar to the form of the first objective function in the foregoing embodiment. It is assumed that the parameter of the second neural network is also represented as $\theta$. In this case, the second objective function may be as follows:

$$\nabla J(\theta) = \mathbb{E}_{\pi_\theta(s,a)}[\nabla_\theta \log \pi_\theta(s,a) R(s,a) + \beta \mathcal{H}(a)].$$

A difference from the first objective function lies in that, in the second objective function, J(θ) represents the second objective function; s represents the CNI that corresponds to the downlink channel and that is received by the network device; a represents the MCS determined by the network device by using the second neural network and based on the CNI corresponding to the downlink channel; $\pi_\theta(s,a)$ represents a policy function including the parameter θ of the second neural network; $\mathbb{E}_{\pi_\theta(s,a)}$ represents an expectation of all policies; R(s, a) represents the decision revenue; $\mathcal{H}$(a) represents entropy of the MCS determined by the network device by using the second neural network, where the entropy is used as a regularization term to increase an exploration capability of the second objective function and improve robustness of the second neural network; and $\mathcal{H}$(a) can control an exploration weight by using a coefficient β, where β is greater than or equal to 0 and less than or equal to 1. When the parameter of the second neural network is updated based on the second objective function, an optimization objective (or may be referred to as an update policy) may be maximization of the second objective function.

The second objective function may be used to increase a selection probability of an MCS whose decision revenue is greater than 0, and decrease a selection probability of an MCS whose decision revenue is less than 0.

Based on the second objective function, the network device may update a parameter θ of the second objective function, to update the parameter of the second neural network.

For example, referring to the manner of updating the parameter of the first neural network, the parameter θ and a step α may be first initialized (for example, initial values of θ and α may be randomly generated). Then, based on the CNI (s in the second objective function) corresponding to the downlink channel, the MCS (a in the second objective function) determined by using the second neural network, and the decision revenue (R(s, a) in the second objective function) obtained by the network device, the terminal may use a gradient ascent method to update the parameter θ by using the following policy update function:

$$\theta = \theta + \alpha\left[\nabla_\theta \log \pi_\theta(s, a)\, R(s, a) + \beta \mathcal{H}(a)\right].$$

In addition, same as the foregoing embodiment in which the parameter of the first neural network is updated, when the parameter of the second neural network is updated, in different implementations, the decision revenue may also be different types of data. For different types of decision revenue, different second objective functions may be used. That is, the second objective function is also related to the decision revenue. Examples are not provided for description herein.

Optionally, the second neural network may also be a convolutional neural network, a recurrent neural network of long short-term memory, or the like. A specific type of the second neural network is not limited either in this embodiment of this application.

In some embodiments, the channel information feedback method in this embodiment of this application may include only the solution for updating the parameter of the first neural network, as shown in FIG. 6.

In some other embodiments, the channel information feedback method in this embodiment of this application may alternatively include only the solution for updating the parameter of the second neural network, as shown in FIG. 7.

In still other embodiments, the channel information feedback method in this embodiment of this application may alternatively include both the solution for updating the parameter of the first neural network and the solution for updating the parameter of the second neural network, as shown in FIG. 6 and FIG. 7.

It should be noted that, when the solution for updating the parameter of the first neural network and the solution for updating the parameter of the second neural network are both included, a time at which the network device updates the parameter of the second neural network may be before a time at which the terminal updates the parameter of the first neural network, or after the time at which the terminal updates the parameter of the first neural network. This is not limited in this application.

It may be learned from the foregoing that, in this embodiment of this application, the terminal may determine, by using the first neural network and based on the channel matrix of the downlink channel obtained through measurement estimation, the CNI corresponding to the downlink channel, and send the CNI corresponding to the downlink channel to the network device. The network device may determine, by using the second neural network and based on the received CNI corresponding to the downlink channel, the MCS corresponding to the downlink channel. After determining the MCS corresponding to the downlink channel, the network device may obtain, based on the determined MCS, the decision revenue corresponding to the MCS. Then, the network device may send the decision revenue to the terminal, and the terminal may update the parameter of the first neural network based on the decision revenue, to dynamically update the mapping relationship between the channel matrix and the CNI. In addition, the network device may also update the parameter of the second neural network based on the decision revenue, to dynamically update the mapping relationship between the CNI and the MCS.

For a communications system that includes the terminal and the network device, the first neural network and the second neural network together implement a mapping between the channel matrix and the MCS. When the parameter of the first neural network and the parameter of the second neural network are both updated in the foregoing manner, it is equivalent to dynamically updating a mapping relationship between the channel matrix and the MCS.

Based on such an understanding, an embodiment of this application further provides a channel information feedback method. In the channel information feedback method, the network device may update the parameter of the second neural network based on the decision revenue in the manner described in the foregoing embodiment. The terminal may update the parameter of the first neural network based on an error of a parameter of a first hidden layer of the second neural network before and after the network device updates the parameter of the second neural network.

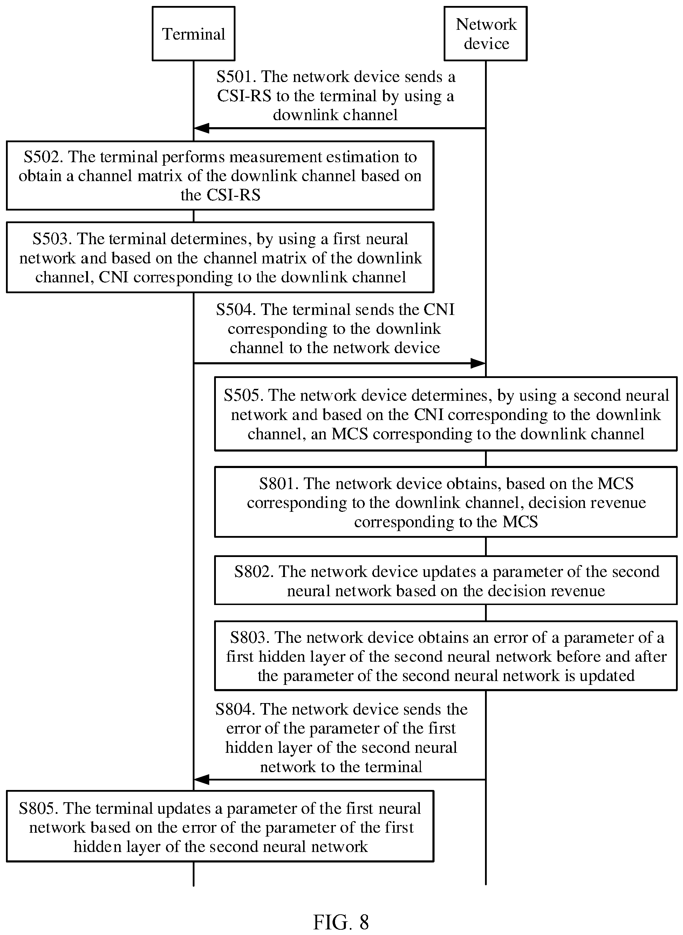

For example, FIG. 8 shows still another schematic flowchart of a channel information feedback method according to an embodiment of this application. As shown in FIG. 8, based on the channel information feedback method shown in FIG. 5, after S505, the channel information feedback method may further include S801 to S805, and S801 to S805 are a process of updating both the parameter of the first neural network and the parameter of the second neural network.

S801. The network device obtains, based on the MCS corresponding to the downlink channel, the decision revenue corresponding to the MCS.

The step in which the network device obtains, based on the MCS corresponding to the downlink channel, the decision revenue corresponding to the MCS is the same as S601 in the foregoing embodiment. Details are not described herein.

S802. The network device updates the parameter of the second neural network based on the decision revenue.

The step in which the network device updates the parameter of the second neural network based on the decision revenue is the same as the step described in the foregoing embodiment. Details are not described herein.

S803. The network device obtains an error of a parameter of a first hidden layer of the second neural network before and after the parameter of the second neural network is updated.

For example, the network device may obtain an error before and after a connection weight and an offset value of each neuron in the first hidden layer of the second neural network are updated.

S804. The network device sends the error of the parameter of the first hidden layer of the second neural network to the terminal.

Correspondingly, the terminal may receive the error of the parameter of the first hidden layer of the second neural network from the network device.

S805. The terminal updates the parameter of the first neural network based on the error of the parameter of the first hidden layer of the second neural network.

Optionally, the terminal may update the parameter of the first neural network based on a backpropagation algorithm and the error of the parameter of the first hidden layer of the second neural network.

It should be noted that, if the terminal needs to consider binary representation when outputting the CNI by using the first neural network, the terminal needs to perform discrete sampling processing on the error of the parameter of the first hidden layer of the second neural network when updating the parameter of the first neural network based on the backpropagation algorithm and the error of the parameter of the first hidden layer of the second neural network. For example, a Gumbel-Softmax estimator may be used to ensure gradient backpropagation from the network device to the terminal.

It may be understood that, in this embodiment, the terminal needs to update the parameter of the first neural network based on the error of the parameter of the first hidden layer of the second neural network before and after the network device updates the parameter of the second neural network. Therefore, a time at which the network device updates the parameter of the second neural network needs to be before a time at which the terminal updates the parameter of the first neural network.

Compared with the manner in which the terminal updates the parameter of the first neural network based on the decision revenue and the network device updates the parameter of the second neural network based on the decision revenue in the foregoing embodiment, a manner of updating the parameter of the first neural network may be simplified in this embodiment.

Optionally, in this embodiment of this application, when the first neural network and the second neural network are obtained through training, the first neural network and the second neural network may be trained with reference to the manner of updating the parameters of the first neural network and the second neural network in any one of the foregoing embodiments.

In some possible designs, the first objective function in the foregoing embodiment may alternatively be implemented based on a value function. For example, the first objective function may be implemented by using the following value function:

$$J(\theta) = \mathbb{E}_{\pi_\theta(s,a)}[R(s,a) - Q(s,a)]^2 \ .$$

Herein, $J(\theta)$ represents the first objective function; $\theta$ represents the parameter of the first neural network; $s$ represents the channel matrix of the downlink channel obtained through measurement estimation by the terminal; a represents the CNI that corresponds to the downlink channel and that is determined by the terminal by using the first neural network; R(s, a) represents the decision revenue sent by the network device to the terminal, for example, may be the decision bit rate, the throughput, or the like in the foregoing embodiment; Q(s, a) is an action value function, which represents an approximation to a value of selecting a (the CNI that corresponds to the downlink channel and that is determined by the terminal by using the first neural network) under s (the channel matrix of the downlink channel obtained through measurement estimation by the terminal); and $\mathbb{E}_{\pi_\theta(s,a)}$ represents an expectation of all values. When the parameter of the first neural network is updated based on the first objective function, an optimization objective (or may be referred to as an update policy) may be minimization of the first objective function, so that a mean square error between the action value function Q(s, a) and the decision revenue R(s, a) is minimized.

Similarly, the second objective function in the foregoing embodiment may also be implemented based on a value function. For example, the second objective function may also be implemented by using the following value function:

$$J(\theta) = \mathbb{E}_{\pi_\theta(s,a)}[R(s,a) - Q(s,a)]^2.$$

Different from the first objective function, in the second objective function, J(θ) represents the second objective function; θ represents the parameter of the second neural network; s represents the CNI that corresponds to the downlink channel and that is received by the network device; a represents the MCS that corresponds to the downlink channel and that is determined by the network device by using the second neural network; R(s, a) represents the decision revenue that corresponds to the MCS and that is obtained by the network device; Q(s, a) is an action value function, which represents an approximation to a value of selecting a (the MCS that corresponds to the downlink channel and that is determined by the network device by using the second neural network) under s (the CNI that corresponds to the downlink channel and that is received by the network device); and $\mathbb{E}_{\pi_\theta(s,a)}$ represents an expectation of all values. When the parameter of the second neural network is updated based on the second objective function, an optimization objective (or may be referred to as an update policy) may also be minimization of the second objective function, so that a mean square error between the action value function Q(s,a) and the decision revenue R(s, a) is minimized.

It should be noted that, in this embodiment of this application, the first objective function and the second objective function that are based on the policy function, or the first objective function and the second objective function that are based on the value function are examples for description. Specific types of the first objective function and the second objective function are not limited in this application.

In conclusion, in this embodiment of this application, a task-oriented channel information feedback quantity is trained in a reinforcement learning manner, and is defined as the channel negotiation information (Channel Negotiation Information, CNI), so that in a channel information feedback process, the terminal and the network device can dynamically adjust the mapping relationship between the measured channel matrix and the MCS based on distribution of current channel information (that is, based on the decision revenue corresponding to the MCS).

Task-oriented channel information feedback means that the network device provides prior information for the terminal based on a task requirement of the network device, and the terminal may perform compressive feedback on the current channel information in a targeted manner when there is the prior information. In this embodiment of this application, the prior information is the decision revenue or the error of the first hidden layer of the second neural network.

It may be understood that, compared with conventional CSI feedback, the CNI is conceptually the same as CSI, and the CNI and the CSI are both quantization of channel information. However, in implementation of feedback, a mapping between channel information and CSI and a mapping between CSI and an MCS are fixed in an existing standard. In this embodiment of this application, reward information (the decision revenue or the error of the first hidden layer of the second neural network) fed back by the network device is received in a process of updating the first neural network. The reward information may be understood as prior information of MCS distribution of the network device, so that quantization of the channel information by the terminal is adjusted. Therefore, information entropy included in the CNI is less than information entropy included in the CSI, and is equivalent to higher precision under a constraint of a same quantity of bits.

Optionally, based on the channel information feedback method in the foregoing embodiment, an embodiment of this application further provides a channel information feedback method. In the channel information feedback method, before the terminal updates the parameter of the first neural network and the network device updates the parameter of the second neural network, the terminal may obtain a restored channel matrix based on the CNI corresponding to the downlink channel. For example, a restoration network may be further deployed in the terminal. In the terminal, the first neural network may be used as a coding network to output, based on the channel matrix of the downlink channel obtained through measurement estimation, the CNI corresponding to the downlink channel. The restoration network may output the restored channel matrix based on the CNI corresponding to the downlink channel. Then, the terminal may update the parameter of the first neural network based on the channel matrix of the downlink channel obtained through measurement estimation, the restored channel matrix, and a third objective function.

The third objective function may be as follows:

$$J(\theta, \xi) = \mathbb{E}||H - g(f(H;\theta);\xi)||^2 \ .$$

Herein, $J(\theta,\xi)$ represents the third objective function; $\theta$ is the parameter of the first neural network; $\xi$ is a parameter of the restoration network; H represents the channel matrix of the downlink channel obtained through measurement estimation by the terminal; $f(\cdot\ ;\theta)$ represents the first neural network, which may be used as an encoder to perform compressive quantization on H; $f(H;\theta)$ represents quantization information obtained after the terminal performs compressive quantization on H by using f, that is, the CNI corresponding to the downlink channel; $g(\cdot\ ;\xi)$ represents the restoration network, which may be used as a decoder to restore $f(H;\theta)$; and $g(f(H;\theta);\xi)$ represents the restored channel matrix obtained after the terminal restores $f(H;\theta)$ by using $g(-\ ;\xi)$.

The third objective function may be used to indicate to minimize an error between the channel matrix of the downlink channel obtained through measurement estimation and the restored channel matrix.

For example, the error may be a minimum mean square error. The terminal may adjust the connection weight and the offset value of each neuron in the first neural network based on the third objective function, so that a minimum mean square error between the channel matrix of the downlink channel obtained through measurement estimation and the restored channel matrix is minimized.

Optionally, in this embodiment of this application, an update step for updating the first neural network based on the third objective function is far greater than an update step for updating the first neural network based on the first objective function and an update step for updating the second neural network based on the second objective function, to ensure that a measurement gradient can track a Markov chain change. For example, the update step for updating the first neural network based on the first objective function and the update step for updating the second neural network based on the second objective function may be 10-5. The update step for updating the first neural network based on the third objective function needs to be far greater than the foregoing value 10-5, for example, may be 10-2. However, it should be noted that, in this application, specific sizes of the update step for updating the first neural network based on the third objective function, the update step for updating the first neural network based on the first objective function, and the update step for updating the second neural network based on the second objective function are not limited. The foregoing values of the update steps are merely examples for description.

A measurement, feedback, and control framework that is provided in this embodiment of this application and that applies an AI technology such as reinforcement learning to a communications system is not limited to measurement and feedback of the downlink channel, and is also applicable to another application scenario. Mutual communication between entities is not limited to communication between the terminal and the network device, and may be communication between terminals or communication between network devices. For network entities that communicate with each other, a first entity may provide prior information for a second entity based on a task requirement of the first entity, and the second entity performs compressive feedback on current channel information based on the prior information.

An embodiment of this application provides another channel information feedback method, which is applied to a wireless mesh network (Wireless Mesh Network), which is also referred to as a "multi-hop" network.

In the wireless mesh network, any wireless device node can serve as both an access point and a router. Each node in the network can send and receive signals, thereby reducing impact of node failure and interference on overall network operation. Because the wireless mesh network is in a mesh topology structure, nodes need to interact to implement a dynamic configuration function, to select an optimal transmission path for a service. In addition, in the wireless mesh network, a plurality of tasks with different quality of service requirements may be performed, such as a voice service and a data service, and an optimal path may be determined based on different task requirements.

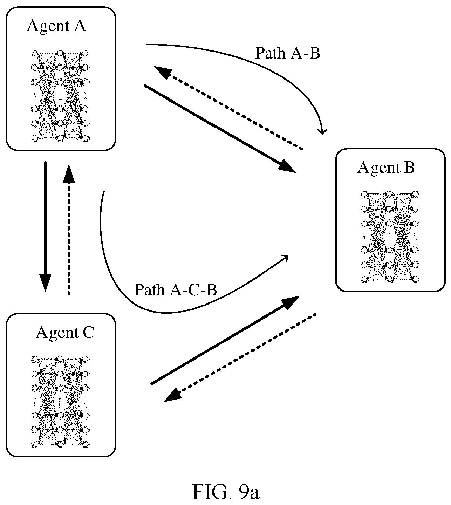

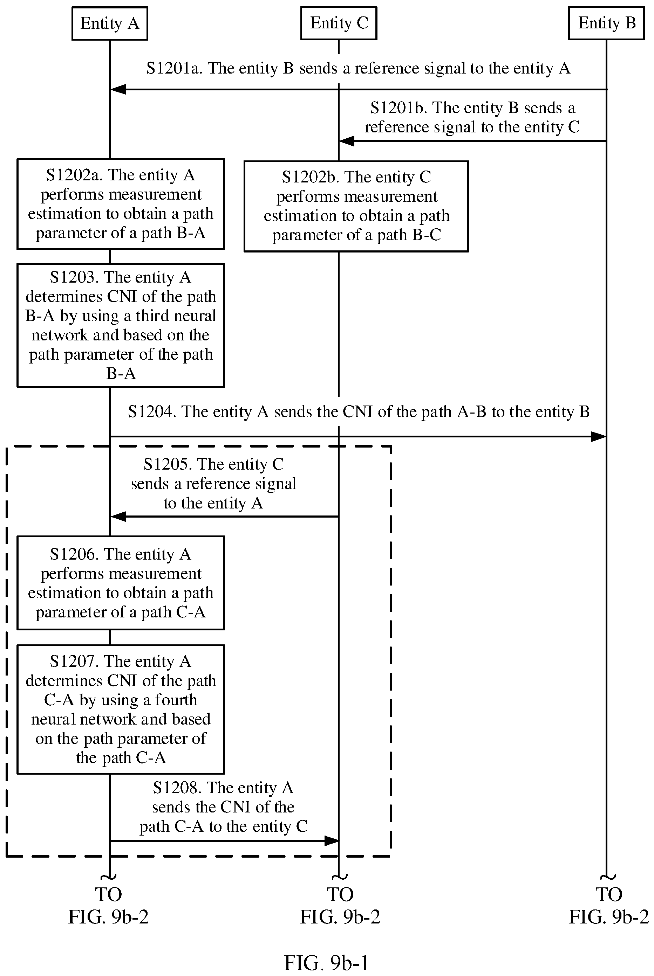

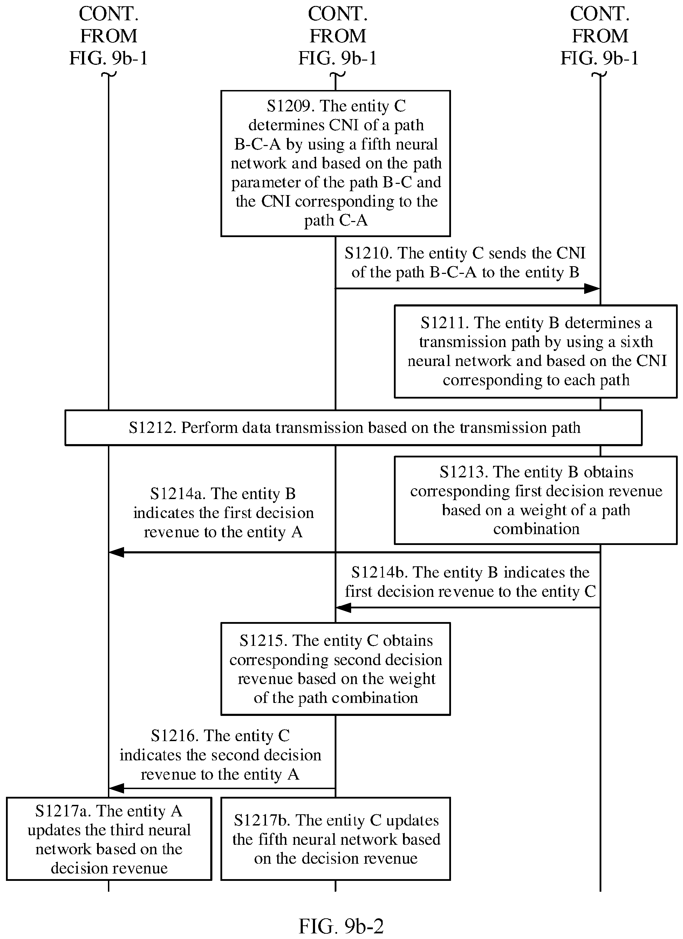

The following disclosure associated with figures 9a-12 is not claimed.

The following uses transmission of a wireless mesh network including three nodes as an example for description. FIG. 9a is a diagram of an application scenario of a path information feedback method according to an embodiment of this application. As shown in FIG. 9a, when an entity A needs to send information to an entity B to complete a task with a specific quality of service requirement at the entity B, the entity A may directly send the information to the entity B, or may use an entity C as a forwarding node to forward the information to the entity B, thereby adjusting efficiency of the wireless mesh network. That is, in the network, there are two paths, which are respectively a path A-B and a path A-C-B. During transmission by using each path, a network entity in the path may use a neural network deployed in the network entity to compress, based on the task requirement and prior information, the information that needs to be transmitted. In FIG. 9a, a solid line arrow represents transmission of compressed path information, and a dashed line represents transmission of information such as decision revenue.

As shown in FIG. 9b-1 and FIG. 9b-2, FIG. 9b-1 and FIG. 9b-2 are a schematic interaction diagram of a path information feedback method according to an embodiment of this application. The path information feedback method is applicable to the application scenario shown in FIG. 9a. The entities A, B, and C are all agents.

S1201a. The entity B sends a reference signal to the entity A, and correspondingly, the entity A receives the reference signal sent by the entity B.

In a possible implementation, the reference signal may be a CSI-RS.

S1201b. The entity B sends a reference signal to the entity C, and correspondingly, the entity A receives the reference signal sent by the entity C.

In a possible implementation, the reference signal may be a CSI-RS.

S1202a. The entity A performs measurement estimation to obtain a path parameter of a path B-A.

The path parameter includes but is not limited to a channel matrix, a bit error rate, and a routing hop count of the path B-A.

The channel matrix of the path B-A is obtained through measurement estimation based on the reference signal after the entity A receives the reference signal. The bit error rate is calculated by measuring accuracy of downlink data transmission in a specific time. The channel matrix may be used to evaluate short-term channel quality, and the bit error rate may be used to evaluate long-term channel quality.

The routing hop count is calculated based on network topology information of the wireless mesh network. Specifically, the topology information of the WMN network may be stored on each node, and all nodes uniformly update the network topology information of the WMN whenever the topology structure changes (an increase or a decrease in nodes, or whether nodes can communicate with each other). When a transmit end and a receive end are determined, each node may estimate network topology information of the node.

In a possible implementation, with reference to a setting in the Routing Information Protocol (Routing Information Protocol, RIP), the routing hop count may be defined as a quantity of routers passed through from the transmit end to the receive end. In the scenario shown in FIG. 9a, there are two paths: A-B and A-C-B. For the path A-B, a routing hop count provided by A is 1. For the path A-C-B, a routing hop count provided by A is 2, and a routing hop count provided by C is 1. For another example, it is assumed that there are five paths: A-C-B, A-C-D-B, A-D-C-B, A-D-B, and A-B. Routing hop counts estimated by nodes in the path A-D-C-B are respectively A: 3, D: 2, and C: 1. Routing hop counts estimated by nodes in the path A-D-B are respectively A: 2, and D: 1.

S1202b. The entity C performs measurement estimation to obtain a path parameter of a path B-C.

The path parameter includes but is not limited to a channel matrix, a bit error rate, and a routing hop count of the path B-C.

The channel matrix of the path B-C is obtained through measurement estimation based on the reference signal after the entity C receives the reference signal. The bit error rate of each path is calculated by measuring accuracy of downlink data transmission in a specific time. The routing hop count is obtained based on the network topology information.

It should be noted that a sequence of steps S1201a and S1202a and steps S1201b and S1202b is not limited in this application.

S1203. The entity A determines CNI of the path B-A by using a third neural network and based on the path parameter of the path B-A.

The third neural network may be obtained by performing reinforcement learning training by using a sample path parameter as input and sample CNI as output. The terminal may input the path parameter of the path B-C obtained through measurement estimation into the third neural network, and the third neural network may output the CNI of the path B-A (CNI_BA represents the CNI from the entity B to the entity A).

The CNI of the path B-A may be specifically information obtained by compressing parameter information of the path B-A based on a requirement of a task performed by the entity B.

S1204. The entity A sends the CNI of the path B-A to the entity B, and correspondingly, the entity B receives the CNI of the path B-A sent by the entity A.

S1205. The entity C sends a reference signal to the entity A, and correspondingly, the entity A receives the reference signal sent by the entity C.

In a possible implementation, the reference signal may be a CSI-RS.

S1206. The entity A performs measurement estimation to obtain a path parameter of a path C-A.

The path parameter includes but is not limited to a channel matrix, a bit error rate, and a routing hop count of the path C-A.

The channel matrix of the path C-A is obtained through measurement estimation based on the reference signal after the entity A receives the reference signal.

The bit error rate is calculated by measuring accuracy of downlink data transmission in a specific time.

The routing hop count is calculated based on the network topology information of the wireless mesh network. S1207. The entity A determines CNI of the path C-A by using a fourth neural network and based on the path parameter of the path C-A.

The fourth neural network may be obtained by performing reinforcement learning training by using a sample path parameter as input and sample CNI as output. The terminal may input the path parameter of the path C-A obtained through measurement estimation into the fourth neural network, and the fourth neural network may output the CNI of the path C-A (CNI_CA represents the CNI from the entity C to the entity A).

The CNI of the path C-A may be specifically information obtained by compressing parameter information of the path C-A based on a requirement of a task performed by the entity B.

S1208. The entity A sends the CNI of the path C-A to the entity C, and correspondingly, the entity C receives the CNI of the path C-A sent by the entity A.

It should be noted that steps S1205 to S1208 may be performed after, before, or when steps S1201a to S1204 are performed. This is not limited in this application.

S1209. The entity C determines CNI of a path B-C-A by using a fifth neural network and based on the path parameter of the path B-C and the CNI corresponding to the path C-A.

The fifth neural network may be obtained by performing reinforcement learning training by using a sample path parameter as input and sample CNI as output. The entity C may input the path parameter of the path B-C obtained through measurement estimation and the received CNI corresponding to the path C-A into the fifth neural network, and the fifth neural network may output the CNI of the path B-C-A (CNI_BCA represents the CNI from the entity B to the entity A through the entity C).

The CNI of the path B-C-A may be specifically compressed information obtained by integrating parameter information of the path B-C and the received CNI information of the path A-C based on a requirement of a task performed by the entity B.

S1210. The entity C sends the CNI of the path B-C-A to the entity B, and correspondingly, the entity B receives the CNI of the path B-C-A sent by the entity C.

S1211. The entity B determines a transmission path by using a sixth neural network and based on the CNI corresponding to each path.

The sixth neural network may be obtained by performing reinforcement learning training by using a sample path parameter as input and a sample scheduling decision as output. The entity B may input the CNI (for example, CNI_BA and CNI BCA) of each path into the sixth neural network, and the sixth neural network may output a scheduling decision, for example, a path selected by the entity B, a weight of a path combination, or a precoding matrix.

The precoding matrix is a precoding matrix of multiuser precoding for distributed (multi-path) channel feedback, and is used to allocate transmit power and a transmission rate, to obtain optimal performance.

S1212. The entity B performs data transmission based on the determined transmission path.

Specifically, the entity B separately sends data to the entity A and/or the entity C based on the weight of the path combination, and receives an ACK or a NACK with which the entity A and/or the entity C reply/replies to the entity B.

For example, overall data sent by the entity B is Data, which is divided into Data 1 and Data 2 based on the path weight. The entity B sends Data 1 to the entity A, and receives an ACK_AB or a NACK_AB sent by the entity A. The entity B sends Data 2 to the entity C, and the entity C forwards Data 2 to the entity A. The entity C receives an ACK_AC or a NACK_AC sent by the entity A, and returns an ACK_CB or a NACK_CB to the entity B. It should be noted that Data 1 or Data 2 may be null. For example, that Data 1 is null means that the entity B does not send data to the entity A by using the path B-A, and the overall data Data is all sent by using the path B-C-A.

S1213. The entity B obtains, based on the transmission path, first decision revenue corresponding to the transmission path.

Specifically, the entity B obtains, based on the ACK or the NACK with which the entity A and/or the entity C reply/replies, the first decision revenue corresponding to the transmission path.

The first decision revenue includes but is not limited to one or more of the following: a throughput, a channel capacity, and power consumption. A calculation criterion of the first decision revenue is related to a specific task performed by the entity B. In a possible implementation, the task is to maximize a performance indicator in a specific scenario (for example, a voice service) by determining a weight of a path combination. In this case, a calculation criterion of decision revenue of the weight of the path combination may have the following relationship:

It is assumed that the throughput is T, the power consumption is P, and $\alpha, \beta \geq 0$ are respectively requirement weights of a routing hop count H and a bit error rate E (or another performance indicator such as a delay or bandwidth) that are corresponding to the task. A weight of a path combination of a decision is set to $\lambda_i$, where i represents a path that may be selected, and $\sum \lambda_i = 1$. In this case, total task decision revenue $R_1$ may be defined as:

$$R_1 = \sum_i \lambda_i [(T_i - P_i) - (\alpha_i H_i + \beta_i E_i)].$$

The throughput refers to a volume of data successfully transmitted in a unit time. The channel capacity refers to a minimum upper bound of a reachable rate for reliable transmission in a channel. The power consumption refers to an amount of energy consumed by a device in a unit time. The throughput, the channel capacity, the power consumption, and the like may be calculated based on the selected path, channel matrix information, power consumption of a router in the path, and the like.

In another possible implementation, the task is to determine an optimal path of a transmission service, and maximize a balanced performance indicator in a diverse communication scenario (a voice service and a data service), thereby satisfying quality requirements of different services. For the foregoing task, a calculation criterion of decision revenue may have the following relationship:

$$R_2 = \mathbb{E} \sum_{n}^{N} [(T_n(i) - P_n(i)) - (\alpha_n H_n(i) + \beta_n E_n(i))].$$

Herein, $R_2$ is average revenue of N rounds of task decisions on which statistics are collected; a path i is a specific path selected each time for the task; $T_n(i)$ is a throughput corresponding to the path i selected for an $n^{th}$ time; $P_n(i)$ is power consumption corresponding to the path i selected for the $n^{th}$ time; and $\alpha_n$, $\beta_n \geq 0$ are respectively requirement weights of a routing hop count $H_n(i)$ and a bit error rate $E_n(i)$ (or another performance indicator such as a delay or bandwidth) that are corresponding to the task and for an $n^{th}$ selection.

In the task, CNI is path parameter information obtained by performing adaptive compression on the path parameter information based on a change of the communication scenario and a change of the network topology structure, to achieve best quality of different services.

In a possible implementation, the entity B updates the sixth neural network based on the obtained first decision revenue. Specifically, the entity B updates a parameter of the sixth neural network based on the first decision revenue and an objective function. The parameter of the sixth neural network may refer to a connection weight and an offset value of each neuron in the sixth neural network. For a form of the objective function, refer to various possible forms of the first objective function or the second objective function described above. R(s, a) in the first objective function and the second objective function may be replaced with $R_1$ or $R_2$ based on an actual task requirement. Details are not described herein.

S1214a. The entity B indicates the first decision revenue to the entity A, and correspondingly, the entity A obtains the first decision revenue indicated by the entity B.

S1214a. The entity B indicates the first decision revenue to the entity C, and correspondingly, the entity C obtains the first decision revenue indicated by the entity B.

S1215. The entity C obtains second decision revenue based on the transmission path.

Specifically, when the transmission path determined by the entity B includes the entity C, the entity C obtains the second decision revenue.

The second decision revenue includes but is not limited to one or more of the following: a throughput, a channel capacity, and power consumption. A calculation criterion of the second decision revenue is similar to the calculation criterion of the first decision revenue. A difference lies in that a throughput, power consumption, and the like after paths are combined are considered in the first decision revenue, but only a throughput, power consumption, and the like of the path C-A are considered in the second decision revenue.

S1216. The entity C indicates the second decision revenue to the entity A, and correspondingly, the entity A obtains the second decision revenue indicated by the entity C.

S1217a. The entity A updates the neural network based on the decision revenue.

In a possible implementation, the entity A updates the third neural network based on the first decision revenue. Specifically, the entity A updates the third neural network based on the first decision revenue and an objective function. For a form of the objective function, refer to various possible forms of the first objective function or the second objective function described above. R(s, a) in the first objective function and the second objective function may be replaced with $R_1$ or $R_2$ based on an actual task requirement. Details are not described herein.

In a possible implementation, the entity A updates the fourth neural network based on the first decision revenue and the second decision revenue. Specifically, the entity A updates the fourth neural network based on the first decision revenue, the second decision revenue, and an objective function. For a form of the objective function, refer to various possible forms of the first objective function or the second objective function described above. R(s, a) in the first objective function and the second objective function may be replaced with a combination of the first decision revenue and the second decision revenue based on an actual task requirement. The combination of the first decision revenue and the second decision revenue may be a result of combining the first decision revenue and the second decision revenue based on an actual requirement by the entity A. For example, the first decision revenue and the second decision revenue are respectively multiplied by specific weights to obtain combined decision revenue.

S1217b. The entity C updates the fifth neural network based on the decision revenue.

The entity C updates the fifth neural network based on the first decision revenue and the second decision revenue. Specifically, the entity C updates the fifth neural network based on the first decision revenue, the second decision revenue, and an objective function. For a form of the objective function, refer to various possible forms of the first objective function or the second objective function described above. R(s, a) in the first objective function and the second objective function may be replaced with a combination of the first decision revenue and the second decision revenue based on an actual task requirement. The combination of the first decision revenue and the second decision revenue may be a result of combining the first decision revenue and the second decision revenue based on an actual requirement by the entity C. For example, the first decision revenue and the second decision revenue are respectively multiplied by specific weights to obtain combined decision revenue. Details are not described herein.

In the method shown in FIG. 12, the entity A and the entity C receive the reference signal of the entity B, perform measurement estimation to obtain the path parameters of the paths B-A and C-A, compress, by using the neural network and based on different task requirements, the path parameters to obtain corresponding channel negotiation information CNI, and feed back the CNI of different paths (the paths B-A and B-C-A) to the entity B, so that the entity B makes a scheduling decision by using the neural network and based on the CNI of different paths, determines the transmission path, performs data transmission, and calculates the decision revenue. The entities A, B, and C update the neural networks based on the decision revenue. Different task requirements are considered in calculation of the decision revenue, so that the neural network at each entity performs adaptive compression on the path parameters based on the task requirements. In this way, the transmission path is selected based on the actual task requirement, and overheads of path information feedback are reduced.

An embodiment of this application provides still another channel information feedback method, which is applied to coordinated multi-point (Coordinated Multi-Point, CoMP) transmission, including joint processing (joint processing, JP) coordinated multi-point (JP-CoMP) transmission and coordinated scheduling (coordinated scheduling, CS)/coordinated beamforming (coordinated beamforming, CB) coordinated multi-point (CS/CB-CoMP) transmission.

A characteristic of a CoMP technology is that adjacent network devices serve one terminal at the same time, to increase a data rate of a user, improve performance of an edge terminal, and improve overall performance of a system, which is a multi-cell multiuser MIMO system. For JP-CoMP, all network devices in a coordinated cell have a same data packet sent by the terminal, and data information and channel information need to be shared between the network devices. For example, in non-coherent joint transmission (Non-coherent Joint Transmission, NCJT), the network devices send data at different layers to the terminal. For CS/CB-CoMP, each terminal transmits data with only one network device at the same time. Therefore, data information does not need to be shared, but channel information needs to be shared. Implementation of JP-CoMP requires a reduction in a frequency reuse rate of the coordinated cell. CS/CB-CoMP makes a limited improvement to the edge terminal, and only reduces interference but does not obtain an additional diversity gain.

If the plurality of network devices and the terminal are all agents, the foregoing two CoMP systems may be considered as having different degrees of feedback content interaction between the agents. To combine advantages of the two solutions, the reinforcement learning training method provided in the embodiments of this application may be used to implement adaptive adjustment of the two transmission manners by adjusting interaction signaling, to reduce backhaul (backhaul) overheads of interaction between the network devices and communication overheads between each network device and the terminal.

The following uses three agents shown in FIG. 10a as an example for description. FIG. 10a is a diagram of an application scenario of a path information feedback method according to an embodiment of this application. Entities D and E are network devices, and are responsible for a transmission task for a same terminal. The network devices may be grouped into a same cluster (cluster). Different from information fed back to the terminal, fed back CNI information exchanged in the cluster not only includes compressed channel information received from the terminal, but also may include decision information, a decision reward, and the like related to a specific task. Decision information including data information is JP-CoMP, and decision information that does not include data information is CS/CB-CoMP. An entity F is a terminal, and the entity F uses a neural network to compress channel information to obtain corresponding CNI, and feeds back the CNI. In this scenario, a task objective is to maximize downlink transmission performance for the terminal through coordination between the network devices. In FIG. 10a, 300 represents interaction of compressed path information in the cluster. In a downlink communication scenario, 200 represents transmission of the compressed path information, and 100 represents feedback of information such as decision revenue. In an uplink communication scenario, 100 represents transmission of decision information, and 200 represents feedback of information such as decision revenue.

As shown in FIG. 10b-1 and FIG. 10b-2, FIG. 10b-1 and FIG. 10b-2 are a schematic interaction diagram of a path information feedback method according to an embodiment of this application. The path information feedback method is applicable to the application scenario shown in FIG. 10a. The entities D, E, and F are all agents.

S1301. The entity D sends a reference signal to the entity F, and correspondingly, the entity F receives the reference signal sent by the entity D.

In a possible implementation, the reference signal may be a CSI-RS.

S1302. The entity F performs measurement estimation to obtain a path parameter of a path D-F.

The path parameter includes but is not limited to a channel matrix of the path D-F, a location of the entity F, a cell or a sector to which the entity F belongs, and an antenna gain of a direct link.

The channel matrix of the path D-F is obtained through measurement estimation based on the reference signal after the entity F receives the reference signal. The location of the entity F and the cell or the sector to which the entity F belongs may be obtained by using a positioning service of the entity F. The antenna gain of the direct link refers to a capability of an antenna to transmit and receive signals in a specific direction, and may be provided by the network device.

S1303. The entity F determines CNI of the path D-F by using a seventh neural network and based on the path parameter of the path D-F.

The seventh neural network may be obtained by performing reinforcement learning training by using a sample path parameter as input and sample CNI as output. The entity F may input the path parameter of the path D-F obtained through measurement estimation into the seventh neural network, and the seventh neural network may output the CNI of the path D-F (CNI_DF represents the CNI from the entity D to the entity F).

The CNI of the path D-F may be specifically feedback information obtained by effectively compressing the path parameter obtained through measurement estimation for a task requirement of a network device end.

S1304. The entity F sends the CNI of the path D-F to the entity D, and correspondingly, the entity D receives the CNI of the path D-F sent by the entity F.

S1305. The entity E sends a reference signal to the entity F, and correspondingly, the entity F receives the reference signal sent by the entity E.

In a possible implementation, the reference signal may be a CSI-RS.

S1306. The entity F performs measurement estimation to obtain a path parameter of a path E-F.

The path parameter includes but is not limited to a channel matrix of the path E-F, the location of the entity F, the cell or the sector to which the entity F belongs, and an antenna gain of a direct link.

The channel matrix of the path E-F is obtained through measurement estimation based on the reference signal after the entity F receives the reference signal. The location of the entity F and the cell or the sector to which the entity F belongs may be obtained by using the positioning service of the entity F. The antenna gain of the direct link refers to a capability of an antenna to transmit and receive signals in a specific direction, and may be provided by the network device.

S1307. The entity F determines CNI of the path D-F by using a seventh neural network and based on the path parameter of the path D-F.

The eighth neural network may be obtained by performing reinforcement learning training by using a sample path parameter as input and sample CNI as output. The entity F may input the path parameter of the path D-F obtained through measurement estimation into the eighth neural network, and the eighth neural network may output the CNI of the path E-F (CNI_DF represents the CNI from the entity E to the entity F).

The CNI of the path E-F may be specifically feedback information obtained by effectively compressing the path parameter obtained through measurement estimation for the task requirement of the network device end.

S1308. The entity F sends the CNI of the path E-F to the entity E, and correspondingly, the entity E receives the CNI of the path E-F sent by the entity F.

It should be noted that a sequence of steps S1301 to S1304 and steps S1305 to S1308 is not limited in this application. That is, steps S1305 to S1308 may be performed before steps S1301 to S1304, or may be performed simultaneously with steps S1301 to S1304. In a possible implementation, the entity F first interacts with an entity serving the location of the entity F, or first interacts with an entity corresponding to the cell or the sector to which the entity F belongs.

S1309. The entity D determines CNI of a path D-E by using a ninth neural network and based on the CNI of the path D-F and a result of a transmission decision of a previous round.

The ninth neural network is a neural network that serves communication, and may also be referred to as an interactive neural network or a communication neural network.

The entity D may input the received CNI of the path D-F and the result of the transmission decision of the previous round into the ninth neural network, and the ninth neural network may output the CNI of the path D-E (CNI_DE represents the CNI from the entity D to the entity E).

The transmission decision of the previous round may be a transmission decision made by the entity D in a period of time before a current decision, and may be specifically a data table record of a specific length. When a first decision is made, the transmission decision of the previous round is null.

The CNI of the path D-E may be specifically a result of compressing the received CNI and transmission decision information of the previous round for a task objective of optimizing transmission performance for the terminal.

S1310. The entity E determines CNI of a path E-D by using a tenth neural network and based on the CNI of the path E-F and a result of a transmission decision of a previous round.

The tenth neural network is a neural network that serves interactive communication, and may also be referred to as an interactive neural network or a communication neural network.

The entity E may input the received CNI of the path E-F and the result of the transmission decision of the previous round into the tenth neural network, and the ninth neural network may output the CNI of the path E-D (CNI_ED represents the CNI from the entity E to the entity D).

The transmission decision of the previous round may be a transmission decision made by the entity E in a period of time before a current decision, and may be specifically a data table record of a specific length. When a first decision is made, the transmission decision of the previous round is null.

The CNI of the path E-D may be specifically a result of compressing the received CNI and transmission decision information of the previous round for a task objective of optimizing transmission performance for the terminal.

S1311. The entity D sends the CNI of the path D-E to the entity E, and correspondingly, the entity E receives the CNI of the path E-D sent by the entity D.

S1312. The entity E sends the CNI of the path E-D to the entity D, and correspondingly, the entity E receives the CNI of the path E-D sent by the entity D.

It should be noted that a sequence of steps S1311 and S1312 is not limited in this application.

S1313. The entity D determines a transmission decision by using an eleventh neural network and based on the CNI of the path D-F and the CNI of the path E-D.

The eleventh neural network is a neural network that serves a task policy, and may also be referred to as a policy network or an action network. The eleventh neural network may be obtained by performing reinforcement learning training by using sample CNI as input and a sample transmission decision as output.

The entity D may input the received CNI of the path D-F and the received CNI of the path E-D into the eleventh neural network, and the eleventh neural network may output the transmission decision. A result of the transmission decision may include using a JP-CoMP manner or a CS/CB-CoMP manner. A decision of using JP-CoMP further includes a precoding matrix. The precoding matrix is used to allocate transmit power and a transmission rate, to achieve the task objective of optimizing the transmission performance for the terminal. A decision of using the CS/CB-CoMP manner further includes: determining whether the entity D performs data transmission with the entity F.

S1314. The entity E determines a transmission decision by using a twelfth neural network and based on the CNI of the path E-F and the CNI of the path D-E.

The twelfth neural network is a neural network that serves a scheduling policy, and may also be referred to as a policy network or an action network. The twelfth neural network may be obtained by performing reinforcement learning training by using sample CNI as input and a sample transmission decision as output.

The entity E may input the received CNI of the path E-F and the received CNI of the path D-E into the twelfth neural network, and the twelfth neural network may output the transmission decision. A result of the transmission decision may include using a JP-CoMP manner or a CS/CB-CoMP manner. A case of using JP-CoMP further includes a precoding matrix. The precoding matrix is used to allocate transmit power and a transmission rate, to achieve the task objective of optimizing the transmission performance for the terminal. A decision of using the CS/CB-CoMP manner further includes: determining whether the entity E performs data transmission with the entity F.

It should be noted that, after steps S 1311 and S 1312 are completed, a timer manner may be used to output the transmission decision results at the same time.

S1315. The entity D performs data transmission with the entity F based on a transmission policy.

For example, the entity D sends data Data_DF to the entity F, the entity F sends an ACK_FD or a NACK_FD to the entity D after receiving the data Data_DF, and the entity D receives the ACK_FD or the NACK_FD.

In a possible implementation, the transmission policy is using the CS/CB-CoMP manner, and the entity D does not perform data transmission with the entity F. In this case, step S1315 is omitted.

S1316. The entity E performs data transmission with the entity F based on a transmission policy.

For example, the entity E sends data Eata_EF to the entity F, the entity F sends an ACK_FE or a NACK_FE to the entity E after receiving the data Eata_EF, and the entity E receives the ACK_FE or the NACK_FE.

In a possible implementation, the transmission policy is using the CS/CB-CoMP manner, and the entity E does not perform data transmission with the entity F. In this case, step S1316 is omitted.

That the entity D and the entity E perform data transmission with the entity F based on the transmission policies in S1315 and S1316 includes: When a transmission policy decision result is the CS/CB-CoMP manner, an entity that determines to transmit data performs data transmission with the entity F, and the other entity does not perform data transmission with the entity F. In addition, the entity F and the entity that exchanges data with the entity F jointly determine whether to restart communication between the entity F and another entity, that is, to switch to the JP-CoMP manner.

S1317. The entity D obtains corresponding third decision revenue based on the transmission decision result.

In a possible implementation, the entity D obtains the corresponding third decision revenue based on a downlink/uplink transmission performance indicator and a criterion for maximizing a channel capacity. The third decision revenue includes but is not limited to one or more of the following: a system throughput, a channel capacity, and power consumption. In this case, a task objective of the entity D is to maximize downlink transmission performance for the terminal through coordination between the entity D and the entity E.

For example, it is assumed that the throughput is T, and the power consumption is P. A weight of a path combination of a decision is set to $\lambda_i$, where i represents a path that may be selected, and $\sum \lambda_i = 1$. In this case, total task decision revenue $R_1$ may be defined as:

$$R_3 = \sum \lambda_i \left[ (T_i - P_i) \right].$$

When the transmission policy decision result is the CS/CB-CoMP manner, only one path is used to transmit data.

A value of $\lambda_i$ may be 0 or 1, that is, $\lambda_i \in \{0,1\}$.

When the transmission policy decision result is the JP-CoMP manner, a plurality of paths may be used to transmit data. A value of $\lambda_i$ may be a value ranging from 0 to 1, that is, $\lambda_i \in (0,1)$.

S1318. The entity E obtains corresponding fourth decision revenue based on the transmission decision result.

In a possible implementation, the entity E obtains the corresponding fourth decision revenue based on a downlink/uplink transmission performance indicator and a criterion for maximizing a channel capacity. The fourth decision revenue includes but is not limited to one or more of the following: a system throughput, a channel capacity, and power consumption. In this case, a task objective of the entity E is to maximize downlink transmission performance for the terminal through coordination between the entity D and the entity E.

Optionally, the fourth decision revenue $R_3$ may be obtained by using the formula in S1317.

S1319. The entity D indicates the third decision revenue to the entity F, and correspondingly, the entity F obtains the third decision revenue indicated by the entity D.

In a possible implementation, the entity D sends information about the third decision revenue to the entity F.

S1320. The entity E indicates the fourth decision revenue to the entity F, and correspondingly, the entity F obtains the fourth decision revenue indicated by the entity E.

In a possible implementation, the entity E sends information about the fourth decision revenue to the entity F.

S1321. The entity D updates the ninth neural network and the eleventh neural network based on the obtained decision revenue.

Specifically, the entity D updates the ninth neural network and the eleventh neural network based on the third decision revenue and an objective function. For a form of the objective function, refer to various possible forms of the first objective function or the second objective function described above. R(s, a) in the first objective function and the second objective function may be replaced with $R_3$ based on an actual task requirement. Details are not described herein.

S1322. The entity E updates the tenth neural network and the twelfth neural network based on the obtained decision revenue.

Specifically, the entity D updates the ninth neural network and the eleventh neural network based on the third decision revenue and an objective function. For a form of the objective function, refer to various possible forms of the first objective function or the second objective function described above. R(s, a) in the first objective function and the second objective function may be replaced with $R_3$ based on an actual task requirement. Details are not described herein.

S1323. The entity F updates the seventh neural network and the eighth neural network based on the decision revenue.

After obtaining the third decision revenue and the fourth decision revenue that are indicated by the entity D and the entity E, the entity F updates the seventh neural network and the eighth neural network.

Specifically, the entity F updates the seventh neural network based on the third decision revenue and an objective function. For a form of the objective function, refer to various possible forms of the first objective function or the second objective function described above. R(s, a) in the first objective function and the second objective function may be replaced with $R_3$ based on an actual task requirement. The entity F updates the eighth neural network based on the fourth decision revenue and an objective function. For a form of the objective function, refer to various possible forms of the first objective function or the second objective function described above. R(s, a) in the first objective function and the second objective function may be replaced with $R_3$ based on an actual task requirement.

In a possible implementation, the seventh neural network and the eighth neural network are a same neural network.

In the channel information feedback method shown in FIG. 10b-1 and FIG. 10b-2, the terminal (the entity F) separately compresses the parameters of the two paths by using the neural networks and based on the reference signals of the network devices (the entities D and E) in the same cluster defined by the CoMP technology, and respectively feeds back the parameters of the two paths to the two network devices. The two network devices in the same cluster obtain, through interaction, a path parameter between a peer network device and the terminal and compressed information of a transmission decision of a previous round, respectively output the transmission decisions by using the neural networks, and perform data transmission with the terminal based on the transmission decisions. Subsequently, the neural networks are updated based on the decision revenue such as the system throughput, the channel capacity, and the power consumption. In this way, downlink transmission efficiency of the network devices for the terminal is improved through cooperative interaction between the network devices.

Another embodiment of this application provides a channel information feedback method in an uplink communication scenario. An uplink receiving CoMP scenario includes joint reception and coordinated scheduling. Joint reception means that a virtual antenna array may be formed through coordination between different network devices, thereby improving uplink signal receiving quality. Coordinated scheduling refers to coordination of scheduling decisions between network devices to reduce interference. A key point of the technology also lies in reducing transmission of a large amount of data between network devices. Similarly, channel information feedback in the present invention may be used to reduce communication overheads.

As shown in FIG. 11A and FIG. 11B, FIG. 11A and FIG. 11B are a schematic interaction diagram of a path information feedback method according to an embodiment of this application. The path information feedback method is applicable to the application scenario shown in FIG. 10a.

S1401. The entity F sends a reference signal to the entity D, and correspondingly, the entity D receives the reference signal sent by the entity F.

In a possible implementation, the reference signal may be a sounding reference signal (sounding reference signal, SRS).

S1402. The entity F sends a reference signal to the entity E, and correspondingly, the entity E receives the reference signal sent by the entity F.

In a possible implementation, the reference signal may be a sounding reference signal SRS.

A sequence of steps S1401 and S1402 is not limited in this application. Possibly, the entity F sends the reference signals, and the entity D and the entity E respectively receive the reference signals, to perform channel estimation.

S1403. The entity D performs measurement estimation to obtain a path parameter of a path F-D.

The path parameter may be a channel matrix between the entity F and the entity D. The entity D performs measurement estimation to obtain the channel matrix based on the SRS sent by the entity F.

S1404. The entity E performs measurement estimation to obtain a path parameter of a path F-E.

The path parameter may be a channel matrix between the entity F and the entity E. The entity D performs measurement estimation to obtain the channel matrix based on the SRS sent by the entity F.

S1405. The entity D determines CNI corresponding to a path D-E by using a thirteenth neural network and based on the path parameter of the path F-D and a result of a transmission decision of a previous round.

The thirteenth neural network may be obtained by performing reinforcement learning training by using a sample path parameter as input and sample CNI as output. The entity D may input the path parameter of the path F-D obtained through measurement estimation and the result of the transmission decision of the previous round into the thirteenth neural network, and the thirteenth neural network may output the CNI of the path D-E (CNI_DE represents the CNI from the entity D to the entity E).

Optionally, an input parameter of the thirteenth neural network further includes an observation parameter of the path D-E, that is, a process of interaction between the entity D and the entity E is further considered.

The CNI of the path D-E may be specifically feedback information obtained by effectively compressing the path parameter obtained through measurement estimation for a task requirement of a network device end.

S1406. The entity E determines CNI corresponding to a path E-D by using a fourteenth neural network and based on the path parameter of the path F-E and a result of a transmission decision of a previous round.

The fourteenth neural network may be obtained by performing reinforcement learning training by using a sample path parameter as input and sample CNI as output. The entity E may input the path parameter of the path F-E obtained through measurement estimation and the result of the transmission decision of the previous round into the fourteenth neural network, and the fourteenth neural network may output the CNI of the path E-D (CNI_ED represents the CNI from the entity F to the entity D).

Optionally, an input parameter of the fourteenth neural network further includes an observation parameter of the path E-D, that is, a process of interaction between the entity E and the entity D is further considered.

The CNI of the path E-D may be specifically feedback information obtained by effectively compressing the path parameter obtained through measurement estimation for the task requirement of the network device end.

S1407. The entity D sends the CNI of the path D-E to the entity E, and correspondingly, the entity D receives the CNI of the path D-E sent by the entity F.

S1408. The entity F sends the CNI corresponding to the path E-D to the entity E, and correspondingly, the entity E receives the CNI of the path E-D sent by the entity F.

S1409. The entity D determines a transmission decision by using a fifteenth neural network and based on the path parameter corresponding to the path F-D and the CNI corresponding to the path E-D.

The fifteenth neural network may be obtained by performing reinforcement learning training by using sample CNI as input and a sample transmission decision as output. The entity D may input the CNI corresponding to the path F-D output by the thirteenth neural network and the received CNI of the path E-D into the fifteenth neural network, and the fifteenth neural network may output the transmission decision.

The transmission decision may be an uplink scheduling decision, which is used to determine whether to send an uplink (uplink) scheduling grant (UL grant). In this case, one of the entity D and the entity E receives uplink data of the entity F. Alternatively, the uplink scheduling decision is used to determine a time-frequency resource, an MCS, and the like that are allocated in uplink scheduling. In this case, the entity D and the entity E jointly receive uplink data of the entity F.

S1410. The entity E determines a transmission decision by using a sixteenth neural network and based on the CNI corresponding to the path F-E and the CNI corresponding to the path D-E.

The sixteenth neural network may be obtained by performing reinforcement learning training by using sample CNI as input and a sample transmission decision as output. The entity D may input the CNI corresponding to the path D-E output by the fourteenth neural network and the received CNI of the path D-E into the fifteenth neural network, and the fifteenth neural network may output the transmission decision.

The transmission decision may be an uplink scheduling decision, which is used to determine whether to send an uplink (uplink) scheduling grant (UL grant). In this case, one of the entity D and the entity E receives uplink data of the entity F. Alternatively, the uplink scheduling decision is used to determine a time-frequency resource, an MCS, and the like that are allocated in uplink scheduling. In this case, the entity D and the entity E jointly receive uplink data of the entity F.

S1411. The entity D and the entity F perform data transmission based on the transmission decision.

For example, the entity D sends a UL grant to the entity F. The entity F transmits uplink data based on the received UL grant, and receives an ACK or a NACK fed back by the entity D. For example, the entity F sends data Data_FD to the entity D, and after receiving the data Data_FD, the entity D feeds back an ACK_DF or a NACK_DF to the entity F.

S1412. The entity F and the entity D perform data transmission based on the transmission decision.

For example, the entity E sends a UL grant to the entity F. The entity F transmits uplink data based on the received UL grant, and receives an ACK or a NACK fed back by the entity E. For example, the entity F sends data Data_FE to the entity E, and after receiving the data Data_FE, the entity E feeds back an ACK_EF or a NACK_EF to the entity F.

S1413. The entity D obtains corresponding fifth decision revenue based on an uplink scheduling result.

In a possible implementation, the entity D obtains the corresponding fifth decision revenue based on an uplink transmission performance indicator. The fifth decision revenue includes but is not limited to one or more of the following: a system throughput, a channel capacity, and power consumption. In this case, a task objective of the entity D is to optimize uplink transmission performance of the terminal through coordination between the entity D and the entity E.

For example, it is assumed that the throughput is T, and the power consumption is P. A weight of a path combination of a decision is set to $\lambda_i$, where i represents a path that may be selected, and $\sum \lambda_i = 1$. In this case, total task decision revenue $R_4$ may be defined as:

$$R_4 = \sum \lambda_i \left[ (T_i - P_i) \right].$$

When a transmission decision result is whether to send a UL grant, a value of $\lambda_i$ may be 0 or 1, that is, $\lambda_i \in \{0,1\}$.

When the transmission decision result is joint transmission of the entity D and the entity E, a value of $\lambda_i$ may be a value ranging from 0 to 1, that is, $\lambda_i \in (0,1)$. $\lambda_i$ may be obtained based on a time-frequency resource and an MCS that are allocated in uplink scheduling and that are determined by the transmission decision.

S1414. The entity E obtains corresponding sixth decision revenue based on an uplink scheduling result.

In a possible implementation, the entity E obtains the corresponding sixth decision revenue based on an uplink transmission performance indicator. The sixth decision revenue includes but is not limited to one or more of the following: a system throughput, a channel capacity, and power consumption. In this case, a task objective of the entity E is to optimize uplink transmission performance of the terminal through coordination between the entity D and the entity E.

Optionally, the sixth decision revenue $R_4$ may be obtained by using the formula in S1413.

S1415. The entity D updates the thirteenth neural network and the fifteenth neural network based on the obtained decision revenue.

Specifically, the entity D updates the thirteenth neural network and the fifteenth neural network based on the fifth decision revenue and an objective function. For a form of the objective function, refer to various possible forms of the first objective function or the second objective function described above. R(s, a) in the first objective function and the second objective function may be replaced with $R_4$ based on an actual task requirement. Details are not described herein.

S1416. The entity E updates the fourteenth neural network and the sixteenth neural network based on the obtained sixth decision revenue.

Specifically, the entity E updates the fourteenth neural network and the sixteenth neural network based on the sixth decision revenue and an objective function. For a form of the objective function, refer to various possible forms of the first objective function or the second objective function described above. R(s, a) in the first objective function and the second objective function may be replaced with $R_4$ based on an actual task requirement. Details are not described herein.

In the channel information feedback method shown in FIG. 11A and FIG. 11B, the terminal sends uplink reference signals to the network devices in the same cluster in the CoMP scenario. The network devices perform measurement estimation to obtain the path parameters between the network devices and the terminal based on the reference signals of the terminal, and compress the path parameters by using the neural networks, to obtain the CNI corresponding to the paths. The network devices in the same cluster exchange the CNI of the paths, respectively output the transmission decisions by using the neural networks and based on the CNI obtained and received by the network devices, send an uplink transmission grant to the terminal based on the transmission decision result, and update the neural networks based on the decision revenue such as the throughput, the channel capacity, and the power consumption of uplink transmission of the terminal. That is, a network device and a path for uplink transmission are adaptively selected based on a channel change, thereby improving uplink transmission performance of the terminal.

An embodiment of this application provides still another channel information feedback method, which is applied to an uplink grant free transmission (grant free transmission) scenario. In an uplink grant free transmission manner, a terminal does not need to request, through scheduling, a network device to allocate a resource, and the terminal usually performs data transmission on a preconfigured resource in a contention manner. Therefore, related parameter adjustment or information obtaining needs to be performed between the terminal and the network device, so that the terminal properly adjusts a transmission process of the terminal. When the terminal and the network device are both agents, the channel information feedback method in this application may be used, to reduce interaction overheads and improve communication efficiency.

As shown in FIG. 12, FIG. 12 is a schematic interaction diagram of a path information feedback method according to an embodiment of this application. The path information feedback method is applicable to the uplink grant free transmission scenario. In FIG. 12, an entity G may be a terminal, and an entity H may be a network device. The entity G and the entity H are both agents.

S1501. The entity G sends a pilot and/or data to the entity H, and correspondingly, the entity H receives the pilot and/or the data sent by the entity G.

Specifically, the entity G sends the pilot and/or the data on a grant free transmission resource.

S1502. The entity H detects the received pilot.

Specifically, the pilot is used to perform channel estimation. The pilot may also be considered as the path parameter in the foregoing embodiment.

S1503. The entity H determines CNI corresponding to a path G-H by using a seventeenth neural network and based on the detected pilot and/or data.

The seventeenth neural network may be obtained by performing reinforcement learning training by using a sample pilot and/or data as input and sample CNI as output. The entity D may input the detected pilot and data into the seventeenth neural network, and the seventeenth neural network may output the CNI of the path G-H (CNI_GH represents the CNI from the entity G to the entity H).

The CNI of the path G-H may be specifically information obtained for an uplink transmission task by the entity H by compressing the pilot, the data, and the like that are received in grant free transmission.

S1504. The entity H sends the CNI corresponding to the path G-H to the entity G, and correspondingly, the entity G receives the CNI corresponding to the path G-H sent by the entity H.

S1505. The entity G determines a grant free parameter set by using an eighteenth neural network and based on the CNI corresponding to the path G-H.

The grant free parameter set includes but is not limited to an MCS, a pilot, a time-frequency resource, and the like.

S1506. The entity G performs grant free data transmission based on a parameter in the grant free parameter set.

Specifically, the entity G sends data Data_GH to the entity H based on the parameter in the grant free parameter set, and the entity H receives the data Data_GH sent by the entity G, and feeds back an ACK_GH or a NACK_GH to the entity G. The entity G receives the ACK_GH or the NACK_GH fed back by the entity G.

S1507. The entity G obtains corresponding seventh decision revenue based on the determined grant free parameter set.

For the grant free parameter set determined by the eighteenth neural network, the entity G obtains the corresponding seventh decision revenue based on an uplink transmission performance indicator. The seventh decision revenue includes but is not limited to a system throughput, a delay, and the like.

For example, it is assumed that the throughput is T, the delay is D, and $\alpha$ is a requirement weight of a delay corresponding to the task.

$$R_5 = T - \alpha D.$$

S1508. The entity G indicates the seventh decision revenue to the entity H, and correspondingly, the entity H obtains the seventh decision revenue indicated by the entity G.

S1509. The entity G updates the eighteenth neural network based on the seventh decision revenue.

Specifically, the entity G updates the eighteenth neural network based on the seventh decision revenue and an objective function. For a form of the objective function, refer to various possible forms of the first objective function or the second objective function described above. R(s, a) in the first objective function and the second objective function may be replaced with $R_5$ based on an actual task requirement. Details are not described herein.

S1510. The entity H updates the seventeenth neural network based on the seventh decision revenue.

Specifically, the entity H updates the seventeenth neural network based on the seventh decision revenue and an objective function. For a form of the objective function, refer to various possible forms of the first objective function or the second objective function described above. R(s, a) in the first objective function and the second objective function may be replaced with $R_5$ based on an actual task requirement. Details are not described herein.

The foregoing describes the channel information feedback methods in different application scenarios, and the methods may be expanded to a communication interaction scenario in which a transmit end and a receive end have agents, in addition to a terminal and a network device in a MIMO system.

In a possible implementation, the channel information feedback method provided in this application is applicable to massive MIMO precoding matrix (non-orthogonal codebook) generation: An agent of a terminal inputs an estimated channel matrix into a neural network, outputs corresponding CNI information, and feeds back the CNI to a network device. An agent of the network device receives the CNI information as an input state of a neural network, outputs a corresponding precoding matrix (non-orthogonal codebook), and uses an obtained channel capacity as a reward to update the agents of the network device and the terminal.

In another possible implementation, the channel information feedback method provided in this application is applicable to a massive MIMO time-frequency resource scheduling scenario: An agent of a terminal inputs an estimated channel matrix and accumulated statistics such as a throughput and a delay into a neural network, outputs corresponding CNI, and feeds back the CNI to a network device. An agent of the network device collects CNI information fed back by a plurality of terminals as input of a neural network, outputs a scheduling decision, and uses an obtained combination of fairness, a throughput, and the like as a reward to update the agents of the network device and the terminal.

In still another possible implementation, the channel information feedback method provided in this application is also applicable to a scenario of interaction between massive MIMO terminals, for example, a scenario of uplink transmission from a plurality of terminals to a same network device in federated learning. A specific implementation is similar to the description in FIG. 11A and FIG. 11B. Details are not described herein.

The foregoing mainly describes the solutions provided in embodiments of this application from the perspective of interaction between network elements. It may be understood that, to implement the foregoing functions, each network element, for example, a terminal or a network device, includes a corresponding hardware structure and/or software module for executing each function.

For example, an embodiment of this application may further provide a communications apparatus that may be applied to a terminal. FIG. 12 shows a schematic diagram of a structure of a communications apparatus according to an embodiment of this application. As shown in FIG. 12, the communications apparatus may include: a receiving unit 901, configured to receive, by using a downlink channel, a channel state information-reference signal sent by a network device; a measurement unit 902, configured to perform measurement estimation to obtain a channel matrix of the downlink channel based on the channel state information-reference signal; a determining unit 903, configured to determine, by using a first neural network and based on the channel matrix of the downlink channel, channel negotiation information corresponding to the downlink channel, where a parameter of the first neural network is related to a historical modulation and coding scheme; and a sending unit 904, configured to send the channel negotiation information corresponding to the downlink channel to the network device, where the channel negotiation information corresponding to the downlink channel is used by the network device to determine a modulation and coding scheme corresponding to the downlink channel.

In a possible design, that the parameter of the first neural network is related to the historical modulation and coding scheme includes: The parameter of the first neural network is a parameter updated by the determining unit 903 based on historical decision revenue, and the historical decision revenue is obtained by the network device based on the historical modulation and coding scheme.

In a possible design, the receiving unit 901 is further configured to receive decision revenue sent by the network device, where the decision revenue is obtained by the network device based on the modulation and coding scheme corresponding to the downlink channel. The determining unit 903 is further configured to update the parameter of the first neural network based on the decision revenue.

Optionally, the determining unit 903 may be specifically configured to update the parameter of the first neural network based on the decision revenue and a first objective function. The first objective function is related to the decision revenue.

In another possible design, the receiving unit 901 is further configured to receive an error that is of a parameter of a first hidden layer of the second neural network and that is sent by the network device. The error of the parameter of the first hidden layer of the second neural network is an error before and after the network device updates the parameter of the second neural network based on the decision revenue, and the decision revenue is obtained by the network device based on the modulation and coding scheme corresponding to the downlink channel. The determining unit 903 is further configured to update the parameter of the first neural network based on the error of the parameter of the first hidden layer of the second neural network.

Optionally, the determining unit 903 may be specifically configured to update the parameter of the first neural network based on a backpropagation algorithm and the error of the parameter of the first hidden layer of the second neural network. The error of the parameter of the first hidden layer of the second neural network is an error before and after the network device updates the parameter of the second neural network based on the decision revenue and a second objective function, and the second objective function is related to the decision revenue.

In a possible design, the determining unit 903 is further configured to obtain a restored channel matrix based on the channel negotiation information corresponding to the downlink channel; and update the parameter of the first neural network based on the channel matrix of the downlink channel obtained through measurement estimation, the restored channel matrix, and a third objective function. The third objective function is used to indicate to minimize an error between the channel matrix of the downlink channel obtained through measurement estimation and the restored channel matrix.

An embodiment of this application further provides a communications apparatus applied to a network device. FIG. 13 shows another schematic diagram of a structure of a communications apparatus according to an embodiment of this application. As shown in FIG. 13, the communications apparatus may include: a sending unit 1001, configured to send a channel state information-reference signal to a terminal by using a downlink channel; a receiving unit 1002, configured to receive channel negotiation information that corresponds to the downlink channel and that is sent by the terminal based on the channel state information-reference signal, where the channel negotiation information corresponding to the downlink channel is determined by the terminal by using a first neural network and based on a channel matrix of the downlink channel after the terminal performs measurement estimation to obtain the channel matrix of the downlink channel based on the channel state information-reference signal, and a parameter of the first neural network is related to a historical modulation and coding scheme; and a determining unit 1003, configured to determine, based on the channel negotiation information corresponding to the downlink channel, a modulation and coding scheme corresponding to the downlink channel.

In a possible design, the determining unit 1003 may be specifically configured to determine, by using a second neural network and based on the channel negotiation information corresponding to the downlink channel, the modulation and coding scheme corresponding to the downlink channel. A parameter of the second neural network is related to the historical modulation and coding scheme.

Optionally, that the parameter of the second neural network is related to the historical modulation and coding scheme includes: The parameter of the second neural network is a parameter updated by the determining unit 1003 based on historical decision revenue, and the historical decision revenue is obtained by the determining unit 1003 based on the historical modulation and coding scheme.

In a possible design, the determining unit 1003 is further configured to obtain, based on the modulation and coding scheme corresponding to the downlink channel, decision revenue corresponding to the modulation and coding scheme. The sending unit 1001 is further configured to send the decision revenue to the terminal, where the decision revenue is used by the terminal to update the parameter of the first neural network.

In a possible design, the determining unit 1003 is further configured to obtain, based on the modulation and coding scheme corresponding to the downlink channel, decision revenue corresponding to the modulation and coding scheme; and update the parameter of the second neural network based on the decision revenue.

Optionally, the determining unit 1003 may be specifically configured to update the parameter of the second neural network based on the decision revenue and a second objective function. The second objective function is related to the decision revenue.

In another possible design, the determining unit 1003 is further configured to obtain an error of a parameter of a first hidden layer of the second neural network before and after the parameter of the second neural network is updated. The sending unit 1001 is further configured to send the error of the parameter of the first hidden layer of the second neural network to the terminal. The error of the parameter of the first hidden layer of the second neural network is used by the terminal to update the parameter of the first neural network.

Optionally, an embodiment of this application further provides a communications apparatus applied to a terminal or a network device. FIG. 14 shows still another schematic diagram of a structure of a communications apparatus according to an embodiment of this application. As shown in FIG. 14, the communications apparatus may include a transceiver unit 1101 and a processing unit 1102. The transceiver unit 1101 may be configured to send and receive information, or configured to communicate with another network element. The processing unit 1102 may be configured to process data. When the apparatus is applied to a terminal, the method performed by the terminal according to the foregoing embodiment may be implemented by using the transceiver unit 1101 and the processing unit 1102. When the apparatus is applied to a network device, the method performed by the network device according to the foregoing embodiment may be implemented by using the transceiver unit 1101 and the processing unit 1102.

It should be understood that division of the units of the apparatus is merely division of logical functions, and during actual implementation, the units may be all or partially integrated into one physical entity, or may be physically separated. In addition, all of the units of the apparatus may be implemented in a form of software to be invoked by a processing element, or may be implemented in a form of hardware. Alternatively, some units may be implemented in a form of software to be invoked by a processing element, and some units may be implemented in a form of hardware.

For example, each unit may be a separately disposed processing element, or may be integrated into a chip of the apparatus for implementation. In addition, each unit may alternatively be stored in a memory in a form of a program, and a processing element of the apparatus invokes and executes a function of the unit. In addition, all or some of these units may be integrated together, or may be independently implemented. The processing element herein may also be referred to as a processor, and may be an integrated circuit having a signal processing capability. In an implementation process, the steps of the foregoing method or the foregoing units may be implemented by using an integrated logic circuit of hardware in the processing element, or implemented in a form of software to be invoked by the processing element.

In an example, the unit in any one of the foregoing apparatuses may be one or more integrated circuits configured to perform the foregoing method, such as one or more application-specific integrated circuits (application specific integrated circuit, ASIC), one or more microprocessors (digital signal processor, DSP), one or more field programmable gate arrays (field programmable gate array, FPGA), or a combination of at least two of these integrated circuit forms.

For another example, when the unit of the apparatus may be implemented by a processing element by scheduling a program, the processing element may be a general-purpose processor, for example, a central processing unit (central processing unit, CPU) or another processor that may invoke a program. For another example, the units may be integrated together and implemented in a form of a system-on-a-chip (system-on-a-chip, SOC).

The foregoing receiving unit is an interface circuit or an input circuit of the apparatus, and is configured to receive a signal from another apparatus. For example, when the apparatus is implemented in a form of a chip, the receiving unit is an interface circuit or an input circuit used by the chip to receive a signal from another chip or apparatus. When the communications apparatus includes a sending unit, the sending unit is an interface circuit or an output circuit of the apparatus, and is configured to send a signal to another apparatus. For example, when the apparatus is implemented in a form of a chip, the sending unit is an interface circuit or an output circuit used by the chip to send a signal to another chip or apparatus.

For example, an embodiment of this application may further provide a communications apparatus applied to a terminal. The communications apparatus may include a processor and an interface circuit. The processor is configured to communicate with another apparatus by using the interface circuit, and perform steps performed by the terminal in the foregoing method. There may be one or more processors.

Alternatively, an embodiment of this application may further provide a communications apparatus applied to a network device. The communications apparatus may also include a processor and an interface circuit. The processor is configured to communicate with another apparatus by using the interface circuit, and perform steps performed by the network device in the foregoing method. There may be one or more processors.

In an implementation, the units of the terminal or the network device that respectively implement the corresponding steps in the foregoing method may be implemented by a processing element by scheduling a program. For example, the apparatus applied to the terminal may include a processing element and a storage element, and the processing element invokes a program stored in the storage element, to perform the method performed by the terminal in the foregoing method embodiment. Alternatively, the apparatus applied to the network device may also include a processing element and a storage element, and the processing element invokes a program stored in the storage element, to perform the method performed by the network device in the foregoing method embodiment. The storage element may be a storage element on a same chip as the processing element, that is, an on-chip storage element.

In another implementation, the program used to perform the method performed by the terminal or the network device in the foregoing method may be in a storage element located on a different chip from the processing element, that is, an off-chip storage element. In this case, the processing element invokes the program from the off-chip storage element or loads the program into an on-chip storage element, to invoke and execute the method performed by the terminal or the network device in the foregoing method embodiment.

For example, an embodiment of this application may further provide a communications apparatus. The communications apparatus may include a processor, configured to execute computer instructions stored in a memory. When the computer instructions are executed, the apparatus is enabled to perform the method performed by the terminal or the network device. The memory may be located inside or outside the communications apparatus. There are one or more processors.

In still another implementation, the units of the terminal that implement the steps in the foregoing method may be configured as one or more processing elements, and the processing elements may be disposed on the terminal. The processing element herein may be an integrated circuit, for example, one or more ASICs, one or more DSPs, one or more FPGAs, or a combination of these types of integrated circuits. The integrated circuits may be integrated together to form a chip.

Similarly, the units of the network device that implement the steps in the foregoing method may also be configured as one or more processing elements, and the processing elements may be disposed on the network device. The processing element herein may also be an integrated circuit, for example, one or more ASICs, one or more DSPs, one or more FPGAs, or a combination of these types of integrated circuits. The integrated circuits may be integrated together to form a chip.

The units of the terminal or the network device that implement the steps in the foregoing method may be integrated together, and implemented in a form of an SOC. The SOC chip is configured to implement the corresponding method. At least one processing element and a storage element may be integrated into the chip, and the processing element invokes a program stored in the storage element to implement a corresponding method. Alternatively, at least one integrated circuit may be integrated into the chip, to implement a corresponding method. Alternatively, with reference to the foregoing implementations, functions of some units may be implemented by invoking a program by the processing element, and functions of some units may be implemented by the integrated circuit.

As described above, the processing element herein may be a general-purpose processor, for example, a CPU, or may be one or more integrated circuits, for example, one or more ASICs, one or more microprocessors DSPs, one or more FPGAs, or a combination of at least two of these types of integrated circuits, configured to implement the foregoing method.

The storage element may be one memory, or may be a general term of a plurality of storage elements.

Based on the foregoing descriptions of the implementations, a person skilled in the art may clearly understand that for the purpose of convenient and brief descriptions, division into the foregoing functional modules is merely used as an example for descriptions. During actual application, the foregoing functions can be allocated to different functional modules for implementation based on a requirement, in other words, an inner structure of an apparatus is divided into different functional modules to implement all or a part of the functions described above.

In the several embodiments provided in this application, it should be understood that the disclosed apparatuses and methods may be implemented in other manners. For example, the described apparatus embodiments are merely examples. For example, division into the modules or units is merely logical function division, and may be other division during actual implementation. For example, a plurality of units or components may be combined or may be integrated into another apparatus, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or another form.

The units described as separate parts may or may not be physically separate, and parts displayed as units may be one or more physical units, that is, may be located in one place, or may be distributed in a plurality of different places. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit. The integrated unit may be implemented in a form of hardware, or may be implemented in a form of a software function unit.

When the integrated unit is implemented in a form of a software function unit and sold or used as an independent product, the integrated unit may be stored in a readable storage medium. Based on such an understanding, the technical solutions in the embodiments of this application essentially, or a part that contributes to the conventional technology, or all or some of the technical solutions may be embodied in a form of a software product, such as a program. The software product is stored in a program product, such as a computer-readable storage medium, and includes instructions that are used to enable a device (which may be a single-chip microcomputer, a chip, or the like) or a processor (processor) to perform all or some of the steps of the method in the embodiments of this application. The foregoing storage medium includes any medium that can store program code, such as a USB flash drive, a removable hard disk, a ROM, a RAM, a magnetic disk, or an optical disc.

For example, an embodiment of this application may further provide a computer-readable storage medium, including computer software instructions. When the computer software instructions are run on a terminal or a chip built in the terminal, the terminal may be enabled to perform the method performed by the terminal in the foregoing embodiment. Alternatively, when the computer software instructions are run on a network device or a chip built in the network device, the network device is enabled to perform the method performed by the network device in the foregoing embodiment.

The foregoing descriptions are only specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

**Claims**

1. A channel information feedback method, wherein the method comprises:

   receiving, by a terminal (310) by using a downlink channel, a channel state information-reference signal sent by a network device (320);
   performing (S502), by the terminal (310), measurement estimation to obtain a channel matrix of the downlink channel based on the channel state information-reference signal;
   determining (S503), by the terminal (310) by using a first neural network and based on the channel matrix of the downlink channel, channel negotiation information corresponding to the downlink channel, wherein a parameter of the first neural network is related to a historical modulation and coding scheme; and
   sending (S504), by the terminal (310), the channel negotiation information corresponding to the downlink channel to the network device (320), wherein the channel negotiation information corresponding to the downlink channel is used by the network device (320) to determine a modulation and coding scheme corresponding to the downlink channel, wherein the modulation and coding scheme corresponding to the downlink channel is determined by the network device (320) by using a second neural network and based on the channel negotiation information corresponding to the downlink channel, and a parameter of the second neural network is related to the historical modulation and coding scheme, and

wherein that the parameter of the second neural network is related to the historical modulation and coding scheme comprises:

the parameter of the second neural network is a parameter updated by the network device (320) based on historical decision revenue, and the historical decision revenue is obtained by the network device (320) based on the historical modulation and coding scheme.

2. The method according to claim 1, wherein that the parameter of the first neural network is related to the historical modulation and coding scheme comprises:

the parameter of the first neural network is a parameter updated by the terminal (310) based on historical decision revenue, and the historical decision revenue is obtained by the network device (320) based on the historical modulation and coding scheme.

3. The method according to claim 1 or 2, wherein the method further comprises:

receiving, by the terminal (310), decision revenue sent by the network device (320), wherein the decision revenue is obtained by the network device (320) based on the modulation and coding scheme corresponding to the downlink channel; and

updating, by the terminal (310), the parameter of the first neural network based on the decision revenue;

wherein the updating, by the terminal (310), the parameter of the first neural network based on the decision revenue comprises:

updating, by the terminal (310), the parameter of the first neural network based on the decision revenue and a first objective function, wherein the first objective function is related to the decision revenue.

4. The method according to claim 1 or 2, wherein the method further comprises:

receiving, by the terminal (310), an error that is of a parameter of a first hidden layer of the second neural network and that is sent by the network device (320), wherein the error of the parameter of the first hidden layer of the second neural network is an error before and after the network device (320) updates the parameter of the second neural network based on the decision revenue, and the decision revenue is obtained by the network device (320) based on the modulation and coding scheme corresponding to the downlink channel; and

updating, by the terminal (310), the parameter of the first neural network based on the error of the parameter of the first hidden layer of the second neural network;

wherein the updating, by the terminal (310), the parameter of the first neural network based on the error of the parameter of the first hidden layer of the second neural network comprises:

updating, by the terminal (310), the parameter of the first neural network based on a backpropagation algorithm and the error of the parameter of the first hidden layer of the second neural network, wherein the error of the parameter of the first hidden layer of the second neural network is an error before and after the network device (320) updates the parameter of the second neural network based on the decision revenue and a second objective function, and the second objective function is related to the decision revenue.

5. The method according to claim 3 or 4, wherein the decision revenue is any one of a decision bit rate or a throughput when the network device (320) performs scheduling based on the modulation and coding scheme corresponding to the downlink channel; or

a combination of any one of a decision bit rate or a throughput when the network device (320) performs scheduling based on the modulation and coding scheme corresponding to the downlink channel and an evaluation value provided by the network device (320) on the channel negotiation information corresponding to the downlink channel, wherein the evaluation value provided by the network device (320) on the channel negotiation information corresponding to the downlink channel is used to indicate a magnitude of a guiding role of the channel negotiation information corresponding to the downlink channel in determining the modulation and coding scheme corresponding to the downlink channel by the network device (320).

6. The method according to any one of claims 3 to 5, wherein before the updating, by the terminal (310), the parameter of the first neural network, the method further comprises:

obtaining, by the terminal (310), a restored channel matrix based on the channel negotiation information corresponding to the downlink channel; and

updating, by the terminal (310), the parameter of the first neural network based on the channel matrix of the downlink channel obtained through measurement estimation, the restored channel matrix, and a third objective function, wherein

the third objective function is used to indicate to minimize an error between the channel matrix of the downlink channel obtained through measurement estimation and the restored channel matrix.

7. A channel information feedback method, wherein the method comprises:

sending (S501), by a network device (320), a channel state information-reference signal to a terminal (310) by using a downlink channel;

receiving, by the network device (320), channel negotiation information that corresponds to the downlink channel and that is sent by the terminal (310) based on the channel state information-reference signal, wherein the channel negotiation information corresponding to the downlink channel is determined by the terminal (310) by using a first neural network and based on a channel matrix of the downlink channel after the terminal (310) performs measurement estimation to obtain the channel matrix of the downlink channel based on the channel state information-reference signal, and a parameter of the first neural network is related to a historical modulation and coding scheme; and

determining (S505), by the network device (320) based on the channel negotiation information corresponding to the downlink channel, a modulation and coding scheme corresponding to the downlink channel, wherein the determining, by the network device (320) based on the channel negotiation information corresponding to the downlink channel, a modulation and coding scheme corresponding to the downlink channel comprises:

determining, by the network device (320) by using a second neural network and based on the channel negotiation information corresponding to the downlink channel, the modulation and coding scheme corresponding to the downlink channel, wherein a parameter of the second neural network is related to the historical modulation and coding scheme, wherein that the parameter of the second neural network is related to the historical modulation and coding scheme comprises:

the parameter of the second neural network is a parameter updated by the network device (320) based on historical decision revenue, and the historical decision revenue is obtained by the network device (320) based on the historical modulation and coding scheme.

8. A communications apparatus, comprising:

a receiving unit (901), configured to receive, by using a downlink channel, a channel state information-reference signal sent by a network device (320),

a measurement unit (902), configured to perform measurement estimation to obtain a channel matrix of the downlink channel based on the channel state information-reference signal;

a determining unit (903), configured to determine, by using a first neural network and based on the channel matrix of the downlink channel, channel negotiation information corresponding to the downlink channel, wherein a parameter of the first neural network is related to a historical modulation and coding scheme, and

a sending unit (904), configured to send the channel negotiation information corresponding to the downlink channel to the network device (320), wherein the channel negotiation information corresponding to the downlink channel is used by the network device (320) to determine a modulation and coding scheme corresponding to the downlink channel, wherein the modulation and coding scheme corresponding to the downlink channel is determined by the network device (320) by using a second neural network and based on the channel negotiation information corresponding to the downlink channel, and a parameter of the second neural network is related to the historical modulation and coding scheme, and

wherein that the parameter of the second neural network is related to the historical modulation and coding scheme comprises:

the parameter of the second neural network is a parameter updated by the network device (320) based on historical decision revenue, and the historical decision revenue is obtained by the network device (320) based on the historical modulation and coding scheme.

9. A communications apparatus, comprising:

a sending unit (1001), configured to send a channel state information-reference signal to a terminal (310) by using a downlink channel;

a receiving unit (1002), configured to receive channel negotiation information that corresponds to the downlink channel and that is sent by the terminal (310) based on the channel state information-reference signal, wherein the channel negotiation information corresponding to the downlink channel is determined by the terminal (310) by using a first neural network and based on a channel matrix of the downlink channel after the terminal (310) performs measurement estimation to obtain the channel matrix of the downlink channel based on the channel state information-reference signal, and a parameter of the first neural network is related to a historical modulation and coding scheme; and

a determining unit (1003), configured to determine, based on the channel negotiation information corresponding to the downlink channel, a modulation and coding scheme corresponding to the downlink channel, wherein the determining unit is specifically configured to determine, by using a second neural network and based on the channel negotiation information corresponding to the downlink channel, the modulation and coding scheme corresponding to the downlink channel, wherein a parameter of the second neural network is related to the historical modulation and coding scheme, and

wherein that the parameter of the second neural network is related to the historical modulation and coding scheme comprises:

the parameter of the second neural network is a parameter updated by the determining unit based on historical decision revenue, and the historical decision revenue is obtained by the determining unit based on the historical modulation and coding scheme.

10. A communications apparatus, comprising a processor (41, 45), configured to execute computer instructions stored in a memory (42), wherein when the computer instructions are executed by the processor, the apparatus performs the method according to any one of claims 1 to 6.

11. A communications apparatus, comprising a processor (41, 45), configured to execute computer instructions stored in a memory (42), wherein when the computer instructions are executed by the processor, the apparatus performs the method according to claim 7.

12. A computer-readable storage medium, comprising computer software instructions, wherein when the computer software instructions are run on a processor (41, 45), the method according to any one of claims 1 to 6 is performed, or the method according to claim 7 is performed.

13. A computer program product comprising instructions, wherein when the computer program product runs on a computer, the method according to any one of claims 1 to 6 is performed, or the method according to claim 7 is performed.

14. A communications system, comprising the communications apparatus according to claim and the communications apparatus according to claim 11.

## Patentansprüche

1. Kanalinformationsrückmeldungsverfahren, wobei das Verfahren Folgendes umfasst:

Empfangen, durch ein Endgerät (310), unter Verwendung eines Downlink-Kanals, eines Kanalzustandsinformations-Referenzsignals, das durch eine Netzwerkeinrichtung (320) gesendet wird;

Durchführen (S502), durch das Endgerät (310), einer Messungsschätzung, um eine Kanalmatrix des Downlink-Kanals basierend auf dem Kanalzustandsinformations-Referenzsignal zu erlangen;

Bestimmen (S503), durch das Endgerät (310), unter Verwendung eines ersten neuronalen Netzwerks und basierend auf der Kanalmatrix des Downlink-Kanals, von Kanalverhandlungsinformationen, die dem Downlink-Kanal entsprechen, wobei ein Parameter des ersten neuronalen Netzwerks mit einem historischen Modulations- und Codierungsschema zusammenhängt; und

Senden (S504), durch das Endgerät (310), der Kanalverhandlungsinformationen, die dem Downlink-Kanal entsprechen, an die Netzwerkeinrichtung (320), wobei die Kanalverhandlungsinformationen, die dem Downlink-Kanal entsprechen, durch die Netzwerkeinrichtung (320) dazu verwendet werden, ein Modulations- und Codierungsschema, das dem Downlink-Kanal entspricht, zu bestimmen, wobei das Modulations- und Codierungsschema, das dem Downlink-Kanal entspricht, durch die Netzwerkeinrichtung (320) unter Verwendung eines zweiten neuronalen Netzwerks und basierend auf den Kanalverhandlungsinformationen, die dem Downlink-Kanal entsprechen, bestimmt wird und ein Parameter des zweiten neuronalen Netzwerks mit dem historischen Modulations- und Codierungsschema zusammenhängt und

wobei die Tatsache, dass der Parameter des zweiten neuronalen Netzwerks mit dem historischen Modulations- und Codierungsschema zusammenhängt, Folgendes umfasst:

der Parameter des zweiten neuronalen Netzwerks ist ein Parameter, der durch die Netzwerkeinrichtung (320) basierend auf einem historischen Entscheidungsertrag aktualisiert wird, und der historische Entscheidungsertrag wird durch die Netzwerkeinrichtung (320) basierend auf dem historischen Modulations- und Codierungsschema erlangt.

2. Verfahren nach Anspruch 1, wobei die Tatsache, dass der Parameter des ersten neuronalen Netzwerks mit dem historischen Modulations- und Codierungsschema zusammenhängt, Folgendes umfasst:

der Parameter des ersten neuronalen Netzwerks ist ein Parameter, der durch das Endgerät (310) basierend auf einem historischen Entscheidungsertrag aktualisiert wird, und der historische Entscheidungsertrag wird durch die Netzwerkeinrichtung (320) basierend auf dem historischen Modulations- und Codierungsschema erlangt.

3. Verfahren nach Anspruch 1 oder 2, wobei das Verfahren ferner Folgendes umfasst:

Empfangen, durch das Endgerät (310), eines Entscheidungsertrags, der durch die Netzwerkeinrichtung (320) gesendet wird, wobei der Entscheidungsertrag durch die Netzwerkeinrichtung (320) basierend auf dem Modulations- und Codierungsschema, das dem Downlink-Kanal entspricht, erlangt wird; und

Aktualisieren, durch das Endgerät (310), des Parameters des ersten neuronalen Netzwerks basierend auf dem Entscheidungsertrag;

wobei das Aktualisieren, durch das Endgerät (310), des Parameters des ersten neuronalen Netzwerks basierend auf dem Entscheidungsertrag Folgendes umfasst:

Aktualisieren, durch das Endgerät (310), des Parameters des ersten neuronalen Netzwerks basierend auf dem Entscheidungsertrag und einer ersten Zielfunktion, wobei die erste Zielfunktion mit dem Entscheidungsertrag zusammenhängt.

4. Verfahren nach Anspruch 1 oder 2, wobei das Verfahren ferner Folgendes umfasst:

Empfangen, durch das Endgerät (310), eines Fehlers eines Parameters einer ersten verborgenen Schicht des zweiten neuronalen Netzwerks, der durch die Netzwerkeinrichtung (320) gesendet wird, wobei der Fehler des Parameters der ersten verborgenen Schicht des zweiten neuronalen Netzwerks ein Fehler bevor und nachdem die Netzwerkeinrichtung (320) den Parameter des zweiten neuronalen Netzwerks basierend auf dem Entscheidungsertrag aktualisiert, ist und der Entscheidungsertrag durch die Netzwerkeinrichtung (320) basierend auf dem Modulations- und Codierungsschema, das dem Downlink-Kanal entspricht, erlangt wird; und

Aktualisieren, durch das Endgerät (310), des Parameters des ersten neuronalen Netzwerks basierend auf dem Fehler des Parameters der ersten verborgenen Schicht des zweiten neuronalen Netzwerks;

wobei das Aktualisieren, durch das Endgerät (310), des Parameters des ersten neuronalen Netzwerks basierend auf dem Fehler des Parameters der ersten verborgenen Schicht des zweiten neuronalen Netzwerks Folgendes umfasst:

Aktualisieren, durch das Endgerät (310), des Parameters des ersten neuronalen Netzwerks basierend auf einem Rückpropagierungsalgorithmus und dem Fehler des Parameters der ersten verborgenen Schicht des zweiten neuronalen Netzwerks, wobei der Fehler des Parameters der ersten verborgenen Schicht des zweiten neuronalen Netzwerks ein Fehler bevor und nachdem die Netzwerkeinrichtung (320) den Parameter des zweiten neuronalen Netzwerks basierend auf dem Entscheidungsertrag und einer zweiten Zielfunktion aktualisiert, ist und die zweite Zielfunktion mit dem Entscheidungsertrag zusammenhängt.

5. Verfahren nach Anspruch 3 oder 4, wobei der Entscheidungsertrag ein Beliebiges von einer Entscheidungsbitrate oder einem Durchsatz ist, wenn die Netzwerkeinrichtung (320) eine Planung basierend auf dem Modulations- und Codierungsschema, das dem Downlink-Kanal entspricht, durchführt; oder

eine Kombination aus einem Beliebigen von einer Entscheidungsbitrate oder einem Durchsatz ist, wenn die Netzwerkeinrichtung (320) eine Planung basierend auf dem Modulations- und Codierungsschema, das dem Downlink-Kanal entspricht, und einem Bewertungswert, der durch die Netzwerkeinrichtung (320) in den Kanalverhandlungsinformationen bereitgestellt wird, die dem Downlink-Kanal entsprechen, durchführt, wobei der Bewertungswert, der durch die Netzwerkeinrichtung (320) in den Kanalverhandlungsinformationen bereitgestellt wird, die dem Downlink-Kanal entsprechen, dazu verwendet wird, eine Größenordnung einer Führungsrolle der Kanalverhandlungsinformationen, die dem Downlink-Kanal entsprechen, beim Bestimmen des Modulations- und Codierungsschemas, das dem Downlink-Kanal entspricht, durch die Netzwerkeinrichtung (320) anzuzeigen.

6. Verfahren nach einem der Ansprüche 3 bis 5, wobei das Verfahren vor dem Aktualisieren, durch das Endgerät (310), des Parameters des ersten neuronalen Netzwerks, ferner Folgendes umfasst:

Erlangen, durch das Endgerät (310), einer wiederhergestellten Kanalmatrix basierend auf den Kanalverhandlungsinformationen, die dem Downlink-Kanal entsprechen; und
Aktualisieren, durch das Endgerät (310), des Parameters des ersten neuronalen Netzwerks basierend auf der Kanalmatrix des Downlink-Kanals, die durch Messungsschätzung, die wiederhergestellte Kanalmatrix und eine dritte Zielfunktion erlangt wurde, wobei die dritte Zielfunktion dazu verwendet wird, anzuzeigen, dass ein Fehler zwischen der Kanalmatrix des Downlink-Kanals, die durch Messungsschätzung erlangt wurde, und der wiederhergestellten Kanalmatrix zu minimieren ist.

7. Kanalinformationsrückmeldungsverfahren, wobei das Verfahren Folgendes umfasst:

Senden (S501), durch eine Netzwerkeinrichtung (320), eines Kanalzustandsinformations-Referenzsignals an ein Endgerät (310) unter Verwendung eines Downlink-Kanals;
Empfangen, durch die Netzwerkeinrichtung (320), von Kanalverhandlungsinformationen, die dem Downlink-Kanal entsprechen und die durch das Endgerät (310) basierend auf dem Kanalzustandsinformations-Referenzsignal gesendet werden, wobei die Kanalverhandlungsinformationen, die dem Downlink-Kanal entsprechen, durch das Endgerät (310) unter Verwendung eines ersten neuronalen Netzwerks und basierend auf einer Kanalmatrix des Downlink-Kanals bestimmt werden, nachdem das Endgerät (310) eine Messungsschätzung durchführt, um die Kanalmatrix des Downlink-Kanals basierend auf dem Kanalzustandsinformations-Referenzsignal zu erlangen, und ein Parameter des ersten neuronalen Netzwerks mit einem historischen Modulations- und Codierungsschema zusammenhängt; und
Bestimmen (S505), durch die Netzwerkeinrichtung (320), basierend auf den Kanalverhandlungsinformationen, die dem Downlink-Kanal entsprechen, eines Modulations- und Codierungsschemas, das dem Downlink-Kanal entspricht, wobei das Bestimmen, durch die Netzwerkeinrichtung (320), basierend auf den Kanalverhandlungsinformationen, die dem Downlink-Kanal entsprechen, eines Modulations- und Codierungsschemas, das dem Downlink-Kanal entspricht, Folgendes umfasst:
Bestimmen, durch die Netzwerkeinrichtung (320), unter Verwendung eines zweiten neuronalen Netzwerks und basierend auf den Kanalverhandlungsinformationen, die dem Downlink-Kanal entsprechen, des Modulations- und Codierungsschemas, das dem Downlink-Kanal entspricht, wobei ein Parameter des zweiten neuronalen Netzwerks mit dem historischen Modulations- und Codierungsschema zusammenhängt, wobei die Tatsache, dass der Parameter des zweiten neuronalen Netzwerks mit dem historischen Modulations- und Codierungsschema zusammenhängt, Folgendes umfasst:
der Parameter des zweiten neuronalen Netzwerks ist ein Parameter, der durch die Netzwerkeinrichtung (320) basierend auf einem historischen Entscheidungsertrag aktualisiert wird, und der historische Entscheidungsertrag wird durch die Netzwerkeinrichtung (320) basierend auf dem historischen Modulations- und Codierungsschema erlangt.

8. Kommunikationsvorrichtung, umfassend:

eine Empfangseinheit (901), die dazu konfiguriert ist, unter Verwendung eines Downlink-Kanals ein Kanalzustandsinformations-Referenzsignal, das durch eine Netzwerkeinrichtung (320) gesendet wird, zu empfangen,
eine Messeinheit (902), die dazu konfiguriert ist, eine Messungsschätzung durchzuführen, um eine Kanalmatrix des Downlink-Kanals basierend auf dem Kanalzustandsinformations-Referenzsignal zu erlangen;
eine Bestimmungseinheit (903), die dazu konfiguriert ist, unter Verwendung eines ersten neuronalen Netzwerks und basierend auf der Kanalmatrix des Downlink-Kanals, Kanalverhandlungsinformationen, die dem Downlink-Kanal entsprechen, zu bestimmen, wobei ein Parameter des ersten neuronalen Netzwerks mit einem historischen Modulations- und Codierungsschema zusammenhängt und
eine Sendeeinheit (904), die dazu konfiguriert ist, die Kanalverhandlungsinformationen, die dem Downlink-Kanal entsprechen, an die Netzwerkeinrichtung (320) zu senden, wobei die Kanalverhandlungsinformationen, die dem Downlink-Kanal entsprechen, durch die Netzwerkeinrichtung (320) dazu verwendet werden, ein Modulations- und Codierungsschema, das dem Downlink-Kanal entspricht, zu bestimmen, wobei das Modulations- und Codierungsschema, das dem Downlink-Kanal entspricht, durch die Netzwerkeinrichtung (320) unter Verwendung eines zweiten neuronalen Netzwerks und basierend auf den Kanalverhandlungsinformationen, die dem Downlink-Kanal entsprechen, bestimmt wird und ein Parameter des zweiten neuronalen Netzwerks mit dem historischen Modulations- und Codierungsschema zusammenhängt und
wobei die Tatsache, dass der Parameter des zweiten neuronalen Netzwerks mit dem historischen Modulations- und Codierungsschema zusammenhängt, Folgendes umfasst:
der Parameter des zweiten neuronalen Netzwerks ist ein Parameter, der durch die Netzwerkeinrichtung (320) basierend auf einem historischen Entscheidungsertrag aktualisiert wird, und der historische Entscheidungsertrag wird durch die Netzwerkeinrichtung (320) basierend auf dem historischen Modulations- und Codierungsschema erlangt.

9. Kommunikationsvorrichtung, umfassend:

eine Sendeeinheit (1001), die dazu konfiguriert ist, ein Kanalzustandsinformations-Referenzsignal unter Verwendung eines Downlink-Kanals an ein Endgerät (310) zu senden;
eine Empfangseinheit (1002), die dazu konfiguriert ist, Kanalverhandlungsinformationen, die dem Downlink-Kanal entsprechen und die durch das Endgerät (310) basierend auf dem Kanalzustandsinformations-Referenzsignal gesendet werden, zu empfangen, wobei die Kanalverhandlungsinformationen, die dem Downlink-Kanal entsprechen, durch das Endgerät (310) unter Verwendung eines ersten neuronalen Netzwerks und basierend auf einer Kanalmatrix des Downlink-Kanals bestimmt werden, nachdem das Endgerät (310) eine Messungsschätzung durchführt, um die Kanalmatrix des Downlink-Kanals basierend auf dem Kanalzustandsinformations-Referenzsignal zu erlangen, und ein Parameter des ersten neuronalen Netzwerks mit einem historischen Modulations- und Codierungsschema zusammenhängt; und
eine Bestimmungseinheit (1003), die dazu konfiguriert ist, basierend auf den Kanalverhandlungsinformationen, die dem Downlink-Kanal entsprechen, ein Modulations- und Codierungsschema, das dem Downlink-Kanal entspricht, zu bestimmen, wobei die Bestimmungseinheit insbesondere dazu konfiguriert ist, unter Verwendung eines zweiten neuronalen Netzwerks und basierend auf den Kanalverhandlungsinformationen, die dem Downlink-Kanal entsprechen, das Modulations- und Codierungsschema, das dem Downlink-Kanal entspricht, zu bestimmen, wobei ein Parameter des zweiten neuronalen Netzwerks mit dem historischen Modulations- und Codierungsschema zusammenhängt und
wobei die Tatsache, dass der Parameter des zweiten neuronalen Netzwerks mit dem historischen Modulations- und Codierungsschema zusammenhängt, Folgendes umfasst:
der Parameter des zweiten neuronalen Netzwerks ist ein Parameter, der durch die Bestimmungseinheit basierend auf einem historischen Entscheidungsertrag aktualisiert wird, und der historische Entscheidungsertrag wird durch die Bestimmungseinheit basierend auf dem historischen Modulations- und Codierungsschema erlangt.

10. Kommunikationsvorrichtung, umfassend einen Prozessor (41, 45), der dazu konfiguriert ist, Computeranweisungen, die in einem Speicher (42) gespeichert sind, auszuführen, wobei, wenn die Computeranweisungen durch den Prozessor ausgeführt werden, die Vorrichtung das Verfahren nach einem der Ansprüche 1 bis 6 durchführt.

11. Kommunikationsvorrichtung, umfassend einen Prozessor (41, 45), der dazu konfiguriert ist, Computeranweisungen, die in einem Speicher (42) gespeichert sind, auszuführen, wobei, wenn die Computeranweisungen durch den Prozessor ausgeführt werden, die Vorrichtung das Verfahren nach Anspruch 7 durchführt.

12. Computerlesbares Speichermedium, umfassend Computersoftwareanweisungen, wobei, wenn die Computersoftwareanweisungen auf einem Prozessor (41, 45) laufen, das Verfahren nach einem der Ansprüche 1 bis 6 durchgeführt wird oder das Verfahren nach Anspruch 7 durchgeführt wird.

13. Computerprogrammprodukt, umfassend Anweisungen, wobei, wenn das Computerprogrammprodukt auf einem Computer läuft, das Verfahren nach einem der Ansprüche 1 bis 6 durchgeführt wird oder das Verfahren nach Anspruch 7 durchgeführt wird.

14. Kommunikationssystem, umfassend die Kommunikationsvorrichtung nach Anspruch 10 und die Kommunikationsvorrichtung nach Anspruch 11.

**Revendications**

1. Procédé de rétroaction d'informations de canal, dans lequel le procédé comprend :

la réception, par un terminal (310) à l'aide d'un canal de liaison descendante, d'un signal de référence d'informations d'état de canal envoyé par un dispositif réseau (320) ;

la réalisation (S502), par le terminal (310), d'une estimation de mesure pour obtenir une matrice de canal du canal de liaison descendante sur la base du signal de référence d'informations d'état de canal ;

la détermination (S503), par le terminal (310) à l'aide d'un premier réseau neuronal et sur la base de la matrice de canal du canal de liaison descendante, d'informations de négociation de canal correspondant au canal de liaison descendante, dans lequel un paramètre du premier réseau neuronal est lié à un schéma de modulation et de codage historique ; et

l'envoi (S504), par le terminal (310), des informations de négociation de canal correspondant au canal de liaison descendante au dispositif réseau (320), dans lequel les informations de négociation de canal correspondant au canal de liaison descendante sont utilisées par le dispositif réseau (320) pour déterminer un schéma de modulation et de codage correspondant au canal de liaison descendante, dans lequel le schéma de modulation et de codage correspondant au canal de liaison descendante est déterminé par le dispositif réseau (320) à l'aide d'un second réseau neuronal et sur la base des informations de négociation de canal correspondant au canal de liaison descendante, et un paramètre du second réseau neuronal est lié au schéma de modulation et de codage historique, et

dans lequel le fait que le paramètre du second réseau neuronal est lié au schéma de modulation et de codage historique comprend :

le paramètre du second réseau neuronal est un paramètre mis à jour par le dispositif réseau (320) sur la base du revenu de décision historique, et le revenu de décision historique est obtenu par le dispositif réseau (320) sur la base du schéma de modulation et de codage historique.

2. Procédé selon la revendication 1, dans lequel le fait que le paramètre du premier réseau neuronal est lié au schéma de modulation et de codage historique comprend :
le paramètre du premier réseau neuronal est un paramètre mis à jour par le terminal (310) sur la base du revenu de décision historique, et le revenu de décision historique est obtenu par le dispositif réseau (320) sur la base du schéma de modulation et de codage historique.

3. Procédé selon la revendication 1 ou 2, dans lequel le procédé comprend également :

la réception, par le terminal (310), du revenu de décision envoyé par le dispositif réseau (320), dans lequel le revenu de décision est obtenu par le dispositif réseau (320) sur la base du schéma de modulation et de codage correspondant au canal de liaison descendante ; et
la mise à jour, par le terminal (310), du paramètre du premier réseau neuronal sur la base du revenu de décision ;
dans lequel la mise à jour, par le terminal (310), du paramètre du premier réseau neuronal sur la base du revenu de décision comprend :
la mise à jour, par le terminal (310), du paramètre du premier réseau neuronal sur la base du revenu de décision et d'une première fonction objective, dans lequel la première fonction objective est liée au revenu de décision.

4. Procédé selon la revendication 1 ou 2, dans lequel le procédé comprend également :

la réception, par le terminal (310), d'une erreur qui est d'un paramètre d'une première couche cachée du second réseau neuronal et qui est envoyée par le dispositif réseau (320), dans lequel l'erreur du paramètre de la première couche cachée du second réseau neuronal est une erreur avant et après que le dispositif réseau (320) met à jour le paramètre du second réseau neuronal sur la base du revenu de décision, et le revenu de décision est obtenu par le dispositif réseau (320) sur la base du schéma de modulation et de codage correspondant au canal de liaison descendante ; et
la mise à jour, par le terminal (310), du paramètre du premier réseau neuronal sur la base de l'erreur du paramètre de la première couche cachée du second réseau neuronal ;
dans lequel la mise à jour, par le terminal (310), du paramètre du premier réseau neuronal sur la base de l'erreur du paramètre de la première couche cachée du second réseau neuronal comprend :

la mise à jour, par le terminal (310), du paramètre du premier réseau neuronal sur la base d'un algorithme de rétropropagation et de l'erreur du paramètre de la première couche cachée du second réseau neuronal, dans lequel
l'erreur du paramètre de la première couche cachée du second réseau neuronal est une erreur avant et après que le dispositif réseau (320) met à jour le paramètre du second réseau neuronal sur la base du revenu de décision et d'une seconde fonction objective, et la seconde fonction objective est liée au revenu de décision.

5. Procédé selon la revendication 3 ou 4, dans lequel le revenu de décision est l'un quelconque d'un débit binaire de décision ou d'un débit lorsque le dispositif réseau (320) réalise une planification sur la base du schéma de modulation et de codage correspondant au canal de liaison descendante ; ou

une combinaison de l'un quelconque d'un débit binaire de décision ou d'un débit lorsque le dispositif réseau (320) réalise une planification sur la base du schéma de modulation et de codage correspondant au canal de liaison descendante et d'une valeur d'évaluation fournie par le dispositif réseau (320) sur les informations de négociation de canal correspondant au canal de liaison descendante, dans lequel la valeur d'évaluation fournie par le dispositif réseau (320) sur les informations de négociation de canal correspondant au canal de liaison descendante est utilisée pour indiquer une ampleur d'un rôle de guidage des informations de négociation de canal correspondant au canal de liaison descendante dans la détermination du schéma de modulation et de codage correspondant au canal de liaison descendante par le dispositif réseau (320).

6. Procédé selon l'une quelconque des revendications 3 à 5, dans lequel, avant la mise à jour, par le terminal (310), du paramètre du premier réseau neuronal, le procédé comprend également :

l'obtention, par le terminal (310), d'une matrice de canal restaurée sur la base des informations de négociation de canal correspondant au canal de liaison descendante ; et

la mise à jour, par le terminal (310), du paramètre du premier réseau neuronal sur la base de la matrice de canal du canal de liaison descendante obtenu par estimation de mesure, de la matrice de canal restaurée et d'une troisième fonction objective, dans lequel

la troisième fonction objective est utilisée pour indiquer comment minimiser une erreur entre la matrice de canal du canal de liaison descendante obtenue par estimation de mesure et la matrice de canal restaurée.

7. Procédé de rétroaction d'informations de canal, dans lequel le procédé comprend :

l'envoi (S501), par un dispositif réseau (320), d'un signal de référence d'informations d'état de canal à un terminal (310) à l'aide d'un canal de liaison descendante ;

la réception, par le dispositif réseau (320), d'informations de négociation de canal correspondant au canal de liaison descendante et envoyées par le terminal (310) sur la base du signal de référence d'informations d'état de canal, dans lequel les informations de négociation de canal correspondant au canal de liaison descendante sont déterminées par le terminal (310) à l'aide d'un premier réseau neuronal et sur la base d'une matrice de canal du canal de liaison descendante après que le terminal (310) réalise une estimation de mesure pour obtenir la matrice de canal du canal de liaison descendante sur la base du signal de référence d'informations d'état de canal, et un paramètre du premier réseau neuronal est lié à un schéma de modulation et de codage historique ; et

la détermination (S505), par le dispositif réseau (320) sur la base des informations de négociation de canal correspondant au canal de liaison descendante, d'un schéma de modulation et de codage correspondant au canal de liaison descendante, dans lequel la détermination, par le dispositif réseau (320) sur la base des informations de négociation de canal correspondant au canal de liaison descendante, d'un schéma de modulation et de codage correspondant au canal de liaison descendante comprend :

la détermination, par le dispositif réseau (320) à l'aide d'un second réseau neuronal et sur la base des informations de négociation de canal correspondant au canal de liaison descendante, du schéma de modulation et de codage correspondant au canal de liaison descendante, dans lequel un paramètre du second réseau neuronal est lié au schéma de modulation et de codage historique, dans lequel le fait que le paramètre du second réseau neuronal est lié au schéma de modulation et de codage historique comprend :

le paramètre du second réseau neuronal est un paramètre mis à jour par le dispositif réseau (320) sur la base du revenu de décision historique, et le revenu de décision historique est obtenu par le dispositif réseau (320) sur la base du schéma de modulation et de codage historique.

8. Appareil de communication, comprenant :

une unité de réception (901), configurée pour recevoir, à l'aide d'un canal de liaison descendante, un signal de référence 'd'informations d'état de canal envoyé par un dispositif réseau (320),

une unité de mesure (902), configurée pour réaliser une estimation de mesure afin d'obtenir une matrice de canal du canal de liaison descendante sur la base du signal de référence d'informations d'état de canal ;

une unité de détermination (903), configurée pour déterminer, à l'aide d'un premier réseau neuronal et sur la base de la matrice de canal du canal de liaison descendante, des informations de négociation de canal correspondant au canal de liaison descendante, dans lequel un paramètre du premier réseau neuronal est lié à un schéma de modulation et de codage historique ; et

une unité d'envoi (904), configurée pour envoyer des informations de négociation de canal correspondant au canal de liaison descendante au dispositif réseau (320), dans lequel les informations de négociation de canal correspondant au canal de liaison descendante sont utilisées par le dispositif réseau (320) pour déterminer un schéma de modulation et de codage correspondant au canal de liaison descendante, dans lequel le schéma de modulation et de codage correspondant au canal de liaison descendante est déterminé par le dispositif réseau (320) à l'aide d'un second réseau neuronal et sur la base des informations de négociation de canal correspondant au canal de liaison descendante, et un paramètre du second réseau neuronal est lié au schéma de modulation et de codage historique, et

dans lequel le fait que le paramètre du second réseau neuronal est lié au schéma de modulation et de codage historique comprend :

le paramètre du second réseau neuronal est un paramètre mis à jour par le dispositif réseau (320) sur la base du revenu de décision historique, et le revenu de décision historique est obtenu par le dispositif réseau (320) sur la base du schéma de modulation et de codage historique.

9. Appareil de communication, comprenant :

une unité d'envoi (1001), configurée pour envoyer un signal de référence d'informations d'état de canal à un terminal (310) à l'aide d'un canal de liaison descendante ;

une unité de réception (1002), configurée pour recevoir des informations de négociation de canal correspondant au canal de liaison descendante et envoyées par le terminal (310) sur la base du signal de référence d'informations d'état de canal, dans lequel les informations de négociation de canal correspondant au canal de liaison descendante sont déterminées par le terminal (310) à l'aide d'un premier réseau neuronal et sur la base d'une matrice de canal du canal de liaison descendante après que le terminal (310) réalise une estimation de mesure pour obtenir la matrice de canal du canal de liaison descendante sur la base du signal de référence d'informations d'état de canal, et un paramètre du premier réseau neuronal est lié à un schéma de modulation et de codage historique ; et

une unité de détermination (1003), configurée pour déterminer, sur la base des informations de négociation de canal correspondant au canal de liaison descendante, un schéma de modulation et de codage correspondant au canal de liaison descendante, dans lequel l'unité de détermination est spécifiquement configurée pour déterminer, à l'aide d'un second réseau neuronal et sur la base des informations de négociation de canal correspondant au canal de liaison descendante, le schéma de modulation et de codage correspondant au canal de liaison descendante, dans lequel un paramètre du second réseau neuronal est lié au schéma de modulation et de codage historique, et

dans lequel le fait que le paramètre du second réseau neuronal est lié au schéma de modulation et de codage historique comprend :

le paramètre du second réseau neuronal est un paramètre mis à jour par l'unité de détermination sur la base du revenu de décision historique, et le revenu de décision historique est obtenu par l'unité de détermination sur la base du schéma de modulation et de codage historique.

10. Appareil de communication, comprenant un processeur (41, 45), configuré pour exécuter des instructions informatiques stockées dans une mémoire (42), dans lequel, lorsque les instructions informatiques sont exécutées par le processeur, l'appareil réalise le procédé selon l'une quelconque des revendications 1 à 6.

11. Appareil de communication, comprenant un processeur (41, 45), configuré pour exécuter des instructions informatiques stockées dans une mémoire (42), dans lequel, lorsque les instructions informatiques sont exécutées par le processeur, l'appareil réalise le procédé selon la revendication 7.

12. Support de stockage lisible par ordinateur, comprenant des instructions de logiciel informatique, dans lequel, lorsque les instructions de logiciel informatique sont exécutées sur un processeur (41, 45), le procédé selon l'une quelconque des revendications 1 à 6 est réalisé, ou le procédé selon la revendication 7 est réalisé.

13. Produit de programme informatique comprenant des instructions, dans lequel, lorsque le produit de programme informatique s'exécute sur un ordinateur, le procédé selon l'une quelconque des revendications 1 à 6 est réalisé, ou le procédé selon la revendication 7 est réalisé.

14. Système de communication, comprenant l'appareil de communication selon la revendication 10 et l'appareil de communication selon la revendication 11.

FIG. 1

FIG. 2

FIG. 3

FIG. 4

Terminal | Network device

S501. The network device sends a
CSI-RS to the terminal by using a
downlink channel

S502. The terminal performs measurement estimation
to obtain a channel matrix of the downlink channel
based on the CSI-RS

S503. The terminal determines, by using a first neural
network and based on the channel matrix of the
downlink channel, CNI corresponding to the
downlink channel

S504. The terminal sends the CNI
corresponding to the downlink channel
to the network device

S505. The network device determines, by using a
second neural network and based on the CNI
corresponding to the downlink channel, an MCS
corresponding to the downlink channel

FIG. 5

Terminal

Network device

S501. The network device sends a CSI-RS to the terminal by using a downlink channel

S502. The terminal performs measurement estimation to obtain a channel matrix of the downlink channel based on the CSI-RS

S503. The terminal determines, by using a first neural network and based on the channel matrix of the downlink channel, CNI corresponding to the downlink channel

S504. The terminal sends the CNI corresponding to the downlink channel to the network device

S505. The network device determines, by using a second neural network and based on the CNI corresponding to the downlink channel, an MCS corresponding to the downlink channel

S601. The network device obtains, based on the MCS corresponding to the downlink channel, decision revenue corresponding to the MCS

S602. The network device sends the decision revenue to the terminal

S603. The terminal updates a parameter of the first neural network based on the decision revenue

FIG. 6

Terminal

Network device

S501. The network device sends a CSI-RS to the terminal by using a downlink channel

S502. The terminal performs measurement estimation to obtain a channel matrix of the downlink channel based on the CSI-RS

S503. The terminal determines, by using a first neural network and based on the channel matrix of the downlink channel, CNI corresponding to the downlink channel

S504. The terminal sends the CNI corresponding to the downlink channel to the network device

S505. The network device determines, by using a second neural network and based on the CNI corresponding to the downlink channel, an MCS corresponding to the downlink channel

S701. The network device obtains, based on the MCS corresponding to the downlink channel, decision revenue corresponding to the MCS

S702. The network device updates a parameter of the second neural network based on the decision revenue

FIG. 7

Terminal

Network device

S501. The network device sends a CSI-RS to the terminal by using a downlink channel

S502. The terminal performs measurement estimation to obtain a channel matrix of the downlink channel based on the CSI-RS

S503. The terminal determines, by using a first neural network and based on the channel matrix of the downlink channel, CNI corresponding to the downlink channel

S504. The terminal sends the CNI corresponding to the downlink channel to the network device

S505. The network device determines, by using a second neural network and based on the CNI corresponding to the downlink channel, an MCS corresponding to the downlink channel

S801. The network device obtains, based on the MCS corresponding to the downlink channel, decision revenue corresponding to the MCS

S802. The network device updates a parameter of the second neural network based on the decision revenue

S803. The network device obtains an error of a parameter of a first hidden layer of the second neural network before and after the parameter of the second neural network is updated

S804. The network device sends the error of the parameter of the first hidden layer of the second neural network to the terminal

S805. The terminal updates a parameter of the first neural network based on the error of the parameter of the first hidden layer of the second neural network

FIG. 8

FIG. 9a

Entity A · Entity C · Entity B

S1201a. The entity B sends a reference signal to the entity A

S1201b. The entity B sends a reference signal to the entity C

S1202a. The entity A performs measurement estimation to obtain a path parameter of a path B-A

S1202b. The entity C performs measurement estimation to obtain a path parameter of a path B-C

S1203. The entity A determines CNI of the path B-A by using a third neural network and based on the path parameter of the path B-A

S1204. The entity A sends the CNI of the path A-B to the entity B

S1205. The entity C sends a reference signal to the entity A

S1206. The entity A performs measurement estimation to obtain a path parameter of a path C-A

S1207. The entity A determines CNI of the path C-A by using a fourth neural network and based on the path parameter of the path C-A

S1208. The entity A sends the CNI of the path C-A to the entity C

TO FIG. 9b-2

TO FIG. 9b-2

TO FIG. 9b-2

FIG. 9b-1

CONT.
FROM
FIG. 9b-1

CONT.
FROM
FIG. 9b-1

CONT.
FROM
FIG. 9b-1

S1209. The entity C determines CNI of a path B-C-A by using a fifth neural network and based on the path parameter of the path B-C and the CNI corresponding to the path C-A

S1210. The entity C sends the CNI of the path B-C-A to the entity B

S1211. The entity B determines a transmission path by using a sixth neural network and based on the CNI corresponding to each path

S1212. Perform data transmission based on the transmission path

S1213. The entity B obtains corresponding first decision revenue based on a weight of a path combination

S1214a. The entity B indicates the first decision revenue to the entity A

S1214b. The entity B indicates the first decision revenue to the entity C

S1215. The entity C obtains corresponding second decision revenue based on the weight of the path combination

S1216. The entity C indicates the second decision revenue to the entity A

S1217a. The entity A updates the third neural network based on the decision revenue

S1217b. The entity C updates the fifth neural network based on the decision revenue

FIG. 9b-2

FIG. 10a

| Entity D | Entity E | Entity F |
|---|---|---|

S1301. The entity D sends a reference signal to the entity F

S1302. The entity F performs measurement estimation to obtain a path parameter of a path D-F

S1303. The entity F determines CNI of the path D-F by using a seventh neural network and based on the path parameter of the path D-F

S1304. The entity F sends the CNI of the path D-F to the entity D

S1305. The entity E sends a reference signal to the entity F

S1306. The entity F performs measurement estimation to obtain a path parameter of a path F-E

S1307. The entity F determines CNI of the path F-E by using an eighth neural network and based on the path parameter of the path E-F

S1308. The entity F sends the CNI of the path E-F to the entity E

S1309. The entity D determines CNI of a path D-E by using a ninth neural network and based on the CNI of the path D-F and a result of a transmission decision of a previous round, and channel information of F_D and compressed information of the transmission decision are included

S1310. The entity E determines CNI of a path E-D by using a tenth neural network and based on the CNI of the path F-E and a result of a transmission decision of a previous round

TO
FIG. 10b-2

TO
FIG. 10b-2

TO
FIG. 10b-2

FIG. 10b-1

CONT.
FROM
FIG. 10b-1

CONT.
FROM
FIG. 10b-1

CONT.
FROM
FIG. 10b-1

S1311. The entity D sends the CNI of the path D-E to the entity E

S1312. The entity F sends the CNI of the path E-D to the entity E

S1313. The entity D determines a transmission decision by using an eleventh neural network and based on the CNI of the path D-F and the CNI of the path E-D

S1314. The entity E determines a transmission decision by using a twelfth neural network and based on the CNI of the path E-F and the CNI of the path D-E

S1315. Perform data transmission based on the transmission decision

S1316. Perform data transmission based on the transmission decision

S1317. The entity D obtains corresponding third decision revenue based on the transmission decision result

S1318. The entity E obtains corresponding fourth decision revenue based on the transmission decision result

S1319. The entity D indicates the third decision revenue to the entity F

S1320. The entity E indicates the fourth decision revenue to the entity F

S1321. The entity D updates the ninth neural network based on the third decision revenue

S1322. The entity E updates the tenth neural network based on the third decision revenue

S1323. The entity F updates the seventh neural network and the eighth neural network based on the obtained decision revenue

FIG. 10b-2

| Entity D | Entity E | Entity F |
|---|---|---|

S1401. The entity F sends a reference signal to the entity D

S1402. The entity F sends a reference signal to the entity E

| S1403. The entity D performs measurement estimation to obtain a path parameter of a path F-D | S1404. The entity D performs measurement estimation to obtain channel quality of a path F-E |
|---|---|

| S1405. The entity D determines CNI corresponding to a path D-E by using a thirteenth neural network and based on the path parameter of the path F-D and a result of a transmission decision of a previous round | S1406. The entity E determines CNI corresponding to a path E-D by using a fourteenth neural network and based on the path parameter of the path F-E and a result of a transmission decision of a previous round |
|---|---|

S1407. The entity D sends the CNI of the path D-E to the entity E

S1408. The entity F sends the CNI of the path E-D to the entity E

| S1409. The entity D determines a transmission decision by using a fifteenth neural network and based on the path parameter of the path F-D and the CNI of the path E-D | S1410. The entity E determines a transmission decision by using a sixteenth neural network and based on the CNI of the path F-E and the CNI of the path D-E |
|---|---|

TO
FIG. 11B

TO
FIG. 11B

TO
FIG. 11B

FIG. 11A

CONT.
FROM
FIG. 11A

CONT.
FROM
FIG. 11A

CONT.
FROM
FIG. 11A

S1411. Perform data transmission based on the transmission decision

S1412. Perform data
transmission based on the
transmission decision

S1413. The entity D obtains
corresponding fifth decision
revenue based on an uplink
scheduling result

S1414. The entity E obtains
corresponding sixth decision
revenue based on an uplink
scheduling result

S1415. The entity D updates
the thirteenth neural network
based on the fifth decision
revenue

S1416. The entity E updates
the fourteenth neural
network based on the sixth
decision revenue

FIG. 11B

| Entity G | | Entity H |
|---|---|---|

S1501. The entity G sends a pilot and data to the entity H

S1502. The entity H detects the received pilot and data

S1503. The entity H determines CNI corresponding to a path G-H by using a seventeenth neural network and based on the detected pilot and/or data

S1504. The entity H sends the CNI corresponding to the path G-H to the entity G

S1505. The entity G determines a grant free parameter set by using an eighteenth neural network and based on the CNI corresponding to the path G-H

S1506. Perform grant free data transmission

S1507. Obtained decision revenue of grant free data transmission

S1508. The entity G sends a seventh decision revenue to the entity H

S1509. The entity G updates the eighteenth neural network based on the decision revenue

S1510. The entity H updates the seventeenth neural network based on the decision revenue

FIG. 12

Communications apparatus

| Receiving unit | ~ 901 | Measurement unit | ~ 902 |

| Determining unit | ~ 903 | Sending unit | ~ 904 |

FIG. 13

Communications apparatus

| Sending unit | ~ 1001 | Receiving unit | ~ 1002 |

| Determining unit | ~ 1003 |

FIG. 14

Communications apparatus

Transceiver unit ~ 1101

Processing unit ~ 1102

FIG. 15

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2018367192 A1